(19) Europäisches Patentamt
European Patent Office
Office européen des brevets

(11) EP 2 465 350 A1

(12) **EUROPEAN PATENT APPLICATION**

(43) Date of publication:
**20.06.2012 Bulletin 2012/25**

(21) Application number: **11193391.7**

(22) Date of filing: **14.12.2011**

(51) Int Cl.:
***A01N 43/56*** *(2006.01)* ***A01N 43/653*** *(2006.01)*
***A01N 47/24*** *(2006.01)* ***A01N 43/84*** *(2006.01)*
***A01N 37/34*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2010 EP 10195170**

(71) Applicant: **BASF SE**
**67056 Ludwigshafen (DE)**

(72) Inventors:
- **Dietz, Jochen**
**76227 Karlsruhe (DE)**
- **Haden, Egon**
**67346 Speyer (DE)**
- **Strathmann, Siegfried**
**67117 Limburgerhof (DE)**
- **Strobel, Dieter**
**67273 Herxheim am Berg (DE)**

(54) **Pesticidal mixtures**

(57) The present invention relates to mixtures comprising as component 1, a compound of formula I

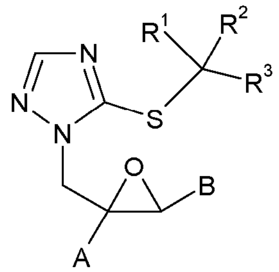

I

in which the variables have the meanings as detailed in the description and claims, and a component 2, selected from the group consisting of the compounds II of the groups A) to O).

EP 2 465 350 A1

## Description

The present invention relates to pesticidal, in particular fungicidal, mixtures and compositions, comprising,

1) a component 1, selected from triazolylmethyloxiranes of formula I

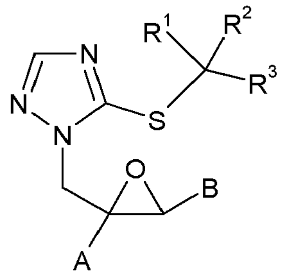

I

in which the variables have the following meanings:

A, B independently of one another phenyl, which is unsubstituted or contains one, two, three or four independently selected substituents L, where L is as defined below:

L is halogen, cyano, nitro, cyanato (OCN), $C_1$-$C_4$-alkyl, $C_1$-$C_4$-haloalkyl, phenyl-$C_1$-$C_4$-alkyloxy, $C_2$-$C_4$-alkenyl, $C_2$-$C_4$-haloalkenyl, $C_2$-$C_4$-alkynyl, $C_2$-$C_4$-haloalkynyl, $C_1$-$C_4$-alkoxy, $C_1$-$C_4$-haloalkoxy, $C_1$-$C_4$-alkylcarbonyloxy, $C_1$-$C_4$-alkylsulfonyloxy, $C_2$-$C_4$-alkenyloxy, $C_2$-$C_4$-haloalkenyloxy, $C_3$-$C_6$-cycloalkyl, $C_3$-$C_6$-halocycloalkyl, $C_3$-$C_6$-cycloalkenyl, $C_3$-$C_6$-halocycloalkenyl, $S(=O)_nA^1$, $C(=O)_A2$, C(=S) $A^2$, $NA^3A^4$, phenyl or phenyloxy, where n, $A^1$, $A^2$, $A^3$, $A^4$ are as defined below:

n is 0, 1 or 2;

$A^1$ is hydrogen, hydroxyl, $C_1$-$C_4$-alkyl, $C_1$-$C_4$-haloalkyl, amino, $C_1$-$C_4$-alkylamino or di-$C_1$-$C_4$-alkylamino,

$A^2$ is one of the groups mentioned for $A^1$ or $C_2$-$C_4$-alkenyl, $C_2$-$C_4$-haloalkenyl, $C_1$-$C_4$-alkoxy, $C_1$-$C_4$-haloalkoxy, $C_3$-$C_6$-cycloalkyl or $C_3$-$C_6$-halocycloalkyl;

$A^3$, $A^4$ independently of one another are hydrogen, $C_1$-$C_4$-alkyl, $C_1$-$C_4$-haloalkyl, $C_2$-$C_4$-alkenyl, $C_2$-$C_4$-haloalkenyl, $C_3$-$C_6$-cycloalkyl or $C_3$-$C_6$-halocycloalkyl;

where the aliphatic and/or alicyclic and/or aromatic groups of the radical definitions of L for their part may carry one, two, three or four identical or different groups $R^L$:

$R^L$ is halogen, cyano, nitro, $C_1$-$C_4$-alkyl, $C_1$-$C_4$-haloalkyl, $C_1$-$C_4$-alkoxy, $C_1$-$C_4$-haloalkoxy, $C_3$-$C_6$-cycloalkyl, $C_3$-$C_6$-halocycloalkyl, $C_1$-$C_4$-alkylcarbonyl, $C_1$-$C_4$-alkylcarbonyloxy, $C_1$-$C_4$-alkoxycarbonyl, amino, $C_1$-$C_4$-alkylamino, di-$C_1$-$C_4$-alkylamino;

$R^1$, $R^2$ independently of one another are hydrogen or $C_1$-$C_4$-alkyl;

$R^3$ is phenyl which is unsubstituted or contains one, two, three, four or five independently selected substituents $L^{R3}$; or vinyl which is unsubstituted or contains one, two or three independently selected substituents $L^{R3}$; where $L^{R3}$ is as defined below;

$L^{R3}$ is halogen, cyano, nitro, cyanato (OCN), $C_1$-$C_4$-alkyl, $C_1$-$C_4$-haloalkyl, $C_2$-$C_4$-alkenyl, $C_2$-$C_4$-haloalkenyl, $C_1$-$C_4$-alkoxy, $C_1$-$C_4$-haloalkoxy, $C_3$-$C_6$-cycloalkyl, $C_3$-$C_6$-halocycloalkyl;

or the group $C(R^1R^2R^3)$ has the meaning of $R^4$, wherein

$R^4$ is $C_{3-5}$-alkyl;

wherein the compound I may be fully or partially present in its tautomeric form; and/or agriculturally acceptable salts thereof, and

2) a component 2, selected from the group consisting of the compounds II of the groups A) to O) below:

A) Respiration inhibitors

- Inhibitors of complex III at $Q_o$ site (e.g. strobilurins): azoxystrobin, coumethoxystrobin, coumoxystrobin,

dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethylphenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;

- inhibitors of complex III at $Q_i$ site: cyazofamid, amisulbrom;
- inhibitors of complex II (e. g. carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide and N-(2-(1,3,3-trimethyl-butyl)-phenyl)-1,3-dimethyl-5-fluoro-1H-pyrazole-4-carboxamide;-other respiration inhibitors (e.g. complex I, uncouplers): diflumetorim;
  nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;

B) Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizol; pyrimidines, pyridines and piperazines: fenarimol, nuarimol, pyrifenox, triforine;
- Delta14-reductase inhibitors: aldimorph, dodemorph, dodemorphacetate, fenpropimorph, tridemorph, fenpropidin, piperalin, spiroxamine;
- Inhibitors of 3-keto reductase: fenhexamid;

C) Nucleic acid synthesis inhibitors

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate;

D) Inhibitors of cell division and cytoskeleton

- tubulin inhibitors, such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone, pyriofenone;

E) Inhibitors of amino acid and protein synthesis

- methionine synthesis inhibitors (anilino-pyrimidines): cyprodinil, mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;

- compounds affecting cell membrane permeability and fatty acides: propamocarb, propamocarb-hydrochlorid

H) Inhibitors with Multi Site Action

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds (e.g. phthalimides, sulfamides, chloronitriles): anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon;

I) Cell wall synthesis inhibitors

- inhibitors of glucan synthesis: validamycin, polyoxin B; melanin synthesis inhibitors: pyroquilon, tricyclazole, carpropamid, dicyclomet, fenoxanil;

J) Plant defence inducers

- acibenzolar-S-methyl, probenazole, isotianil, tiadinil, prohexadione-calcium; phosphonates: fosetyl, fosetyl-aluminum, phosphorous acid and its salts;

K) Unknown mode of action

- bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxin-copper, proquinazid, tebufloquin, tecloftalam, triazoxide, 2-butoxy-6-iodo-3-propylchromen-4-one, N-(cyclopropylmethoxyimino-(6-difluoromethoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanylpropoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydronaphthalen-1-yl-amide, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone, methoxyacetic acid 6-tert-butyl-8-fluoro-2,3-dimethyl-quinolin-4-yl ester, *N*-Methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1H-benzoimidazole, 2-(4-chloro-phenyl)-N-[4-(3,4-dimethoxy-phenyl)-isoxazol-5-yl]-2-prop2-ynyloxy-acetamide;

L) Antifungal biocontrol agents, plant bioactivators: *Ampelomyces quisqualis* (e.g. AQ 10® from Intrachem Bio GmbH & Co. KG, Germany), *Aspergillus flavus* (e.g. AFLAGUARD® from Syngenta, CH), *Aureobasidium pullulans* (e.g. BOTECTOR® from bio-ferm GmbH, Germany), *Bacillus pumilus* (e.g. NRRL Accession No. B-30087 in SONATA® and BALLAD® Plus from AgraQuest Inc., USA), *Bacillus subtilis* (e.g. isolate NRRL-Nr. B-21661 in RHAPSODY®, SERENADE® MAX and SERENADE® ASO from AgraQuest Inc., USA), *Bacillus subtilis* var. *amyloliquefaciens* FZB24 (e.g. TAEGRO® from Novozyme Biologicals, Inc., USA), *Candida oleophila* I-82 (e.g. ASPIRE® from Ecogen Inc., USA), *Candida saitoana* (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), *Clonostachys rosea f. catenulata,* also named *Gliocladium catenulatum* (e.g. isolate J1446: PRESTOP® from Verdera, Finland), *Coniothyrium minitans* (e.g. CONTANS® from Prophyta, Germany), *Cryphonectria parasitica* (e.g. *Endothia parasitica* from CNICM, France), *Cryptococcus albidus* (e.g. YIELD PLUS® from Anchor Bio-Technologies, South Africa), *Fusarium oxysporum* (e.g. BIOFOX® from S.I.A.P.A., Italy, FUSACLEAN® from Natural Plant Protection, France), *Metschnikowia fructicola* (e.g. SHEMER® from Agrogreen, Israel), *Microdochium dimerum* (e.g. ANTIBOT® from Agrauxine, France), *Phlebiopsis gigantea* (e.g. ROTSOP® from Verdera, Finland), *Pseudozyma flocculosa* (e.g. SPORODEX® from Plant Products Co. Ltd., Canada), *Pythium oligandrum* DV74 (e.g. POLYVERSUM® from Remeslo SSRO, Biopreparaty, Czech Rep.), *Reynoutria sachlinensis* (e.g. REGALIA® from Marrone BioInnovations, USA), *Talaromyces flavus* V117b (e.g. PROTUS® from Prophyta, Germany), *Trichoderma asperellum* SKT-1 (e.g. ECO-HOPE® from Kumiai Chemical Industry Co., Ltd., Japan), *T. atroviride* LC52 (e.g. SENTINEL® from Agrimm Technologies Ltd, NZ), *T. harzianum T-22* (e.g. PLANTSHIELD® der Firma BioWorks Inc., USA), *T. harzianum* TH 35 (e.g. ROOT PRO® from Mycontrol Ltd., Israel), *T. harzianum* T-39 (e.g. TRICHODEX® and TRICHODERMA 2000® from Mycontrol Ltd., Israel and Makhteshim Ltd., Israel), *T. harzianum* and *T. viride* (e.g. TRICHOPEL from Agrimm Technologies Ltd, NZ), *T. harzianum* ICC012 and *T. viride* ICC080 (e.g. REMEDIER® WP from Isagro Ricerca, Italy), *T. polysporum* and *T. harzianum* (e.g. BINAB® from BINAB Bio-Innovation AB, Sweden), *T. stromaticum* (e.g. TRICOVAB® from C.E.P.L.A.C., Brazil), *T. virens* GL-21 (e.g. SOILGARD® from Certis LLC, USA), *T. viride* (e.g. TRIECO® from Ecosense Labs. (India) Pvt. Ltd., Indien, BIO-CURE® F from T. Stanes & Co. Ltd., Indien), *T. viride* TV1 (e.g. T. viride TV1 from Agribiotec srl, Italy), *Ulocladium oudemansii* HRU3 (e.g. BOTRY-ZEN® from Botry-Zen Ltd, NZ);

M) Growth regulators

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N) Herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumicloracpentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

O) Insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zetacypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II add III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, sulfur, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon;

in a weight ratio of from 1:100 to 100:1.

The invention furthermore relates to the use of the mixtures for controlling phytopathogenic fungi and preparations or compositions comprising them. The invention furthermore also relates to seed comprising the mixtures. The invention furthermore also relates to methods for controlling phytopathogenic fungi wherein the fungi or the materials, plants, the soil or seed to be protected from fungal attack are treated with an effective amount of a mixture according to the invention. The invention furthermore also relates to processes for preparing the mixtures according to the invention. Herein, also preferred uses of the mixtures according to the present invention are further described. In each case, according to the present invention, the use of the mixture for controlling a particular phytopathogenic fungus is also meant to encompass the respective method for controlling the particular phytopathogenic fungi, wherein the fungi or the

materials, plants, the soil or seed to be protected from fungal attack are treated with an effective amount of a fungicidal mixture as defined in that context.

The inventive mixtures comprise at least one compound of the formula I (component 1) and a further active compound I I and may further comprise furtehr compounds II. The mixtures according to the invention are according to one embodiment, preferably mixtures comprising two components. According to another embodiment, the inventive mixtures are preferably mixtures comprising three components. According to still another embodiment, the inventive mixtures are preferably mixtures comprising four components.

It has been found according to the invention, that simultaneous, that is joint or separate, application of compound I (component 1) and the further components as specified herein, applied in succession, allows better control of harmful fungi than with the individual compounds (synergistic mixtures). As mentioned above, these mixtures are of interest with a view to reducing the application rates, since many show, at a reduced total amount of active compounds applied, an improved activity against harmful fungi, in particular for certain indications. Simultaneous, that is joint or separate, application of compound I (component 1) and component 2, or compound I (component 1), component 2 and component 3 (and, if present, further components) can increase the fungicidal activity in a superadditive manner.

In the sense of the present invention, joint application means that at least one of compound I and component 2 or at least one of compound I, component 2 and component 3 (and, if present, further components) are present simultaneously at the site of action (i.e. the plant-damaging fungi to be controlled and their habitat, such as infected plants, plant propagation materials, in particular seed, soils, materials or spaces and also the plants, plant propagation materials, in particular seed, soils, materials or spaces to be protected against fungal attack) in an amount sufficient for an effective control of fungal growth. This can be achieved by applying the components jointly in a joint active compound preparation or in at least two separate active compound preparations simultaneously, or by applying the active compounds successively to the site of action, the time interval between the individual active compound applications being chosen such that the active compound applied first is, at the time of application of the further active compound(s), present at the site of action in a sufficient amount. The order in which the active compounds are applied is of minor importance.

Azolylmethyloxiranes of component 1, their preparation and their use in crop protection are known from EP 09178224.3 and PCT/EP2010/068848, EP 09178291.2 and PCT/EP2010/068853, and EP 09178288.8 and PCT/EP2010/068790, which also mention mixtures of the triazolylmethyloxiranes of component 1 with other active compounds.

The active compounds II mentioned as component 2 and 3 and 4 or as "further active compound" above, their preparation and their action against harmful fungi are known (cf.: http://www.alanwood.net/pesticides/); generally, they are available commercially. The compounds with IUPAC nomenclature, their preparation, and their fungicidal activity are likewise known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 05/120234; WO 05/123689; WO 05/123690; WO 05/63721; WO 05/87772; WO 05/87773; WO 06/15866; WO 06/87325; WO 06/87343; WO 07/82098; WO 07/90624). The active compounds of component 2 and component 3, their preparation and their action against harmful fungi are known (cf.: http://www.alanwood.net/pesticides/). and mainly commercially available. - carboxamide) and its preparation and use is described in WO 2006/087343.

With a view to reducing the application rates and broadening the activity spectrum of the known compounds, it was an object of the present invention to provide mixtures which, at a reduced total amount of active compounds applied, show improved activity against important harmful fungi, in particular for certain indications. It was a further object to provide for mixtures that are useful for the controll of specific pathogens in specific important crops that are often susceptible to the attack of pathogens. Accordingly we have found the mixtures defined herein. Moreover, it has been found that simultaneous, that is joint or separate, application of compound I and one or more compounds II, or compound I and compound(s) II applied in succession, allows better control of harmful fungi than with the individual compounds (synergistic mixtures). As mentioned above, these mixtures are of interest with a view to reducing the application rates, since many show, at a reduced total amount of active compounds applied, an improved activity against harmful fungi, in particular for certain indications. Simultaneous, that is joint or separate, application of compound I and one or more compounds II can increase the fungicidal activity in a superadditive manner.

In the sense of the present application, joint application means that at least one compound I and the at least one further active compound II are present simultaneously at the site of action (i.e. the plant-damaging fungi to be controlled and their habitat, such as infected plants, plant propagation materials, in particular seed, soils, materials or spaces and also the plants, plant propagation materials, in particular seed, soils, materials or spaces to be protected against fungal attack) in an amount sufficient for an effective control of fungal growth. This can be achieved by applying the compounds I and at least one further active compound II jointly in a joint active compound preparation or in at least

two separate active compound preparations simultaneously, or by applying the active compounds successively to the site of action, the time interval between the individual active compound applications being chosen such that the active compound applied first is, at the time of application of the further active compound(s), present at the site of action in a sufficient amount. The order in which the active compounds are applied is of minor importance.

In a preferred embodiment, the mixtures are binary mixtures, i.e. compositions according to the invention comprising one compound I and one further active compound II (component 2), for example one active compound from groups A) to O). Here, the weight ratio of compound I to further active compound II depends on the properties of the active compounds in question; usually, it is in the range of from 1:100 to 100:1, frequently in the range of from 1:50 to 50:1, preferably in the range of from 1:20 to 20:1, particularly preferably in the range of from 1:10 to 10:1, in particular in the range of from 1:3 to 3:1. It may also be preferable for the weight ratio to be in the range of from 1:2 to 2:1.

In a further preferred embodiment, the mixtures are ternary mixtures, i.e. compositions according to the invention comprising one compound I and one 1st further active compound (component 2) and one 2nd further active compound (component 3), for example two different active compounds from groups A) to O). Here, the weight ratio of compound I to the 1st further active compound (component 2) depends on the properties of the active compounds in question; preferably, it is in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of compound I to the 2nd further active compound (component 3) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 1st further active compound (component 2) to 2nd further active compound (component 3) is preferably in the range of from 1:100 to 100:1, frequently in the range of from 1:50 to 50:1, preferably in the range of from 1:20 to 20:1, and in particular in the range of from 1:10 to 10:1. It may be preferable for the weight to be in the range of from 1:3 to 3:1, in particular from 1:2 to 2:1.

In a further preferred embodiment, the mixtures are quarternary mixtures, i.e. compositions according to the invention comprising one compound I and one 1st further active compound II (component 2), one 2nd further active compound II (component 3) and one 3rd further active compounds (component 4), where these three active compounds II are different active compounds independently selected from groups A) to O). Here, the weight ratio of compound I to the 1st further active compound (component 2) depends on the properties of the active compounds in question; preferably, it is in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3: 1, in particular from 1:2 to 2:1. The weight ratio of compound I to the 2nd further active compound (component 3) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1: 3 to 3:1, in particular from 1:2 to 2:1. The weight ratio of compound I to the 3rd further active compound (component 4) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 1st further active compound (component 2) to 2nd further active compound (component 3) is preferably in the range of from 1:100 to 100:1, preferably in the range of from 1:50 to 50:1 and in particular in the range of from 2:10 to 20:1. It may be preferable for the weight ratio to be in the region of from 1:10 to 10:1, preferably from 1:3 to 3:1, in particular from 1:2 to 2:1. The weight ratio of 1st further active compound (component 2) to 3rd further active compound (component 4) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 2nd further active compound (component 3) to 3rd further active compound (component 4) is preferably in the range of from 1:100 to 100:1, preferably in the range of from 1:50 to 50:1,and in particular in the range of from 1:20 to 20:1. It may be preferable for the weight ratio to be in the region of from 1:10 to 10:1, preferably from 1:3 to 3:1, in particular from 1:2 to 2:1.

The components of the composition according to the invention can be packaged and used individually or as a ready-mix or as a kit of parts.

In one embodiment of the invention, the kits may comprise one or more, and even all, components which may be used for preparing an agrochemical composition according to the invention. For example, these kits may comprise one or more fungicide components and/or an adjuvant component and/or an insecticide component and/or a growth regulator component and/or a herbicide. One or more components may be present combined or preformulated with one another. In the embodiments where more than two components are provided in a kit, the components can be present combined with one another and packaged in a single container, such as a vessel, a bottle, a tin, a bag, a sack or a canister. In other embodiments, two or more components of a kit may be packaged separately, i.e. not preformulated or mixed. Kits may comprise one or more separate containers, such as vessels, bottles, tins, bags, sacks or canisters, each container comprising a separate component of the agrochemical composition. The components of the composition

according to the invention can be packaged and used individually or as a ready-mix or as a kit of parts. In both forms, a component may be used separately or together with the other components or as a part of a kit of parts according to the invention for preparing the mixture according to the invention.

The user uses the composition according to the invention usually for use in a predosage device, a knapsack sprayer, a spray tank or a spray plane. Here, the agrochemical composition is diluted with water and/or buffer to the desired application concentration, with further auxiliaries being added, if appropriate, thus giving the ready-to-use spray liquor or the agrochemical composition according to the invention. Usually, from 50 to 500 liters of the ready-to-use spray liquor are applied per hectare of agricultural utilized area, preferably from 100 to 400 liters.

According to one embodiment, the user may himself mix individual components, such as, for example, parts of a kit or a two- or three-component mixture of the composition according to the invention in a spray tank and, if appropriate, add further auxiliaries (tank mix).

In a further embodiment, the user may mix both individual components of the composition according to the invention and partially pre-mixed components, for example components comprising compounds I and/or active compounds from groups A) to O), in a spray tank and, if appropriate, add further auxiliaries (tank mix).

In a further embodiment, the user may use both individual components of the composition according to the invention and partially pre-mixed components, for example components comprising compounds I and/or active compounds from groups A) to O), jointly (for example as a tank mix) or in succession.

The compounds of the formula I can be present in two tautomeric forms, i.e. the "thiol" form of the formula Ia or in the "thiono" form of the formula Ib:

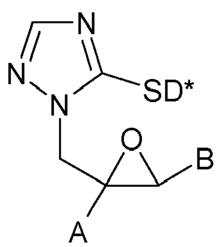

Ia

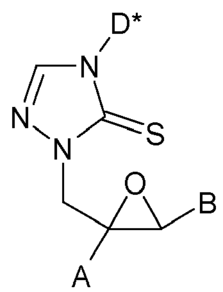

Ib

in which D* is #-C($R^1R^2R^3$) as defined herein, wherein # is the point of attachment to the sulfur atom in formula Ia or the azolyl ring in formula Ib. Here, for the sake of simplicity, in each case only one of the two forms, in general the "thiol" form is shown.

Owing to the basic character of their nitrogen atoms, the compounds I are capable of forming salts or adducts with inorganic or organic acids or with metal ions. This also applies to most of the precursors described herein of compounds I, the salts and adducts of which are also provided by the present invention.

Examples of inorganic acids are hydrohalic acids, such as hydrogen fluoride, hydrogen chloride, hydrogen bromide and hydrogen iodide, carbonic acid, sulfuric acid, phosphoric acid and nitric acid.

Suitable organic acids are, for example, formic acid and alkanoic acids, such as acetic acid, trifluoroacetic acid, trichloroacetic acid and propionic acid, and also glycolic acid, thiocyanic acid, lactic acid, succinic acid, citric acid, benzoic acid and other arylcarboxylic acids, cinnamic acid, oxalic acid, alkylsulfonic acids (sulfonic acids having straight-chain or branched alkyl radicals of 1 to 20 carbon atoms), arylsulfonic acids or aryldisulfonic acids (aromatic radicals, such as phenyl and naphthyl, which carry one or two sulfonic acid groups), alkylphosphonic acids (phosphonic acids having straight-chain or branched alkyl radicals with 1 to 20 carbon atoms), arylphosphonic acids or aryldiphosphonic acids (aromatic radicals, such as phenyl and naphthyl, which carry one or two phosphoric acid radicals), where the alkyl or aryl radicals may carry further substituents, for example p-toluenesulfonic acid, salicylic acid, p-aminosalicylic acid, 2-phenoxybenzoic acid, 2-acetoxybenzoic acid etc.

Suitable metal ions are in particular the ions of the elements of the second main group, in particular calcium and magnesium, of the third and fourth main group, in particular aluminum, tin and lead, and also of the elements of transition groups one to eight, in particular chromium, manganese, iron, cobalt, nickel, copper, zinc, and others. Particular preference is given to the metal ions of the elements of transition groups of the fourth period. The metals can be present in the various valencies that they can assume.

The compounds I comprise chiral centers and are generally obtained in the form of racemates or as diastereomer mixtures of erythro and threo forms. The erythro and threo diastereomers of the compounds according to the invention can be separated and isolated in pure form, for example, on the basis of their different solubilities or by column chromatography. Using known methods, such uniform pairs of diastereomers can be used to obtain uniform enantiomers. Suitable for use as antimicrobial agents are both the uniform diastereomers or enantiomers and mixtures thereof obtained in the synthesis. This applies correspondingly to the fungicidal compositions.

Accordingly, the invention provides both mixtures in which compound I is the pure enantiomers or diastereomers and mixtures thereof. This applies to the mixtures according to the invention of the compounds of the formula I. The scope of the present invention includes in particular the (R) and (S) isomer mixtures and the racemates of the compounds I which have centers of chirality. Suitable compounds I also comprise all possible stereoisomers (cis/trans isomers) and mixtures thereof.

The compounds of the formula I according to the invention can be prepared by various routes analogously to prior art processes known per se (see, for example, the prior art cited at the outset and Pflanzenschutz-Nachrichten Bayer 57/2004, 2, pages 145-162), or as described in from EP 09178224.3 and PCT/EP2010/068848, EP 09178291.2 and PCT/EP2010/068853, and EP 09178288.8 and PCT/EP2010/068790.

In the compounds I (component 1 of the mixtures according to the invention), particular preference is given to the following meanings of the substituents, in each case on their own or in combination.

According to the invention, A is phenyl which is unsubstituted or contains one, two, three or four independently selected substituents L, where L is as defined or as defined as being preferred herein. According to a specific embodiment, A is unsubstituted phenyl.

According to a further embodiment, A is phenyl which contains one, two, three or four, in particular one or two, independently selected substituents L, where L is as defined or as defined as being preferred herein. According to one aspect, one of the substituents is located in the 4-position of the phenyl ring. According to a further specific aspect, L is in each case independently selected from the group consisting of F, Cl, Br, nitro, phenyl, phenoxy, methyl, ethyl, isopropyl, tert-butyl, methoxy, ethoxy, trifluoromethyl, trichloromethyl, difluoromethyl, difluorochloromethyl, trifluoromethoxy, difluoromethoxy and trifluorochloromethyl. According to a further specific aspect, L is in each case independently selected from the group consisting of F, Cl and Br, in particular F and Cl.

According to a further embodiment, A is monosubstituted phenyl which contains one substituent L, where L is as defined or as defined as being preferred herein. According to one aspect of this embodiment, the substituent is located in the para-position. According to a further specific embodiment, A is 3-fluorophenyl. According to a further specific embodiment, A is phenyl which contains two or three independently selected substituents L.

According to yet a further preferred embodiment, A is disubstituted phenyl which contains exactly two independently selected substituents L, where L is as defined or as defined as being preferred herein. In particular, L is in each case independently preferably selected from the group consisting of F, Cl, Br, $C_1$-$C_4$-alkyl, $C_1$-$C_4$-haloalkyl and $C_1$-$C_4$-alkoxy, in particular selected from the group consisting of F, Cl, $C_1$-$C_4$-alkyl, $C_1$-$C_4$-haloalkyl and $C_1$-$C_4$-alkoxy, especially selected from the group consisting of F, Cl, methyl, trifluoromethyl and methoxy. According to a further aspect, the second substituent L is selected from the group consisting of methyl, methoxy and chlorine. According to a further aspect, one of the substituents is located in the 4-position of the phenyl ring. According to a specific aspect, A is phenyl which contains one F and exactly one further substituent L, as defined or as defined as being preferred herein.

According to a further specific embodiment, the phenyl ring A is disubstituted in the 2,4-position. According to yet a further specific embodiment, the phenyl ring A is disubstituted in the 2,3-position. According to yet a further specific embodiment, the phenyl ring A is disubstituted in the 2,5-position. According to yet a further specific embodiment, the phenyl ring A is disubstituted in the 2,6-position. According to yet a further specific embodiment, the phenyl ring A is disubstituted in the 3,4-position. According to yet a further specific embodiment, the phenyl ring A is disubstituted in the 3,5-position.

According to a further preferred embodiment of the invention, A is phenyl which is substituted by exactly two F. According to one aspect, A is 2,3-difluoro-substituted. According to a further aspect, A is 2,4-difluoro-substituted. According to yet a further aspect, A is 2,5-difluoro-substituted. According to yet a further aspect, A is 2,6-difluoro-substituted. According to yet a further aspect, A is 3,4-difluoro-substituted. According to yet a further aspect, A is 3,5-difluoro-substituted.

According to yet a further preferred embodiment, A is trisubstituted phenyl which contains three independently selected substituents L, where L is as defined or as defined as being preferred herein. According to a specific aspect of this embodiment, A is phenyl which is substituted by exactly three F. According to one aspect, A is 2,3,4-trisubstituted, in particular 2,3,4-trifluoro-substituted. According to a further aspect, A is 2,3,5-trisubstituted, in particular 2,3,5-trifluoro-substituted. According to yet a further aspect, A is 2,3,6-trisubstituted, in particular 2,3,6-trifluoro-substituted. According to yet a further aspect, A is 2,4,6-trisubstituted, in particular 2,4,6-trifluoro-substituted. According to yet a further aspect, A is 3,4,5-trisubstituted, in particular 3,4,5-trifluoro-substituted. According to yet a further aspect, A is 2,4,5-trisubstituted, in particular 2,4,5-trifluoro-substituted.

According to the invention, B is phenyl which is unsubstituted or contains one, two, three or four identical or different substituents L, where L is as defined or as defined as being preferred herein.

According to one embodiment of the invention, B is unsubstituted phenyl.

According to a further embodiment, B is phenyl which contains one, two, three or four independently selected substituents L, where L is as defined or as defined as being preferred herein.

According to a further embodiment, B is phenyl which contains one, two or three, preferably one or two, independently selected substituents L, as defined or as defined as being preferred herein. According to a specific aspect, L is in each case independently selected from the group consisting of F, Cl, Br, methyl, methoxy and trifluoromethyl. According to another specific embodiment, B is phenyl which is substituted by one, two or three, preferably one or two, halogen atoms.

According to a further embodiment, B is phenyl which contains one, two, three or four substituents L, where L is independently selected from the group consisting of F, Cl, Br, methyl, ethyl, isopropyl, tert-butyl, methoxy, ethoxy, trifluoromethyl, trichloromethyl, difluoromethyl, difluorochloromethyl, trifluoromethoxy, difluoromethoxy and difluorochloromethyl. According to a specific aspect, L is in each case independently selected from the group consisting of F, Cl and Br.

According to yet a further embodiment, B is phenyl which is unsubstituted or substituted by one, two or three substituents independently selected from the group consisting of halogen, $NO_2$, amino, $C_1$-$C_4$-alkyl, $C_1$-$C_4$-alkoxy, $C_1$-$C_4$-haloalkyl, $C_1$-$C_4$-haloalkoxy, $C_1$-$C_4$-alkylamino, $C_1$-$C_4$-dialkylamino, thio and $C_1$-$C_4$-alkylthio.

According to a further embodiment, the phenyl ring in B is monosubstituted by exactly one substituent L, where L, according to a specific aspect of this embodiment, is located in the ortho position to the point of attachment of the phenyl ring to the oxirane ring. L is as defined or as defined as being preferred herein. According to a further specific embodiment, B is phenyl monosubstituted by Cl, in particular 2-chlorophenyl.

According to a further embodiment, B is phenyl which contains two or three, in particular two, independently selected substituents L, where L is as defined or as defined as being preferred herein.

According to yet a further embodiment of the invention, B is a phenyl ring which contains one substituent L in the ortho position and furthermore has exactly one further independently selected substituent L. According to one aspect, the phenyl ring is 2,3-disubstituted. According to a further aspect, the phenyl group is 2,4-disubstituted. According to yet a further aspect, the phenyl ring is 2,5-disubstituted. According to yet a further aspect, the phenyl ring is 2,6-disubstituted.

According to yet a further embodiment of the invention, B is a phenyl ring which contains one substituent L in the ortho position and furthermore contains exactly two further independently selected substituents L. According to one aspect, the phenyl ring is 2,3,5-trisubstituted. According to a further aspect, the phenyl ring is 2,3,4-trisubstituted. According to yet a further aspect, the phenyl ring is 2,4,5-trisubstituted.

Unless indicated otherwise, L has independently the following preferred meanings:

According to one embodiment, L is independently selected from the group consisting of halogen, cyano, nitro, cyanato (OCN), $C_1$-$C_4$-alkyl, $C_1$-$C_4$-haloalkyl, $C_1$-$C_4$-alkoxy, $C_1$-$C_4$-haloalkoxy, $C_3$-$C_6$-cycloalkyl, $C_3$-$C_6$-halocycloalkyl, S-$A^1$, C(=O)$A^2$, C(=S)$A^2$, N$A^3A^4$; where $A^1$, $A^2$, $A^3$, $A^4$ are as defined below:

$A^1$ is hydrogen, hydroxyl, $C_1$-$C_4$-alkyl, $C_1$-$C_4$-haloalkyl;

$A^2$ is one of the groups mentioned for $A^1$ or $C_1$-$C_4$-alkoxy, $C_1$-$C_4$-haloalkoxy, $C_3$-$C_6$-cycloalkyl or $C_3$-$C_6$-halocycloalkyl;

$A^3$, $A^4$ independently of one another are hydrogen, $C_1$-$C_4$-alkyl, $C_1$-$C_4$-haloalkyl;

where the aliphatic and/or alicyclic groups of the radical definitions of L for their part may carry one, two, three or four identical or different groups $R^L$:
$R^L$ is halogen, cyano, nitro, $C_1$-$C_4$-alkyl, $C_1$-$C_4$-haloalkyl, $C_1$-$C_4$-alkoxy, $C_1$-$C_4$-haloalkoxy, $C_3$-$C_6$-cycloalkyl, $C_3$-$C_6$-halocycloalkyl, amino, $C_1$-$C_4$-alkylamino, di-$C_1$-$C_4$-alkylamino.

Furthermore preferably, L is independently selected from the group consisting of halogen, $NO_2$, amino, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylamino, $C_1$-$C_4$-dialkylamino, thio and $C_1$-$C_4$-alkylthio.

Furthermore preferably, L is independently selected from the group consisting of halogen, $C_1$-$C_4$-alkyl, $C_1$-$C_4$-haloalkyl, $C_1$-$C_4$-alkoxy, $C_1$-$C_4$-haloalkoxy and $C_1$-$C_4$-haloalkylthio, in particular halogen, $C_1$-$C_4$-alkyl and $C_1$-$C_4$-haloalkyl.

According to a further preferred embodiment, L is independently selected from the group consisting of F, Cl, Br, $CH_3$, $C_2H_5$, i-$C_3H_7$, t-$C_4H_9$, $OCH_3$, $OC_2H_5$, $CF_3$, $CCl_3$, $CHF_2$, $CClF_2$, $OCF_3$, $OCHF_2$ and $SCF_3$, in particular selected from the group consisting of F, Cl, $CH_3$, $C_2H_5$, $OCH_3$, $OC_2H_5$, $CF_3$, $CHF_2$, $OCF_3$, $OCHF_2$ and $SCF_3$. According to one aspect, L is independently selected from the group consisting of F, Cl, $CH_3$, $OCH_3$, $CF_3$, $OCF_3$ and $OCHF_2$. It may be preferred for L to be independently F or Cl.

In specific embodiments preferred according to the invention, in the compounds I A is phenyl, 4-chlorophenyl, 2,4-chlorophenyl, 2-chlorophenyl, 2-fluorophenyl, 4-fluorophenyl, 4-methylphenyl, 2,4-difluorophenyl, 3-bromo-4-fluorophenyl, 4-bromophenyl, 3,4-dichlorophenyl, 4-tert-butylphenyl, 3-chlorophenyl, 3,5-dichlorophenyl or 4-trifluoromethoxyphenyl and B is 2-chlorophenyl. According to a specific embodiment, A is 4-fluorophenyl and B is 2-chlorophenyl. According to a further specific embodiment, A is 2,4-difluorophenyl and B is 2-chlorophenyl. According to a further preferred embodiment, A is 4-fluorophenyl and B is in each case 2-difluoromethoxyphenyl.

According to further specific embodiments preferred according to the invention, in the compounds I A is phenyl, 4-chlorophenyl, 2,4-chlorophenyl, 2-chlorophenyl, 2-fluorophenyl, 4-methylphenyl, 4-fluorophenyl, 3-bromo-4-fluorophenyl, 4-bromophenyl, 3,4-dichlorophenyl, 4-tert-butylphenyl, 3-chlorophenyl, 3,5-dichlorophenyl or 4-trifluoromethoxyphenyl and B is in each case 2-fluorophenyl.

According to yet further specific embodiments preferred according to the invention, in the compounds I A is phenyl, 4-chlorophenyl, 2,4-chlorophenyl, 2-chlorophenyl, 2-fluorophenyl, 4-methylphenyl, 4-fluorophenyl, 3-bromo-4-fluorophenyl, 4-bromophenyl, 3,4-dichlorophenyl, 4-tert-butylphenyl, 3-chlorophenyl, 3,5-dichlorophenyl or 4-trifluoromethoxyphenyl and B is in each case 2-bromophenyl.

According to one embodiment, in the compounds I, $R^1$, $R^2$ independently of one another are hydrogen or $C_1$-$C_4$-alkyl; $R^3$ is phenyl which is unsubstituted or contains one, two, three, four or five independently selected substituents $L^{R3}$; or vinyl which is unsubstituted or contains one, two or three independently selected substituents $L^{R3}$; where $L^{R3}$ is as defined below;

$L^{R3}$ is halogen, cyano, nitro, cyanato (OCN), $C_1$-$C_4$-alkyl, $C_1$-$C_4$-haloalkyl, $C_2$-$C_4$-alkenyl, $C_2$-$C_4$-haloalkenyl, $C_1$-$C_4$-alkoxy, $C_1$-$C_4$-haloalkoxy, $C_3$-$C_6$-cycloalkyl, $C_3$-$C_6$-halocycloalkyl;

According to one embodiment thereof, $R^1$ and $R^2$ are independently of one another selected from the group consisting of hydrogen, $C_1$-$C_8$-alkyl, $C_1$-$C_8$-haloalkyl, $C_1$-$C_8$-alkoxy, $C_1$-$C_8$-haloalkoxy and $C_1$-$C_8$-alkylthio, in particular from the group consisting of hydrogen, $C_1$-$C_4$-alkyl, $C_1$-$C_4$-haloalky, $C_1$-$C_4$-alkoxy, $C_1$-$C_4$-haloalkoxy and $C_1$-$C_4$-alkylthio. According to one embodiment, $R^1$ and $R^2$ are independently of one another selected from the group consisting of hydrogen, $C_1$-$C_4$-alkyl, preferably methyl and ethyl, and $C_1$-$C_4$-haloalkyl. According to a preferred embodiment thereof, $R^1$ and $R^2$ are hydrogen. According to yet a further embodiment, $R^1$ is hydrogen and $R^2$ is $C_1$-$C_8$-alkyl, in particular methyl or ethyl.

According to another embodiment thereof, in the compounds I, $R^3$ is phenyl which is unsubstituted or contains one, two, three, four or five independently selected substituents $L^{R3}$; or vinyl which is unsubstituted or contains one, two or three independently selected substituents $L^{R3}$; where $L^{R3}$ is as defined above. According to one embodiment thereof, $R^3$ is unsubstituted phenyl or phenyl which contains one or two independently selected substituents $L^{R3}$. According to the invention, it may be preferred that at the sam etime, both $R^1$ and $R^2$ are hydrogen. According to a further embodiment, $R^3$ is unsubstituted phenyl. According to yet a further embodiment thereof, $R^3$ is phenyl which contains one, two, three, four or five, in particular one, two or three, independently selected substituents $L^{R3}$. According to a further specific embodiment, $R^3$ is phenyl which contains one or two, in particular one, independently selected substituents $L^{R3}$. $L^{R3}$ is in each case as defined or as defined as being preferred herein. According to specific aspects, $L^{R3}$ is in each case independently selected from the group consisting of Cl, F, $C_1$-$C_4$-alkyl and $C_1$-$C_4$-haloalkyl, specifically selected from the group consisting of Cl, F and methyl. According to the invention, it may be preferred that in each case both $R^1$ and $R^2$ are hydrogen.

According to another preferred embodiment, $R^3$ is unsubstituted vinyl. According to the invention, it may be preferred that at the same time, both $R^1$ and $R^2$ are hydrogen.

According to a further embodiment of the invention, $R^3$ is vinyl which contains one, two or three, in particular one or two, substituents $L^{R3}$; where $L^{R3}$ is as defined or as defined as being preferred herein. According to the invention, it may be preferred that both $R^1$ and $R^2$ are hydrogen.

According to one embodiment, $R^3$ is the following group:

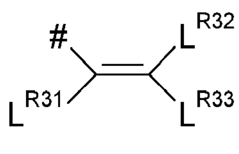

$R^3$-1

in which # is the point of attachment to the structure of the compound I and $L^{R31}$, $L^{R32}$ and $L^{R33}$ have the meanings below:

$L^{R31}$ is hydrogen;
$L^{R32}$ is hydrogen, Cl, F, $C_1$-$C_4$-alkyl or $C_1$-$C_4$-haloalkyl; and
$L^{R33}$ is Cl, F or methyl;

or

$L^{R31}$ is hydrogen;
$L^{R32}$ is Cl, F or methyl; and
$L^{R33}$ is hydrogen, Cl, F, $C_1$-$C_4$-alkyl or $C_1$-$C_4$-haloalkyl.

If $R^3$ is a group $R^3$-1, it may be preferred in accordance with the invention that both $R^1$ and $R^2$ are hydrogen.
Specific meanings of $R^3$ which are preferred according to the invention are vinyl, 2-chlorovinyl, 1-propenyl, 2-methyl-1-propenyl, 1-butenyl, 2-methylphenyl, 3-methylphenyl, 4-methylphenyl, 2-chlorophenyl, 3-chlorophenyl, 4-chlorophenyl, 2-fluorophenyl, 3-fluorophenyl and 4-fluorophenyl. According to the invention, it may be preferred that, at the same time, both $R^1$ and $R^2$ are hydrogen.
If $R^3$ is a substituted vinyl group, the scope of the present invention embraces in each case the E and the Z isomers. For example, if $R^3$ is 2-chlorovinyl the invention embraces the two double bond isomers below:

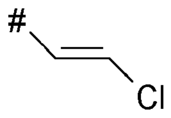
"E"

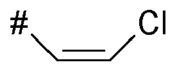
"Z"

Unless indicated otherwise, $L^{R3}$ has independently the following preferred meanings: $L^{R3}$ is preferably independently selected from the group consisting of halogen, cyano, $C_1$-$C_4$-alkyl, $C_1$-$C_4$-haloalkyl, $C_3$-$C_6$-cycloalkyl and $C_3$-$C_6$-halocycloalkyl, in particular selected from the group consisting of halogen, $C_1$-$C_4$-alkyl and $C_1$-$C_4$-haloalkyl.
According to another embodiment of the present invention, $C(R^1R^2R^3)$ has the meaning of $R^4$, wherein $R^4$ is $C_{3-5}$-alkyl. According to one preferred embodiment thereof, $R^4$ is $C_3$- or $C_5$-alkyl. According to one specific embodiment, $R^4$ is $CH(CH_3)_2$ or $CH_2CH_2CH_2$, in particular$CH(CH_3)_2$. According to a further specific embodiment, $R^4$ is $C_5$-alkyl, i.e. $CH_2CH_2CH_2CH_2CH_3$, $CH(CH_3)CH_2CH_2CH_3$, $CH(C_2H_5)CH_2CH_3$, $CH_2CH(CH_3)CH_2CH_3$, $CH_2CH_2CH(CH_3)_2$, $CH(CH_3)CH(CH_3)_2$, $C(CH_3)_2CH_2CH_3$ or $CH_2C(CH_3)_3$. Preferably, $R^4$ is $CH_2CH_2CH_2CH_2CH_3$, $CH(CH_3)CH_2CH_2CH_3$, $CH_2CH_2CH(CH_3)_2$, $C(CH_3)_2CH_2CH_3$ or $CH_2C(CH_3)_3$. Especially preferably, $R^4$ is $CH_2CH_2CH_2CH_2CH_3$, $CH(CH_3)CH_2CH_2CH_3$, $CH_2CH_2CH(CH_3)_2$ or $CH_2C(CH_3)_3$. According to one specifc embodiment, $R^4$ is $CH_2R^{4a}$ and $R^{4a}$ is n-butyl, sec-butyl, isobutyl or tert-butyl.
According to another emodiment of the invention, $R^4$ is $CH_2CH_2CH_2CH_2$. According to still a further embodiment of the compounds I, $R^4$ is $CH_2CH(CH_3)_2$. According to yet a further embodiment of the compounds I, $R^4$ is $CH(CH_3)C_2H_5$. According to yet a further embodiment of the compounds I, $R^4$ is $CH(CH_3)_3$.
The compounds I of the present invention may be present as pure enantiomers or as mixture of enantiomers (racemic mixtures or as mixtures in any possible ratio of the enantiomers). According to one embodiment, a racemic mixture is present, in particular of the respective "trans" diastereomers. In particular, the following compounds and the stereoisomers thereof are preferred according to the present invention. In the "trans"-diastereomers, ring A and ring B are "trans" to each other. In particular, a racemic mixture is present. Furthermore, any other proportions of the trans-enantiomers may be present and also any one of the trans-enantiomers may also be present in pure form. On the other hand, also the "cis" isomers may be present. This applies to every inventive mixture detailled herein.
Specific preferred compounds I in the inventive mixtures are the following:

Compound I-1: A = 2,4-difluorophenyl, B=2-chlorophenyl and $CR^1R^2R^3$ is allyl.
Stereoisomers of compound I-1:

Isomer I-1-a1): 5-allylsulfanyl-1-[[(2S,3S)-3-(2-chlorophenyl)-2-(2,4-difluorophenyl)oxiran-2-yl]methyl]-1,2,4-triazole ("cis")

Isomer I-1-a2): 5-allylsulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-allylsulfanyl-1-[[rel-(2S,3S)-3-(2-chlorophenyl)-2-(2,4-difluorophenyl) oxiran-2-yl]methyl]-1,2,4-triazole (or 5-allylsulfanyl-1-[[rel-(2R,3R)-3-(2-chlorophenyl)-2-(2,4-difluorophenyl) oxiran-2-yl]methyl]-1,2,4-triazole)

Isomer I-1-a3): 5-allylsulfanyl-1-[[(2S,3R)-3-(2-chlorophenyl)-2-(2,4-difluorophenyl)oxiran-2-yl]methyl]-1,2,4-triazole ("trans")

Isomer I-1-a4): 5-allylsulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-allylsulfanyl-1-[[rel-(2S,3R)-3-(2-chlorophenyl)-2-(2,4-difluorophenyl) oxiran-2-yl]methyl]-1,2,4-triazole (or 5-allylsulfanyl-1-[[rel-(2R,3S)-3-(2-chlorophenyl)-2-(2,4-difluorophenyl) oxiran-2-yl]methyl]-1,2,4-triazole).

Compound I-2: A = 4-fluorophenyl, B=2-chlorophenyl and $CR^1R^2R^3$ is allyl. Stereoisomers of compound I-2:

Isomer I-2-a1): 5-allylsulfanyl-1-[[(2S,3S)-3-(2-chlorophenyl)-2-(4-fluorophenyl)oxiran-2-yl]methyl]-1,2,4-triazole ("cis")

Isomer I-2-a2): 5-allylsulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-allylsulfanyl-1-[[rel-(2S,3S)-3-(2-chlorophenyl)-2-(4-fluorophenyl)oxiran-2-yl]methyl]-1,2,4-triazole (or 5-allylsulfanyl-1-[[rel-(2R,3R)-3-(2-chlorophenyl)-2-(4-fluorophenyl)oxiran-2-yl]methyl]-1,2,4-triazole)

Isomer I-2-a3): 5-allylsulfanyl-1-[[(2S,3R)-3-(2-chlorophenyl)-2-(4-fluorophenyl)oxiran-2-yl]methyl]-1,2,4-triazole ("trans")

Isomer I-2-a4): 5-allylsulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-allylsulfanyl-1-[[rel-(2S,3R)-3-(2-chlorophenyl)-2-(4-fluorophenyl)oxiran-2-yl]methyl]-1,2,4-triazole (or 5-allylsulfanyl-1-[[rel-(2R,3S)-3-(2-chlorophenyl)-2-(4-fluorophenyl)oxiran-2-yl] methyl]-1,2,4-triazole).

Compound I-3: A = 2,4-difluorophenyl, B=2-chlorophenyl and $CR^1R^2R^3$ is n-pentyl. Stereoisomers of compound I-3:

Isomer I-3-a1): 5-n-pentylsulfanyl-1-[[(2S,3S)-3-(2-chlorophenyl)-2-(2,4-difluorophenyl)oxiran-2-yl]methyl]-1,2,4-triazole ("cis")

Isomer I-3-a2): 5-n-pentylsulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-n-pentylsulfanyl-1-[[rel-(2S,3S)-3-(2-chlorophenyl)-2-(2,4-difluorophenyl) oxiran-2-yl]methyl]-1,2,4-triazole (or 5-n-pentylsulfanyl-1-[[rel-(2R,3R)-3-(2-chlorophenyl)-2-(2,4-difluorophenyl)oxiran-2-yl]methyl]-1,2,4-triazole)

Isomer I-3-a3): 5-n-pentylsulfanyl-1-[[(2S,3R)-3-(2-chlorophenyl)-2-(2,4-difluorophenyl)oxiran-2-yl]methyl]-1,2,4-triazole ("trans")

Isomer I-3-a4): 5-n-pentylsulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-n-pentylsulfanyl-1-[[rel-(2S,3R)-3-(2-chlorophenyl)-2-(2,4-difluorophenyl) oxiran-2-yl]methyl]-1,2,4-triazole (or 5-n-pentylsulfanyl-1-[[-rel-(2R,3S)-3-(2-chlorophenyl)-2-(2,4-difluorophenyl)oxiran-2-yl]methyl]-1,2,4-triazole)

Compound I-4: A = 4-fluorophenyl, B=2-chlorophenyl and $CR^1R^2R^3$ is n-pentyl. Stereoisomers of compound I-4:

Isomer I-4-a1): 5-n-pentylsulfanyl-1-[[(2S,3S)-3-(2-chlorophenyl)-2-(4-fluorophenyl)oxiran-2-yl]methyl]-1,2,4-triazole ("cis")

Isomer I-4-a2): 5-n-pentylsulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-n-pentylsulfanyl-1-[[rel-(2S,3S)-3-(2-chlorophenyl)-2-(4-fluorophenyl)oxiran-2-yl]methyl]-1,2,4-triazole (or 5-n-pentylsulfanyl-1-[[rel-(2R,3R)-3-(2-chlorophenyl)-2-(4-fluorophenyl)oxiran-2-yl]methyl]-1,2,4-triazole)

Isomer I-4-a3): 5-n-pentylsulfanyl-1-[[(2S,3R)-3-(2-chlorophenyl)-2-(4-fluorophenyl)oxiran-2-yl]methyl]-1,2,4-triazole ("trans")

Isomer I-4-a4): 5-n-pentylsulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-n-pentylsulfanyl-1-[[rel-(2S,3R)-3-(2-chlorophenyl)-2-(4-fluorophenyl)oxiran-2-yl]methyl]-1,2,4-triazole (or 5-n-pentylsulfanyl-1-[[-rel-(2R,3S)-3-(2-chlorophenyl)-2-(4-fluorophenyl)oxiran-2-yl]methyl]-1,2,4-triazole)

Compound I-5: A = 2,4-difluorophenyl, B=2-chlorophenyl and $CR^1R^2R^3$ is $R^4$=isopropyl. Stereoisomers of compound I-5:

Isomer I-5-a1): 5-iso-propylsulfanyl-1-[[(2S,3S)-3-(2-chlorophenyl)-2-(2,4-difluorophenyl)oxiran-2-yl]methyl]-1,2,4-triazole ("cis")

Isomer I-5-a2): 5-iso-propylsulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-iso-propylsulfanyl-1-[[rel-(2S,3S)-3-(2-chlorophenyl)-2-(2,4-difluorophenyl)oxiran-2-yl]methyl]-1,2,4-triazole (or 5-isopropylsulfanyl-1-[[rel-(2R,3R)-3-(2-chlorophenyl)-2-(2,4-difluorophenyl)oxiran-2-yl]methyl]-1,2,4-triazole)

Isomer I-5-a3): 5-iso-propylsulfanyl-1-[[(2S,3R)-3-(2-chlorophenyl)-2-(2,4-difluorophenyl)oxiran-2-yl]methyl]-1,2,4-triazole ("trans")

Isomer I-5-a4): 5-iso-propylsulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-iso-propylsulfanyl-1-[[rel-(2S,3R)-3-(2-chlorophenyl)-2-(2,4-difluorophenyl)oxiran-2-yl]methyl]-1,2,4-triazole (or 5-isopropylsulfanyl-1-[[-rel-(2R,3S)-3-(2-chlorophenyl)-2-(2,4-difluorophenyl)oxiran-2-yl]methyl]-1,2,4-triazole)

Compound I-6: A = 4-fluorophenyl, B=2-chlorophenyl and $CR^1R^2R^3$ is $R^4$=iso-propyl. Stereoisomers of compound I-6:

Isomer I-6-a1): 5-iso-propylsulfanyl-1-[[(2S,3S)-3-(2-chlorophenyl)-2-(4-fluorophenyl)oxiran-2-yl]methyl]-1,2,4-triazole ("cis")

Isomer I-6-a2): 5-iso-propylsulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-iso-propylsulfanyl-1-[[rel-(2S,3S)-3-(2-chlorophenyl)-2-(4-fluorophenyl)oxiran-2-yl]methyl]-1,2,4-triazole (or 5-isopropylsulfanyl-1-[[rel-(2R,3R)-3-(2-chlorophenyl)-2-(4-fluorophenyl)oxiran-2-yl]methyl]-1,2,4-triazole)

Isomer I-6-a3): 5-iso-propylsulfanyl-1-[[(2S,3R)-3-(2-chlorophenyl)-2-(4-fluorophenyl)oxiran-2-yl]methyl]-1,2,4-triazole ("trans")

Isomer I-6-a4): 5-iso-propylsulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-iso-propylsulfanyl-1-[[rel-(2S,3R)-3-(2-chlorophenyl)-2-(4-fluorophenyl) oxiran-2-yl]methyl]-1,2,4-triazole (or 5-isopropylsulfanyl-1-[[-rel-(2R,3S)-3-(2-chlorophenyl)-2-(4-fluorophenyl) oxiran-2-yl]methyl]-1,2,4-triazole)

Compound I-7: A = 2,4-fluorophenyl, B=2-chlorophenyl and $CR^1R^2R^3$ is benzyl. Stereoisomers of I-7:

Isomer I-7-a1): 5-benzylsulfanyl-1-[[(2S,3S)-3-(2-chlorophenyl)-2-(2,4-difluorophenyl)oxiran-2-yl]methyl]-1,2,4-triazole ("cis")

Isomer I-7-a2): 5-benzylsulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-benzylsulfanyl-1-[[rel-(2S,3S)-3-(2-chlorophenyl)-2-(2,4-difluorophenyl)oxiran-2-yl]methyl]-1,2,4-triazole (or 5-benzylsulfanyl-1-[[rel-(2R,3R)-3-(2-chlorophenyl)-2-(2,4-difluorophenyl) oxiran-2-yl]methyl]-1,2,4-triazole)

Isomer I-7-a3): 5-benzylsulfanyl-1-[[(2S,3R)-3-(2-chlorophenyl)-2-(2,4-difluorophenyl)oxiran-2-yl]methyl]-1,2,4-triazole ("trans")

Isomer I-7-a4): 5-benzylsulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-benzylsulfanyl-1-[[rel-(2S,3R)-3-(2-chlorophenyl)-2-(2,4-difluorophenyl) oxiran-2-yl]methyl]-1,2,4-triazole (or 5-benzylsulfanyl-1-[[-rel-(2R,3S)-3-(2-chlorophenyl)-2-(2,4-difluorophenyl) oxiran-2-yl]methyl]-1,2,4-triazole)

Compound I-8: A = 4-fluorophenyl, B=2-chlorophenyl and $CR^1R^2R^3$ is benzyl. Stereoisomers of I-8:

Isomer I-8-a1): 5-benzylsulfanyl-1-[[(2S,3S)-3-(2-chlorophenyl)-2-(4-fluorophenyl)oxiran-2-yl]methyl]-1,2,4-triazole ("cis")

Isomer I-8-a2): 5-benzylsulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-benzylsulfanyl-1-[[rel-(2S,3S)-3-(2-chlorophenyl)-2-(4-fluorophenyl)oxiran-2-yl]methyl]-1,2,4-triazole (or 5-benzylsulfanyl-1-[[rel-(2R,3R)-3-(2-chlorophenyl)-2-(4-fluorophenyl)oxiran-2-yl] methyl]-1,2,4-triazole)

Isomer I-8-a3): 5-benzylsulfanyl-1-[[(2S,3R)-3-(2-chlorophenyl)-2-(4-fluorophenyl)oxiran-2-yl]methyl]-1,2,4-triazole ("trans")

Isomer I-8-a4): 5-benzylsulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-benzylsulfanyl-1-[[rel-(2S,3R)-3-(2-chlorophenyl)-2-(4-fluorophenyl)oxiran-2-yl]methyl]-1,2,4-triazole (or 5-benzylsulfanyl-1-[[-rel-(2R,3S)-3-(2-chlorophenyl)-2-(4-fluorophenyl)oxiran-2-yl]methyl]-1,2,4-triazole)

Compound I-9: A = 2,4-difluorophenyl, B=2-chlorophenyl and $CR^1R^2R^3$ is $R^4$=n-butyl. Stereoisomers of compound I-9:

Isomer I-9-a1): 5-(1-n-butyl)sulfanyl-1-[[(2S,3S)-3-(2-chlorophenyl)-2-(2,4-difluorophenyl)oxiran-2-yl]methyl]-1,2,4-triazole ("cis")

Isomer I-9-a2): 5-(1-n-butyl)sulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-(1-n-butyl)sulfanyl-1-[[rel-(2S,3S)-3-(2-chlorophenyl)-2-(2,4-difluorophenyl)oxiran-2-yl]methyl]-1,2,4-triazole (or 5-(1-n-butylsulfanyl-1-[[rel-(2R,3R)-3-(2-chlorophenyl)-2-(2,4-difluorophenyl)oxiran-2-yl]methyl]-1,2,4-triazole)

Isomer I-9-a3): 5-(1-n-butyl)sulfanyl-1-[[(2S,3R)-3-(2-chlorophenyl)-2-(2,4-difluorophenyl)oxiran-2-yl]methyl]-1,2,4-triazole ("trans")

Isomer I-9-a4): 5-(1-n-butyl)sulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-(1-n-butyl)sulfanyl-1-[[rel-(2S,3R)-3-(2-chlorophenyl)-2-(2,4-difluorophenyl)oxiran-2-yl]methyl]-1,2,4-triazole (or 5-(1-n-butyl)sulfanyl-1-[[-rel-(2R,3S)-3-(2-chlorophenyl)-2-(2,4-difluorophenyl)oxiran-2-yl]methyl]-1,2,4-triazole)

Compound I-10: A = 4-fluorophenyl, B=2-chlorophenyl and $CR^1R^2R^3$ is $R^4$=n-butyl. Stereoisomers of compound I-10:

Isomer I-10-a1): 5-(1-n-butyl)sulfanyl-1-[[(2S,3S)-3-(2-chlorophenyl)-2-(4-fluorophenyl)oxiran-2-yl]methyl]-1,2,4-triazole ("cis")

Isomer I-10-a2): 5-(1-n-butyl)sulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-(1-n-butyl)sulfanyl-1-[[rel-(2S,3S)-3-(2-chlorophenyl)-2-(4-fluorophenyl)oxiran-2-yl]methyl]-1,2,4-triazole (or 5-(1-n-butylsulfanyl-1-[[rel-(2R,3R)-3-(2-chlorophenyl)-2-(4-fluorophenyl)oxiran-2-yl]methyl]-1,2,4-triazole)

Isomer I-10-a3): 5-(1-n-butyl)sulfanyl-1-[[(2S,3R)-3-(2-chlorophenyl)-2-(4-fluorophenyl)oxiran-2-yl]methyl]-1,2,4-triazole ("trans")

Isomer I-10-a4): 5-(1-n-butyl)sulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-(1-n-butyl)sulfanyl-1-[[rel-(2S,3R)-3-(2-chlorophenyl)-2-(4-fluorophenyl) oxiran-2-yl]methyl]-1,2,4-triazole (or 5-(1-n-butyl)sulfanyl-1-[[-rel-(2R,3S)-3-(2-chlorophenyl)-2-(4-fluorophenyl)oxiran-2-yl]methyl]-1,2,4-triazole)

Compound I-11: A = 2,4-difluorophenyl, B=2-chlorophenyl and $CR^1R^2R^3$ is $R^4$=tert-butyl. Stereoisomers of compound I-11:

Isomer I-11-a1): 5-(tert-butyl)sulfanyl-1-[[(2S,3S)-3-(2-chlorophenyl)-2-(2,4-difluorophenyl)oxiran-2-yl]methyl]-1,2,4-triazole ("cis")

Isomer I-11-a2): 5-(tert-butyl)sulfanyl-1-[[(2R,3R)-3-(2-chlorophenyl)-2-(2,4-difluorophenyl)oxiran-2-yl]methyl]-1,2,4-triazole ("cis")

Both "cis"-isomers are also called 5-(tert-butyl)sulfanyl-1-[[rel-(2S,3S)-3-(2-chlorophenyl)-2-(2,4-difluorophenyl) oxiran-2-yl]methyl]-1,2,4-triazole (or 5-(tert-butyl)sulfanyl-1-[[rel-(2R,3R)-3-(2-chlorophenyl)-2-(2,4-difluorophenyl)oxiran-2-yl]methyl]-1,2,4-triazole)

Isomer I-11-a3): 5-(tert-butyl)sulfanyl-1-[[(2S,3R)-3-(2-chlorophenyl)-2-(2,4-difluorophenyl)oxiran-2-yl]methyl]-1,2,4-triazole ("trans")

Isomer I-11-a4): 5-(tert-butyl)sulfanyl-1-[[(2R,3S)-3-(2-chlorophenyl)-2-(2,4-difluorophenyl)oxiran-2-yl]methyl]-1,2,4-triazole ("trans")

Both "trans"-isomers are also called 5-(tert-butyl)sulfanyl-1-[[rel-(2S,3R)-3-(2-chlorophenyl)-2-(2,4-difluorophenyl)oxiran-2-yl]methyl]-1,2,4-triazole (or 5-( tert-butyl)sulfanyl-1-[[-rel-(2R,3S)-3-(2-chlorophenyl)-2-(2,4-difluorophenyl)oxiran-2-yl]methyl]-1,2,4-triazole).

Compound I-12: A = 4-fluorophenyl, B=2-chlorophenyl and $CR^1R^2R^3$ is $R^4$=tert-butyl. Stereoisomers of compound I-12:

Isomer I-12-a1): 5-(tert-butyl)sulfanyl-1-[[(2S,3S)-3-(2-chlorophenyl)-2-(4-fluorophenyl)oxiran-2-yl]methyl]-1,2,4-triazole ("cis")

Isomer I-12-a2): 5-(tert-butyl)sulfanyl-1-[[(2R,3R)-3-(2-chlorophenyl)-2-(4-fluorophenyl)oxiran-2-yl]methyl]-1,2,4-triazole ("cis")

Both "cis"-isomers are also called 5-(tert-butyl)sulfanyl-1-[[rel-(2S,3S)-3-(2-chlorophenyl)-2-(4-fluorophenyl)oxiran-2-yl]methyl]-1,2,4-triazole (or 5-(tert-butyl)sulfanyl-1-[[rel-(2R,3R)-3-(2-chlorophenyl)-2-(4-fluorophenyl) oxiran-2-yl]methyl]-1,2,4-triazole)

Isomer I-12-a3): 5-(tert-butyl)sulfanyl-1-[[(2S,3R)-3-(2-chlorophenyl)-2-(4-fluorophenyl)oxiran-2-yl]methyl]-1,2,4-triazole ("trans")

Isomer I-12-a4): 5-(tert-butyl)sulfanyl-1-[[(2R,3S)-3-(2-chlorophenyl)-2-(4-fluorophenyl)oxiran-2-yl]methyl]-1,2,4-triazole ("trans")

Both "trans"-isomers are also called 5-(tert-butyl)sulfanyl-1-[[rel-(2S,3R)-3-(2-chlorophenyl)-2-(4-fluorophenyl) oxiran-2-yl]methyl]-1,2,4-triazole (or 5-( tert-butyl)sulfanyl-1-[[-rel-(2R,3S)-3-(2-chlorophenyl)-2-(4-fluorophenyl)oxiran-2-yl]methyl]-1,2,4-triazole).

Independently of one another, components 2 and 3 are preferably selected as illustrated in the compositions below:

Preference is given to compositions of a compound I (component 1) with at least one active compound II from the group of the strobilurins and in particular selected from the group consisting of azoxystrobin, dimoxystrobin, fluoxastrobin, kresoxim-methyl, orysastrobin, picoxystrobin, pyraclostrobin and trifloxystrobin. According to one specific embodiment of the invention, preference is given to compositions comprising a compound I (component 1), in particular a compound selected from the compounds I-1, I-2, I-3, I-4, I-5, I-6, I-7, I-8, I-9, I-10, I-11 and I-12, and, as component 2, an active compound from the strobilurins, where component 2 is selected in particular from the group consisting of azoxystrobin, dimoxystrobin, fluoxastrobin, kresoxim-methyl, orysastrobin, picoxystrobin, pyraclostrobin and trifloxystrobin. According to a specific aspect, these are binary mixtures which, as active compounds, comprise in each case only the two components. According to a further aspect, these mixtures comprise a further component (component 3) selected from carboxamides, in particular selected from the group consisting of bixafen, boscalid, fluopyram, isopyrazam, penthiopyrad, sedaxane, N-(3',4',5'-trifluorobiphenyl-2-yl)-3-difluoromethyl-1-methyl-1H-pyrazole-4-carboxamide and penflufen.

Preference is also given to compositions of a compound I (component 1) with at least one active compound II selected from the group of the carboxamides and particularly preferably selected from the group consisting of bixafen, boscalid, isopyrazam, fluopyram, penflufen, penthiopyrad, sedaxane, fenhexamid, metalaxyl, mefenoxam, ofurace, dimethomorph, flumorph, fluopicolide (picobenzamid), zoxamide, carpropamid, mandipropamid and N-(3',4',5'-trifluorobiphenyl-2-yl)-3-difluoromethyl-1-methyl-1H-pyrazole-4-carboxamide. According to a specific embodiment of the invention, the compound I (component I) is in each case selected from the compounds I-1, I-2, I-3, I-4, I-5, I-6, I-7, I-8, I-9, I-10, I-11 and I-12.

Preference is also given to compositions of a compound I (component I) with at least one active compound II selected from the group of the azoles and in particular selected from the group consisting of cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole, prochloraz, cyazofamid, benomyl, carbendazim and ethaboxam. According to a specific embodiment of the invention, the compound I (component I) is in each case selected from the compounds I-1, I-2, I-3, I-4, I-5, I-6, I-7, I-8, I-9, I-10, I-11 and I-12.

Preference is also given to compositions of a compound I (component I) with at least one active compound II in particular selected from the group consisting of fluazinam, cyprodinil, fenarimol, mepanipyrim, pyrimethanil, triforin, fludioxonil, fodemorph, fenpropimorph, tridemorph, fenpropidin, iprodione, vinclozolin, famoxadone, fenamidone, probenazole, proquinazid, acibenzolar-S-methyl, captafol, folpet, fenoxanil, quinoxyfen and 5-ethyl-6-octyl-[1,2,4]triazolo[1,5-a]pyrimidin-7-ylamine. According to a specific embodiment of the invention, the compound I (component I) is in each case selected from the compounds I-1, I-2, I-3, I-4, I-5, I-6, I-7, I-8, I-9, I-10, I-11 and I-12.

Preference is also given to compositions of a compound I (component I) with at least one active compound II selected from the carbamates and in particular selected from the group consisting of mancozeb, metiram, propineb, thiram, iprovalicarb, benthiavalicarb and propamocarb. According to a specific embodiment of the invention, the compound I (component I) is in each case selected from the compounds I-1, I-2, I-3, I-4, I-5, I-6, I-7, I-8, I-9, I-10, I-11 and I-12.

Preference is also given to compositions of a compound I (component I) with at least one active compound II selected from the group consisting of dithianon, fentin salts, such as fentin acetate, fosetyl, fosetyl-aluminum, $H_3PO_3$ and salts thereof, chlorothalonil, dichlofluanid, thiophanate-methyl, copper acetate, copper hydroxide, copper oxychloride, copper sulfate, sulfur, cymoxanil, metrafenone, spiroxamine and N-methyl-2-{1-[(5-methyl-3-trifluoromethyl-1H-pyrazol-1-yl)acetyl]piperidin-4-yl}-N-[(1R)-1,2,3,4-tetrahydronaphthalen-1-yl]-4-thiazolecarboxamide. According to a specific embodiment of the invention, the compound I (component I) is in each case selected from the compounds I-1, I-2, I-3, I-4, I-5, I-6, I-7, I-8, I-9, I-10, I-11 and I-12.

According to one embodiment, the compositions according to the invention comprise a compound I (component 1), and a component 2, component 2 being a M) growth regulator. Component 2 is selected in particular from the group consisting of chlormequat (chlormequat chloride), mepiquat (mepiquat chloride), metconazole, paclobutrazole, prohexadione (prohexadione-calcium), trinexapac-ethyl and uniconazole. According to one specific embodiment of the invention, the compound I (component 1) is in each case selected from the compounds I-1, I-2, I-3, I-4, I-5, I-6, I-7, I-8, I-9, I-10, I-11 and I-12.

According to a further embodiment, the compositions according to the invention comprise a compound I (component 1), and a component 2, component 2 being an insecticide selected from group O). According to a preferred embodiment, these are binary mixtures comprising, as active compounds, a component 1) and a component 2) selected from group O). According to a specific embodiment of the invention, the compound I (component 1) is in each case selected from the compounds I-1, I-2, I-3, I-4, I-5, I-6, I-7, I-8, I-9, I-10, I-11 and I-12.

According to one aspect, the insecticide of component 2) is selected from the group of the organo(thio)phosphates, in particular selected from the group consisting of acephate, chlorpyrifos, diazinon, dichlorvos, dimethoate, fenitrothion, methamidophos, methidathion, methyl-parathion, monocrotophos, phorate, profenofos and terbufos. According to a specific embodiment of the invention, compound I (component 1) is in each case selected from the compounds I-1, I-2, I-3, I-4, I-5, I-6, I-7, I-8, I-9, I-10, I-11 and I-12.

According to a further aspect, the insecticide of component 2) is selected from the group of the carbamates, in particular selected from the group consisting of aldicarb, carbaryl, carbofuran, carbosulfan, methomyl and thiodicarb. According to a specific embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is selected from the group of the pyrethroids, in particular selected from the group consisting of: bifenthrin, cyfluthrin, cypermethrin, alpha-cypermethrin, zeta-cypermethrin, deltamethrin, esfenvalerate, lambda-cyhalothrin and tefluthrin. According to a specific embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is selected from the group of inhibitors of insect growth, in particular selected from the group consisting of lufenuron and spirotetramat. According to a specific embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is selected from the group of the nicotine receptor agonists/antagonists, in particular selected from the group consisting of: clothianidin, imidacloprid, thiamethoxam and thiacloprid. According to a specific embodiment of the invention, compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is selected from the group of the GABA antagonists, in particular selected from the group consisting of: endosulfan and fipronil. According to a specific embodiment of the invention, the compound I (component 1) is in each case selected from the compounds I-1, I-2, I-3, I-4, I-5, I-6, I-7, 1-8, I-9, I-10, I-11 and I-12.

According to yet a further aspect, the insecticide of component 2) is selected from the group of the macrocyclic lactones, in particular selected from the group consisting of: abamectin, emamectin, spinosad and spinetoram. According to a specific embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is hydramethylnon. According to a specific

embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is fenbutatin oxide. According to a specific embodiment of the invention, the compound I (component 1) is in each case selected from the compounds I-1, I-2, I-3, I-4, I-5, I-6, I-7, I-8, I-9, I-10, I-11 and I-12.

According to yet a further aspect, the insecticide of component 2) is selected from the group consisting of chlorfenapyr, cyazypyr (HGW86), cyflumetofen, flonicamid, flubendiamide, indoxacarb and metaflumizone. According to a specific embodiment of the invention, the compound I (component 1) is in each case selected from the compounds I-1, I-2, I-3, I-4, I-5, I-6, I-7, I-8, I-9, I-10, I-11 and I-12.

According to a further embodiment, the mixtures are ternary mixtures comprising, in addition to the components mentioned, a component 3) selected from the active compounds II of group O) mentioned above. According to a specific embodiment of the invention, the compound I (component 1) is in each case selected from the compounds I-1, I-2, I-3, I-4, I-5, I-6, I-7, I-8, I-9, I-10, I-11 and I-12.

According to a further embodiment, the mixtures are ternary mixtures comprising, in addition to the two components mentioned, a component 3) selected from the active compounds II of groups A) to G). According to one specific embodiment of the invention, the compound I (component 1) is in each case selected from the compounds I-1, I-2, I-3, I-4, I-5, I-6, I-7, I-8, I-9, I-10, I-11 and I-12.

The active compounds II of group O) and their pesticidal action and processes for their preparation are known (see also http://www.hclrss.demon.co.uk/index.html). Commercially available active compounds can be found, for example, in The Pesticide Manual, 14th Edition, British Crop Protection Council (2006) and other publications. The compound BB) of group O)

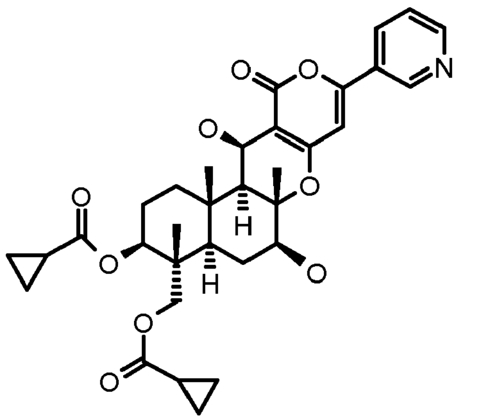

BB)

having the IUPAC name [(3S,4R,4aR,6S,6aS, 12R, 12aS, 12bS)-3-(cyclopropanecarbonyloxy)-6,12-dihydroxy-4,6a,12b-trimethyl-11-oxo-9-(pyridin-3-yl)-1,2,3,4,4a,5,6,6a,12a,12b-decahydro-11H,12H-benzo[f]pyrano[4,3-b]chromen-4-yl]methyl cyclopropanecarboxylate and its pesticidal action are disclosed in W02006/129714 and W02009/081851.

In a preferred embodiment, component 2 is a fungicide selected from groups A to K. If a component 3 is present, this is, in another preferred embodiment, an independently selected compound II selected from groups A to O. In a further preferred embodiment, components 2 and 3 are selected from groups A to K. If a component 4 is present, this is, in another preferred embodiment, an independently selected from groups A to O. In a further preferred embodiment, components 2, 3 and 4 are three fungicides independently selected from groups A to O. According to a specific embodiment of the invention, the compound I (component 1) is in each case selected from the compounds I-1, I-2, I-3, I-4, I-5, I-6, I-7, I-8, I-9, I-10, I-11 and I-12.

Particularly preferred components 2 are compounds II selected from the group of the following compounds:

II-1 epoxiconazole

II-2 metconazole

II-3 tebuconazole

II-4 triticonazole

II-5 prothioconazole

II-6 kresoxim-methyl

II-7 pyraclostrobin

II-8 orysastrobin

II-9 dimethomorph

II-10 ametoctradine

II-11 pyrimethanil

II-12 metalaxyl

II-13 fenpropimorph

II-14 dodemorph

II-15 mancozeb

II-16 thiophanate-methyl

II-17 chlorothalonil

II-18 metrafenone

II-19 bixafen

II-20 boscalid

II-21 fluxapyroxad

II-22 sedaxane

II-23 isopyrazam II-24 fluopyram

II-25 penflufen

II-26 cyflufenamid

II-27 spiroxamine

II-28 fenpropidin

II-29 proquinazid

II-30 dimoxystrobin

II-31 iprovalicarb

II-32 folpet

II-33 prochloraz

II-34 dithianon

II-35 difenoconazole

II-36 azoxystrobin

II-37 trifloxystrobin

II-38 penthiopyrad

II-39 picoxystrobin

II-40 fluoxastrobin

Particularly preferred mixtures are the binary mixtures of Table B, where each row corresponds to one aspect of the mixtures according to the invention. According to one specific aspect, these are binary mixtures which each only contain these two components as the active compound.

Table B: Mixtures comprising one component 1 selected from compounds of the formula I and one component 2

| Mixture | 1 | 2 | | Mixture | 1 | 2 |
|---|---|---|---|---|---|---|
| B-1 | I-1 | II-1 | | B-9 | I-1 | II-9 |
| B-2 | I-1 | II-2 | | B-10 | I-1 | II-10 |
| B-3 | I-1 | II-3 | | B-11 | I-1 | II-11 |
| B-4 | I-1 | II-4 | | B-12 | I-1 | II-12 |
| B-5 | I-1 | II-5 | | B-13 | I-1 | II-13 |
| B-6 | I-1 | II-6 | | B-14 | I-1 | II-14 |
| B-7 | I-1 | II-7 | | B-15 | I-1 | II-15 |
| B-8 | I-1 | II-8 | | B-16 | I-1 | II-16 |
| B-17 | I-1 | II-17 | | B-57 | I-2 | II-17 |
| B-18 | I-1 | II-18 | | B-58 | I-2 | II-18 |
| B-19 | I-1 | II-19 | | B-59 | I-2 | II-19 |
| B-20 | I-1 | II-20 | | B-60 | I-2 | II-20 |
| B-21 | I-1 | II-21 | | B-61 | I-2 | II-21 |
| B-22 | I-1 | II-22 | | B-62 | I-2 | II-22 |
| B-23 | I-1 | II-23 | | B-63 | I-2 | II-23 |
| B-24 | I-1 | II-24 | | B-64 | I-2 | II-24 |
| B-25 | I-1 | II-25 | | B-65 | I-2 | II-25 |
| B-26 | I-1 | II-26 | | B-66 | I-2 | II-26 |
| B-27 | I-1 | II-27 | | B-67 | I-2 | II-27 |
| B-28 | I-1 | II-28 | | B-68 | I-2 | II-28 |
| B-29 | I-1 | II-29 | | B-69 | I-2 | II-29 |
| B-30 | I-1 | II-30 | | B-70 | I-2 | II-30 |
| B-31 | I-1 | II-31 | | B-71 | I-2 | II-31 |
| B-32 | I-1 | II-32 | | B-72 | I-2 | II-32 |
| B-33 | I-1 | II-33 | | B-73 | I-2 | II-33 |
| B-34 | I-1 | II-34 | | B-74 | I-2 | II-34 |
| B-35 | I-1 | II-35 | | B-75 | I-2 | II-35 |
| B-36 | I-1 | II-36 | | B-76 | I-2 | II-36 |

(continued)

| Mixture | 1 | 2 | | Mixture | 1 | 2 |
|---|---|---|---|---|---|---|
| B-37 | I-1 | II-37 | | B-77 | I-2 | II-37 |
| B-38 | I-1 | II-38 | | B-78 | I-2 | II-38 |
| B-39 | I-1 | II-39 | | B-79 | I-2 | II-39 |
| B-40 | I-1 | II-40 | | B-80 | I-2 | II-40 |
| B-41 | I-2 | II-1 | | B-81 | I-3 | II-1 |
| B-42 | I-2 | II-2 | | B-82 | I-3 | II-2 |
| B-43 | I-2 | II-3 | | B-83 | I-3 | II-3 |
| B-44 | I-2 | II-4 | | B-84 | I-3 | II-4 |
| B-45 | I-2 | II-5 | | B-85 | I-3 | II-5 |
| B-46 | I-2 | II-6 | | B-86 | I-3 | II-6 |
| B-47 | I-2 | II-7 | | B-87 | I-3 | II-7 |
| B-48 | I-2 | II-8 | | B-88 | I-3 | II-8 |
| B-49 | I-2 | II-9 | | B-89 | I-3 | II-9 |
| B-50 | I-2 | II-10 | | B-90 | I-3 | II-10 |
| B-51 | I-2 | II-11 | | B-91 | 1-3 | II-11 |
| B-52 | I-2 | II-12 | | B-92 | I-3 | II-12 |
| B-53 | I-2 | II-13 | | B-93 | I-3 | II-13 |
| B-54 | I-2 | II-14 | | B-94 | I-3 | II-14 |
| B-55 | I-2 | II-15 | | B-95 | I-3 | II-15 |
| B-56 | I-2 | II-16 | | B-96 | I-3 | II-16 |
| B-97 | I-3 | II-17 | | B-137 | I-4 | II-17 |
| B-98 | I-3 | II-18 | | B-138 | I-4 | II-18 |
| B-99 | I-3 | II-19 | | B-139 | I-4 | II-19 |
| B-100 | I-3 | II-20 | | B-140 | I-4 | II-20 |
| B-101 | I-3 | II-21 | | B-141 | I-4 | II-21 |
| B-102 | I-3 | II-22 | | B-142 | I-4 | II-22 |
| B-103 | I-3 | II-23 | | B-143 | I-4 | II-23 |
| B-104 | I-3 | II-24 | | B-144 | I-4 | II-24 |
| B-105 | I-3 | II-25 | | B-145 | I-4 | II-25 |
| B-106 | I-3 | II-26 | | B-146 | I-4 | II-26 |
| B-107 | I-3 | II-27 | | B-147 | I-4 | II-27 |
| B-108 | I-3 | II-28 | | B-148 | I-4 | II-28 |
| B-109 | I-3 | II-29 | | B-149 | I-4 | II-29 |
| B-110 | I-3 | II-30 | | B-150 | I-4 | II-30 |
| B-111 | I-3 | II-31 | | B-151 | I-4 | II-31 |
| B-112 | I-3 | II-32 | | B-152 | I-4 | II-32 |
| B-113 | I-3 | II-33 | | B-153 | I-4 | II-33 |
| B-114 | I-3 | II-34 | | B-154 | I-4 | II-34 |

(continued)

| Mixture | 1 | 2 | | Mixture | 1 | 2 |
|---|---|---|---|---|---|---|
| B-115 | I-3 | II-35 | | B-155 | I-4 | II-35 |
| B-116 | I-3 | II-36 | | B-156 | I-4 | II-36 |
| B-117 | I-3 | II-37 | | B-157 | I-4 | II-37 |
| B-118 | I-3 | II-38 | | B-158 | I-4 | II-38 |
| B-119 | I-3 | II-39 | | B-159 | I-4 | II-39 |
| B-120 | I-3 | II-40 | | B-160 | I-4 | II-40 |
| B-121 | I-4 | II-1 | | B-161 | I-5 | II-1 |
| B-122 | I-4 | II-2 | | B-162 | I-5 | II-2 |
| B-123 | I-4 | II-3 | | B-163 | I-5 | II-3 |
| B-124 | I-4 | II-4 | | B-164 | I-5 | II-4 |
| B-125 | I-4 | II-5 | | B-165 | I-5 | II-5 |
| B-126 | I-4 | II-6 | | B-166 | I-5 | II-6 |
| B-127 | I-4 | II-7 | | B-167 | I-5 | II-7 |
| B-128 | I-4 | II-8 | | B-168 | I-5 | II-8 |
| B-129 | I-4 | II-9 | | B-169 | I-5 | II-9 |
| B-130 | I-4 | II-10 | | B-170 | I-5 | II-10 |
| B-131 | I-4 | II-11 | | B-171 | I-5 | II-11 |
| B-132 | I-4 | II-12 | | B-172 | I-5 | II-12 |
| B-133 | I-4 | II-13 | | B-173 | I-5 | II-13 |
| B-134 | I-4 | II-14 | | B-174 | I-5 | II-14 |
| B-135 | I-4 | II-15 | | B-175 | I-5 | II-15 |
| B-136 | I-4 | II-16 | | B-176 | I-5 | II-16 |
| B-177 | I-5 | II-17 | | B-209 | I-6 | II-9 |
| B-178 | I-5 | II-18 | | B-210 | I-6 | II-10 |
| B-179 | I-5 | II-19 | | B-211 | I-6 | 11-11 |
| B-180 | I-5 | II-20 | | B-212 | I-6 | II-12 |
| B-181 | I-5 | II-21 | | B-213 | I-6 | II-13 |
| B-182 | I-5 | II-22 | | B-214 | I-6 | II-14 |
| B-183 | I-5 | II-23 | | B-215 | I-6 | II-15 |
| B-184 | I-5 | II-24 | | B-216 | I-6 | II-16 |
| B-185 | I-5 | II-25 | | B-217 | I-6 | II-17 |
| B-186 | I-5 | II-26 | | B-218 | I-6 | II-18 |
| B-187 | I-5 | II-27 | | B-219 | I-6 | II-19 |
| B-188 | I-5 | II-28 | | B-220 | I-6 | II-20 |
| B-189 | I-5 | II-29 | | B-221 | I-6 | II-21 |
| B-190 | I-5 | II-30 | | B-222 | I-6 | II-22 |
| B-191 | I-5 | II-31 | | B-223 | I-6 | II-23 |
| B-192 | I-5 | II-32 | | B-224 | I-6 | II-24 |

(continued)

| Mixture | 1 | 2 | | Mixture | 1 | 2 |
|---|---|---|---|---|---|---|
| B-193 | I-5 | II-33 | | B-225 | I-6 | II-25 |
| B-194 | I-5 | II-34 | | B-226 | I-6 | II-26 |
| B-195 | I-5 | II-35 | | B-227 | I-6 | II-27 |
| B-196 | I-5 | II-36 | | B-228 | I-6 | II-28 |
| B-197 | I-5 | II-37 | | B-229 | I-6 | II-29 |
| B-198 | I-5 | II-38 | | B-230 | I-6 | II-30 |
| B-199 | I-5 | II-39 | | B-231 | I-6 | II-31 |
| B-200 | I-5 | II-40 | | B-232 | I-6 | II-32 |
| B-201 | I-6 | II-1 | | B-233 | I-6 | II-33 |
| B-202 | I-6 | II-2 | | B-234 | I-6 | II-34 |
| B-203 | I-6 | II-3 | | B-235 | I-6 | II-35 |
| B-204 | I-6 | II-4 | | B-236 | I-6 | II-36 |
| B-205 | I-6 | II-5 | | B-237 | I-6 | II-37 |
| B-206 | I-6 | II-6 | | B-238 | I-6 | II-38 |
| B-207 | I-6 | II-7 | | B-239 | I-6 | II-39 |
| B-208 | I-6 | II-8 | | B-240 | I-6 | II-40 |

Further preferred components 2 are compounds II selected from the group of the growth regulators M), in particular selected from the following compounds:

II-41 mepiquat chloride

II-42 chlormequat chloride

II-43 trinexapac-ethyl

II-44 prohexadione-calcium

Further preferred mixtures are the mixtures of Table B1, where each row corresponds to one aspect of the mixtures according to the invention. According to a specific aspect, these are binary mixtures comprising, as active compounds, in each case only these two components.

Table B1 Mixtures comprising a component 1 selected from compounds of the formula I and a component 2 selected from group M)

| | Component | | | | Component | |
|---|---|---|---|---|---|---|
| Mixture | 1 | 2 | | Mixture | 1 | 2 |
| B1-1 | I-1 | II-41 | | B1-13 | I-4 | II-41 |
| B1-2 | I-1 | II-42 | | B1-14 | I-4 | II-42 |
| B1-3 | I-1 | II-43 | | B1-15 | I-4 | II-43 |
| B1-4 | I-1 | II-44 | | B1-16 | I-4 | II-44 |
| B1-5 | I-2 | II-41 | | B1-17 | I-5 | II-41 |
| B1-6 | I-2 | II-42 | | B1-18 | I-5 | II-42 |
| B1-7 | I-2 | II-43 | | B1-19 | I-5 | II-43 |

(continued)

| | Component | | | Component | |
|---|---|---|---|---|---|
| Mixture | 1 | 2 | Mixture | 1 | 2 |
| B1-8 | I-2 | II-44 | B1-20 | I-5 | II-44 |
| B1-9 | I-3 | II-41 | B1-21 | I-6 | II-41 |
| B1-10 | I-3 | II-42 | B1-22 | I-6 | II-42 |
| B1-11 | I-3 | II-43 | B1-23 | I-6 | II-43 |
| B1-12 | I-3 | II-44 | B1-24 | I-6 | II-44 |

According to a further embodiment, particularly preferred components 2 are compounds I I selected from the group O), in particular selected from the following compounds:

II-1a acephate

II-2 chlorpyrifos

II-3 dimethoate

II-4a methamidophos

II-5a terbufos

II-6a aldicarb

II-7a carbofuran

II-8a bifenthrin

II-9a alpha-cypermethrin

II-10a deltamethrin

II-11a lambda-cyhalothrin

II-12a betacyfluthrin

II-13a zetacypermethrin

II-14a esfenvalerate

II-15a pirimicarb

II-16a tefluthrin

II-17a spirotetramat

II-18a endosulfan

II-19a abamectin

II-20a spinosad

II-21a spinetoram

II-22a hydramethylnon

II-23a fenbutatin oxide

II-24a chlorfenapyr

II-25a cyazypyr

II-26a cyflumetofen

II-27a flubendiamide

II-28a indoxacarb

II-29a metaflumizon

II-30a fipronil

II-31a [(3S,4R,4aR,6S,6aS,1 2R,12aS,12bS)-3- (cyclopropanecarbony loxy)-6,12-dihydroxy-4,6a,12b-trimethyl-11-oxo-9-(pyridin-3-yl)-1,2,3,4,4a,5,6,6a,12a, 12b-decahydro-11H,12H-benzo[f]pyrano[4,3-b]chromen-4-yl]methyl cyclopropanecarboxyl ate.

Particularly preferred mixtures are the mixtures of Table B2, where each row corresponds to one aspect of the mixtures according to the invention. According to a specific aspect, these are binary mixtures comprising, as active compounds, in each case only these two components.

Table B2: Mixtures comprising a component 1 selected from preferred compounds of the formula I and a component 2 selected from group O)

| | Component | | | | Component | |
|---|---|---|---|---|---|---|
| Mixture | 1 | 2 | | Mixture | 1 | 2 |
| B2-1 | I-1 | II-1a | | B2-33 | I-2 | II-2a |
| B2-2 | I-1 | II-2a | | B2-34 | I-2 | II-3a |
| B2-3 | I-1 | II-3a | | B2-35 | I-2 | II-4a |
| B2-4 | I-1 | II-4a | | B2-36 | I-2 | II-5a |
| B2-5 | I-1 | II-5a | | B2-37 | I-2 | II-6a |
| B2-6 | I-1 | II-6a | | B2-38 | I-2 | II-7a |
| B2-7 | I-1 | II-7a | | B2-39 | I-2 | II-8a |
| B2-8 | I-1 | II-8a | | B2-40 | I-2 | II-9a |
| B2-9 | I-1 | II-9a | | B2-41 | I-2 | II-10a |
| B2-10 | I-1 | II-10a | | B2-42 | I-2 | II-11a |
| B2-11 | I-1 | II-11a | | B2-43 | I-2 | II-12a |
| B2-12 | I-1 | II-12a | | B2-44 | I-2 | II-13a |
| B2-13 | I-1 | II-13a | | B2-45 | I-2 | II-14a |
| B2-14 | I-1 | II-14a | | B2-46 | I-2 | II-15a |
| B2-15 | I-1 | II-15a | | B2-47 | I-2 | II-16a |
| B2-16 | I-1 | II-16a | | B2-48 | I-2 | II-17a |
| B2-17 | I-1 | II-17a | | B2-49 | I-2 | II-18a |
| B2-18 | I-1 | II-18a | | B2-50 | I-2 | II-19a |

(continued)

| | Component | | | Component | |
|---|---|---|---|---|---|
| Mixture | 1 | 2 | Mixture | 1 | 2 |
| B2-19 | I-1 | II-19a | B2-51 | I-2 | II-20a |
| B2-20 | I-1 | II-20a | B2-52 | I-2 | II-21a |
| B2-21 | I-1 | II-21a | B2-53 | I-2 | II-22a |
| B2-22 | I-1 | II-22a | B2-54 | I-2 | II-23a |
| B2-23 | I-1 | II-23a | B2-55 | I-2 | II-24a |
| B2-24 | I-1 | II-24a | B2-56 | I-2 | II-25a |
| B2-25 | I-1 | II-25a | B2-57 | I-2 | II-26a |
| B2-26 | I-1 | II-26a | B2-58 | I-2 | II-27a |
| B2-27 | I-1 | II-27a | B2-59 | I-2 | II-28a |
| B2-28 | I-1 | II-28a | B2-60 | I-2 | II-29a |
| B2-29 | I-1 | II-29a | B2-61 | I-2 | II-30a |
| B2-30 | I-1 | II-30a | B2-62 | I-2 | II-31a |
| B2-31 | I-1 | II-31a | B2-63 | I-3 | II-1a |
| B2-32 | I-2 | II-1a | B2-64 | I-3 | II-2a |
| | | | B2-65 | I-3 | II-3a |
| B2-66 | I-3 | II-4a | B2-116 | I-4 | II-23a |
| B2-67 | I-3 | II-5a | B2-117 | I-4 | II-24a |
| B2-68 | I-3 | II-6a | B2-118 | I-4 | II-25a |
| B2-69 | I-3 | II-7a | B2-119 | I-4 | II-26a |
| B2-70 | I-3 | II-8a | B2-120 | I-4 | II-27a |
| B2-71 | I-3 | II-9a | B2-121 | I-4 | II-28a |
| B2-72 | I-3 | II-10a | B2-122 | I-4 | II-29a |
| B2-73 | I-3 | II-11a | B2-123 | I-4 | II-30a |
| B2-74 | I-3 | II-12a | B2-124 | I-4 | II-31a |
| B2-75 | I-3 | II-13a | B2-125 | I-5 | II-1a |
| B2-76 | I-3 | II-14a | B2-126 | I-5 | II-2a |
| B2-77 | I-3 | II-15a | B2-127 | I-5 | II-3a |
| B2-78 | I-3 | II-16a | B2-128 | I-5 | II-4a |
| B2-79 | I-3 | II-17a | B2-129 | I-5 | II-5a |
| B2-80 | I-3 | II-18a | B2-130 | I-5 | II-6a |
| B2-81 | I-3 | II-19a | B2-131 | I-5 | II-7a |
| B2-82 | I-3 | II-20a | B2-132 | I-5 | II-8a |
| B2-83 | I-3 | II-21a | B2-133 | I-5 | II-9a |
| B2-84 | I-3 | II-22a | B2-134 | I-5 | II-10a |
| B2-85 | I-3 | II-23a | B2-135 | I-5 | II-11a |
| B2-86 | I-3 | II-24a | B2-136 | I-5 | II-12a |
| B2-87 | I-3 | II-25a | B2-137 | I-5 | II-13a |

(continued)

| | Component | | | Component | |
|---|---|---|---|---|---|
| Mixture | 1 | 2 | Mixture | 1 | 2 |
| B2-88 | I-3 | II-26a | B2-138 | I-5 | II-14a |
| B2-89 | I-3 | II-27a | B2-139 | I-5 | II-15a |
| B2-90 | I-3 | II-28a | B2-140 | I-5 | II-16a |
| B2-91 | I-3 | II-29a | B2-141 | I-5 | II-17a |
| B2-92 | I-3 | II-30a | B2-142 | I-5 | II-18a |
| B2-93 | I-3 | II-31a | B2-143 | I-5 | II-19a |
| B2-94 | I-4 | II-1a | B2-144 | I-5 | II-20a |
| B2-95 | I-4 | II-2a | B2-145 | I-5 | II-21a |
| B2-96 | I-4 | II-3a | B2-146 | I-5 | II-22a |
| B2-97 | I-4 | II-4a | B2-147 | I-5 | II-23a |
| B2-98 | I-4 | II-5a | B2-148 | I-5 | II-24a |
| B2-99 | I-4 | II-6a | B2-149 | I-5 | II-25a |
| B2-100 | I-4 | II-7a | B2-150 | I-5 | II-26a |
| B2-101 | I-4 | II-8a | B2-151 | I-5 | II-27a |
| B2-102 | I-4 | II-9a | B2-152 | I-5 | II-28a |
| B2-103 | I-4 | II-10a | B2-153 | I-5 | II-29a |
| B2-104 | I-4 | II-11a | B2-154 | I-5 | II-30a |
| B2-105 | I-4 | II-12a | B2-155 | I-5 | II-31a |
| B2-106 | I-4 | II-13a | B2-156 | I-6 | II-1a |
| B2-107 | I-4 | II-14a | B2-157 | I-6 | II-2a |
| B2-108 | I-4 | II-15a | B2-158 | I-6 | II-3a |
| B2-109 | I-4 | II-16a | B2-159 | I-6 | II-4a |
| B2-110 | I-4 | II-17a | B2-160 | I-6 | II-5a |
| B2-111 | I-4 | II-18a | B2-161 | I-6 | II-6a |
| B2-112 | I-4 | II-19a | B2-162 | I-6 | II-7a |
| B2-113 | I-4 | II-20a | B2-163 | I-6 | II-8a |
| B2-114 | I-4 | II-21a | B2-164 | I-6 | II-9a |
| B2-115 | I-4 | II-22a | B2-165 | I-6 | II-10a |
| B2-166 | I-6 | II-11a | B2-177 | I-6 | II-22a |
| B2-167 | I-6 | II-12a | B2-178 | I-6 | II-23a |
| B2-168 | I-6 | II-13a | B2-179 | I-6 | II-24a |
| B2-169 | I-6 | II-14a | B2-180 | I-6 | II-25a |
| B2-170 | I-6 | II-15a | B2-181 | I-6 | II-26a |
| B2-171 | I-6 | II-16a | B2-182 | I-6 | II-27a |
| B2-172 | I-6 | II-17a | B2-183 | I-6 | II-28a |
| B2-173 | I-6 | II-18a | B2-184 | I-6 | II-29a |
| B2-174 | I-6 | II-19a | B2-185 | I-6 | II-30a |

(continued)

| Mixture | Component 1 | Component 2 | Mixture | Component 1 | Component 2 |
|---|---|---|---|---|---|
| B2-175 | I-6 | II-20a | B2-186 | I-6 | II-31a |
| B2-176 | I-6 | II-21a | | | |

According to a further embodiment, particularly preferred components 2 are compounds II selected from the group of the following compounds:

II-32a clothianidin

II-33a dinotefuran

II-34a imidacloprid

II-35a thiamethoxam

II-36a nitenpyram

II-37a acetamiprid

II-38a thiacloprid

Particularly preferred mixtures are the mixtures of Table B3, where each row corresponds to one aspect of the mixtures according to the invention. According to a specific aspect, these are binary mixtures comprising, as active compounds, in each case only these two components.

Table B3: Mixtures comprising a component 1 selected from preferred compounds of the formula I and a component 2 selected from group O)

| Mixture | Component 1 | Component 2 | Mixture | Component 1 | Component 2 |
|---|---|---|---|---|---|
| B3-1 | I-1 | II-32a | B3-13 | I-2 | II-37a |
| B3-2 | I-1 | II-33a | B3-14 | I-2 | II-38a |
| B3-3 | I-1 | II-34a | B3-15 | I-3 | II-32a |
| B3-4 | I-1 | II-35a | B3-16 | I-3 | II-33a |
| B3-5 | I-1 | II-36a | B3-17 | I-3 | II-34a |
| B3-6 | I-1 | II-37a | B3-18 | I-3 | II-35a |
| B3-7 | I-1 | II-38a | B3-19 | I-3 | II-36a |
| B3-8 | I-2 | II-32a | B3-20 | I-3 | II-37a |
| B3-9 | I-2 | II-33a | B3-21 | I-3 | II-38a |
| B3-10 | I-2 | II-34a | B3-22 | I-4 | II-32a |
| B3-11 | I-2 | II-35a | B3-23 | I-4 | II-33a |
| B3-12 | I-2 | II-36a | B3-24 | I-4 | II-34a |
| B3-25 | I-4 | II-35a | B3-34 | I-5 | II-37a |
| B3-26 | I-4 | II-36a | B3-35 | I-5 | II-38a |
| B3-27 | I-4 | II-37a | B3-36 | I-6 | II-32a |
| B3-28 | I-4 | II-38a | B3-37 | I-6 | II-33a |

(continued)

| | Component | | | | Component | |
|---|---|---|---|---|---|---|
| Mixture | 1 | 2 | | Mixture | 1 | 2 |
| B3-29 | I-5 | II-32a | | B3-38 | I-6 | II-34a |
| B3-30 | I-5 | II-33a | | B3-39 | I-6 | II-35a |
| B3-31 | I-5 | II-34a | | B3-40 | I-6 | II-36a |
| B3-32 | I-5 | II-35a | | B3-41 | I-6 | II-37a |
| B3-33 | I-5 | II-36a | | B3-42 | I-6 | II-38a |

According to a further embodiment, particularly preferred components 2 are compounds II selected from the active compounds of group N). With special preference, the active compounds according to this embodiment are selected from the group of the following compounds of group N):

II-1b glyphosate
II-2b imazamox

Particularly preferred mixtures are the mixtures of Table B4, where each row corresponds to one aspect of the mixtures according to the invention. According to a specific aspect, these are binary mixtures comprising, as active compounds, in each case only these two components.

Table B4: Mixtures comprising a component 1 selected from preferred compounds of the formula I and a component 2 selected from group N)

| | Component | | | | Component | |
|---|---|---|---|---|---|---|
| Mixture | 1 | 2 | | Mixture | 1 | 2 |
| B4-1 | I-1 | II-1b | | B4-7 | I-4 | II-1b |
| B4-2 | I-1 | II-2b | | B4-8 | I-4 | II-2b |
| B4-3 | I-2 | II-1b | | B4-9 | I-5 | II-1b |
| B4-4 | I-2 | II-2b | | B4-10 | I-5 | II-2b |
| B4-5 | I-3 | II-1b | | B4-11 | I-6 | II-1b |
| B4-6 | I-3 | II-2b | | B4-12 | I-6 | II-2b |

In a preferred embodiment, the invention relates to fungicidal mixtures, comprising a component 1 and a component 2 (compound II) and a further component 3 (further compound II), with the proviso that component 2 and component 3 are not identical. According to a specific aspect, these are ternary mixtures comprising, as active compounds, in each case only these three components.

Preferred mixtures are the mixtures of Table T, where each row corresponds to one aspect of the mixtures according to the invention. According to a specific aspect, these are ternary mixtures comprising, as active compounds, in each case only these three components.

A further aspect of the invention relates to the compositions T-1 to T-348 listed in Table T, where in each case one row of Table T corresponds to an agrochemical composition comprising one of the mixtures comprising two components, that are individualized in the present description (referred to as "Mixture B") of the compounds of the formula I and the compounds II (component 1 s and 2) and the respective further active compound from groups A) to O) (component 3) stated in the row in question. In the compositions described, the active compounds are in each case preferably present in the weight ratios as detailled herein, according to one aspect in particular in synergistically effective amounts.

Table T: Mixtures comprising an individualized mixture of component 1 and component 2 (referred as to Mixture B) and also a component 3 selected from groups A to O:

| Row | Components 1 and 2 | Component 3 |
|---|---|---|
| T-1 | an individualized mixture B | azoxystrobin |
| T-2 | an individualized mixture B | dimoxystrobin |
| T-3 | an individualized mixture B | enestroburin |
| T-4 | an individualized mixture B | fluoxastrobin |
| T-5 | an individualized mixture B | kresoxim-methyl |
| T-6 | an individualized mixture B | metominostrobin |
| T-7 | an individualized mixture B | orysastrobin |
| T-8 | an individualized mixture B | picoxystrobin |
| T-9 | an individualized mixture B | pyraclostrobin |
| T-10 | an individualized mixture B | pyribencarb |
| T-11 | an individualized mixture B | trifloxystrobin |
| T-12 | an individualized mixture B | 2-(2-(6-(3-chloro-2-methylphenoxy)-5-fluoropyrimidin-4-yloxy)phenyl)-2-methoxyimino-N-methylacetamide |
| T-13 | an individualized mixture B | methyl 2-(o-((2,5-dimethylphenyloxymethylene) phenyl)-3-methoxyacrylate |
| T-14 | an individualized mixture B | methyl 3-methoxy-2-(2-(N-(4-methoxyphenyl) cyclopropanecarboximidoylsulf anylmethyl)phenyl)acrylate |
| T-15 | an individualized mixture B | 2-(2-(3-(2,6-dichlorophenyl)-1-methylallylideneaminooxymethyl) phen yl)-2-methoxyimino-N-methylacetamide |
| T-16 | an individualized mixture B | benalaxyl |
| T-17 | an individualized mixture B | benalaxyl-M |
| T-18 | an individualized mixture B | benodanil |
| T-19 | an individualized mixture B | bixafen |
| T-20 | an individualized mixture B | boscalid |
| T-21 | an individualized mixture B | carboxin |
| T-22 | an individualized mixture B | fenfuram |
| T-23 | an individualized mixture B | fenhexamid |
| T-24 | an individualized mixture B | flutolanil |
| T-25 | an individualized mixture B | furametpyr |
| T-26 | an individualized mixture B | isopyrazam |
| T-27 | an individualized mixture B | isotianil |
| T-28 | an individualized mixture B | kiralaxyl |
| T-29 | an individualized mixture B | mepronil |

(continued)

| Row | Components 1 and 2 | Component 3 |
|---|---|---|
| T-30 | an individualized mixture B | metalaxyl |
| T-31 | an individualized mixture B | metalaxyl-M |
| T-32 | an individualized mixture B | ofurace |
| T-33 | an individualized mixture B | oxadixyl |
| T-34 | an individualized mixture B | oxycarboxin |
| T-35 | an individualized mixture B | penflufen |
| T-36 | an individualized mixture B | penthiopyrad |
| T-37 | an individualized mixture B | sedaxane |
| T-38 | an individualized mixture B | tecloftalam |
| T-39 | an individualized mixture B | thifluzamide |
| T-40 | an individualized mixture B | tiadinil |
| T-41 | an individualized mixture B | 2-amino-4-methylthiazole-5-carboxanilide |
| T-42 | an individualized mixture B | 2-chloro-N-(1,1,3-trimethylindan-4-yl)nicotinamide |
| T-43 | an individualized mixture B | N-(3',4',5'-trifluorobiphenyl-2-yl)-3-difluoromethyl-1-methyl-1H-pyrazole-4-carboxamide |
| T-44 | an individualized mixture B | N-(4'-trifluoromethylthiobiphenyl-2-yl)-3-difluoromethyl-1-methyl-1H-pyrazole-4-carboxamide |
| T-45 | an individualized mixture B | N-(2-(1,3-dimethylbutyl)phenyl)-1,3-dimethyl-5-fluoro-1H-pyrazole-4-carboxamide |
| T-46 | an individualized mixture B | N-(2-(1,3,3-trimethylbutyl)phenyl)-1,3-dimethyl-5-fluoro-1H-pyrazole-4-carboxamide |
| T-47 | an individualized mixture B | dimethomorph |
| T-48 | an individualized mixture B | flumorph |
| T-49 | an individualized mixture B | pyrimorph |
| T-50 | an individualized mixture B | flumetover |
| T-51 | an individualized mixture B | fluopicolide |
| T-52 | an individualized mixture B | fluopyram |
| T-53 | an individualized mixture B | zoxamide |
| T-54 | an individualized mixture B | N-(3-ethyl-3,5,5-trimethylcyclohexyl)-3-formylamino-2-hydroxybenzamide |
| T-55 | an individualized mixture B | carpropamid |
| T-56 | an individualized mixture B | diclocymet |
| T-57 | an individualized mixture B | mandipropamid |
| T-58 | an individualized mixture B | oxytetracyclin |

(continued)

| Row | Components 1 and 2 | Component 3 |
|---|---|---|
| T-59 | an individualized mixture B | silthiofam |
| T-60 | an individualized mixture B | N-(6-methoxypyridin-3-yl) cyclopropanecarboxamide |
| T-61 | an individualized mixture B | azaconazole |
| T-62 | an individualized mixture B | bitertanol |
| T-63 | an individualized mixture B | bromuconazole |
| T-64 | an individualized mixture B | cyproconazole |
| T-65 | an individualized mixture B | difenoconazole |
| T-66 | an individualized mixture B | diniconazole |
| T-67 | an individualized mixture B | diniconazole-M |
| T-68 | an individualized mixture B | epoxiconazole |
| T-69 | an individualized mixture B | fenbuconazole |
| T-70 | an individualized mixture B | fluquinconazole |
| T-71 | an individualized mixture B | flusilazole |
| T-72 | an individualized mixture B | flutriafol |
| T-73 | an individualized mixture B | hexaconazole |
| T-74 | an individualized mixture B | imibenconazole |
| T-75 | an individualized mixture B | ipconazole |
| T-76 | an individualized mixture B | metconazole |
| T-77 | an individualized mixture B | myclobutanil |
| T-78 | an individualized mixture B | oxpoconazole |
| T-79 | an individualized mixture B | paclobutrazole |
| T-80 | an individualized mixture B | penconazole |
| T-81 | an individualized mixture B | propiconazole |
| T-82 | an individualized mixture B | prothioconazole |
| T-83 | an individualized mixture B | simeconazole |
| T-84 | an individualized mixture B | tebuconazole |
| T-85 | an individualized mixture B | tetraconazole |
| T-86 | an individualized mixture B | triadimefon |
| T-87 | an individualized mixture B | triadimenol |
| T-88 | an individualized mixture B | triticonazole |
| T-89 | an individualized mixture B | uniconazole |
| T-90 | an individualized mixture B | 1-(4-chlorophenyl)-2-([1,2,4]thazol-1-yl)cycloheptanol |
| T-91 | an individualized mixture B | cyazofamid |
| T-92 | an individualized mixture B | imazalil |
| T-93 | an individualized mixture B | imazalil-sulfate |
| T-94 | an individualized mixture B | pefurazoate |

(continued)

| Row | Components 1 and 2 | Component 3 |
|---|---|---|
| T-95 | an individualized mixture B | prochloraz |
| T-96 | an individualized mixture B | triflumizole |
| T-97 | an individualized mixture B | benomyl |
| T-98 | an individualized mixture B | carbendazim |
| T-99 | an individualized mixture B | fuberidazole |
| T-100 | an individualized mixture B | thiabendazole |
| T-101 | an individualized mixture B | ethaboxam |
| T-102 | an individualized mixture B | etridiazole |
| T-103 | an individualized mixture B | hymexazole |
| T-104 | an individualized mixture B | 2-(4-chlorophenyl)-N-[4-(3,4-dimethoxyphenyl)isoxazol-5-yl]-2-prop-2-ynyloxyacetamide |
| T-105 | an individualized mixture B | fluazinam |
| T-106 | an individualized mixture B | pyrifenox |
| T-107 | an individualized mixture B | 3-[5-(4-chlorophenyl)-2,3-dimethylisoxazolidin-3-yl]pyridine |
| T-108 | an individualized mixture B | 3-[5-(4-methylphenyl)-2,3-dimethylisoxazolidin-3-yl]pyridine |
| T-109 | an individualized mixture B | 2,3,5,6-tetrachloro-4-methanesulfonylpyridine |
| T-110 | an individualized mixture B | 3,4,5-trichloropyridine-2,6-dicarbonitrile |
| T-111 | an individualized mixture B | N-(1-(5-bromo-3-chloropyridin-2-yl) ethyl)-2,4-dichloronicotinamide |
| T-112 | an individualized mixture B | N-((5-bromo-3-chloropyridin-2-yl) methyl)-2,4-dichloronicotinamide |
| T-113 | an individualized mixture B | bupirimate |
| T-114 | an individualized mixture B | cyprodinil |
| T-115 | an individualized mixture B | diflumetorim |
| T-116 | an individualized mixture B | fenarimol |
| T-117 | an individualized mixture B | ferimzone |
| T-118 | an individualized mixture B | mepanipyrim |
| T-119 | an individualized mixture B | nitrapyrin |
| T-120 | an individualized mixture B | nuarimol |
| T-121 | an individualized mixture B | pyrimethanil |
| T-122 | an individualized mixture B | triforine |
| T-123 | an individualized mixture B | fenpiclonil |
| T-124 | an individualized mixture B | fludioxonil |
| T-125 | an individualized mixture B | aldimorph |
| T-126 | an individualized mixture B | dodemorph |

(continued)

| Row | Components 1 and 2 | Component 3 |
|---|---|---|
| T-127 | an individualized mixture B | dodemorph acetate |
| T-128 | an individualized mixture B | fenpropimorph |
| T-129 | an individualized mixture B | tridemorph |
| T-130 | an individualized mixture B | fenpropidin |
| T-131 | an individualized mixture B | fluoroimide |
| T-132 | an individualized mixture B | iprodione |
| T-133 | an individualized mixture B | procymidone |
| T-134 | an individualized mixture B | vinclozolin |
| T-135 | an individualized mixture B | famoxadone |
| T-136 | an individualized mixture B | fenamidone |
| T-137 | an individualized mixture B | flutianil |
| T-138 | an individualized mixture B | octhilinone |
| T-139 | an individualized mixture B | probenazole |
| T-140 | an individualized mixture B | S-allyl 5-amino-2-isopropyl-4-orthotolylpyrazol-3-one-1-thiocarboxylate |
| T-141 | an individualized mixture B | acibenzolar-S-methyl |
| T-142 | an individualized mixture B | amisulbrom |
| T-143 | an individualized mixture B | anilazine |
| T-144 | an individualized mixture B | blasticidin-S |
| T-145 | an individualized mixture B | captafol |
| T-146 | an individualized mixture B | captan |
| T-147 | an individualized mixture B | chinomethionat |
| T-148 | an individualized mixture B | dazomet |
| T-149 | an individualized mixture B | debacarb |
| T-150 | an individualized mixture B | diclomezine |
| T-151 | an individualized mixture B | difenzoquat |
| T-152 | an individualized mixture B | difenzoquat methylsulfate |
| T-153 | an individualized mixture B | fenoxanil |
| T-154 | an individualized mixture B | folpet |
| T-155 | an individualized mixture B | oxolinic acid |
| T-156 | an individualized mixture B | piperalin |
| T-157 | an individualized mixture B | proquinazid |
| T-158 | an individualized mixture B | pyroquilon |
| T-159 | an individualized mixture B | quinoxyfen |
| T-160 | an individualized mixture B | triazoxide |
| T-161 | an individualized mixture B | tricyclazole |
| T-162 | an individualized mixture B | 2-butoxy-6-iodo-3-propylchromen-4-one |

(continued)

| Row | Components 1 and 2 | Component 3 |
|---|---|---|
| T-163 | an individualized mixture B | 5-chloro-1-(4,6-dimethoxypyrimidin-2-yl)-2-methyl-1H-benzimidazole |
| T-164 | an individualized mixture B | 5-chloro-7-(4-methylpiperidin-1-yl)-6-(2,4,6-trifluorophenyl)-[1,2,4] triazolo[1,5-a]pyrimidine |
| T-165 | an individualized mixture B | 5-ethyl-6-octyl-[1,2,4]triazolo[1,5-a] pyrimidin-7-ylamine |
| T-166 | an individualized mixture B | ferbam |
| T-167 | an individualized mixture B | mancozeb |
| T-168 | an individualized mixture B | maneb |
| T-169 | an individualized mixture B | metam |
| T-170 | an individualized mixture B | methasulfocarb |
| T-171 | an individualized mixture B | metiram |
| T-172 | an individualized mixture B | propineb |
| T-173 | an individualized mixture B | thiram |
| T-174 | an individualized mixture B | zineb |
| T-175 | an individualized mixture B | ziram |
| T-176 | an individualized mixture B | diethofencarb |
| T-177 | an individualized mixture B | benthiavalicarb |
| T-178 | an individualized mixture B | iprovalicarb |
| T-179 | an individualized mixture B | propamocarb |
| T-180 | an individualized mixture B | propamocarb hydrochloride |
| T-181 | an individualized mixture B | valiphenal |
| T-182 | an individualized mixture B | 4-fluorophenyl N-(1-(1-(4-cyanophenyl)ethanesulfonyl)but-2-yl)carbamate |
| T-183 | an individualized mixture B | dodine |
| T-184 | an individualized mixture B | dodine free base |
| T-185 | an individualized mixture B | guazatine |
| T-186 | an individualized mixture B | guazatine acetate |
| T-187 | an individualized mixture B | iminoctadine |
| T-188 | an individualized mixture B | iminoctadine triacetate |
| T-189 | an individualized mixture B | iminoctadine tris(albesilate) |
| T-190 | an individualized mixture B | kasugamycin |
| T-191 | an individualized mixture B | kasugamycin hydrochloride hydrate |
| T-192 | an individualized mixture B | polyoxin |
| T-193 | an individualized mixture B | streptomycin |
| T-194 | an individualized mixture B | validamycin A |
| T-195 | an individualized mixture B | binapacryl |
| T-196 | an individualized mixture B | dicloran |

(continued)

| Row | Components 1 and 2 | Component 3 |
|---|---|---|
| T-197 | an individualized mixture B | dinobuton |
| T-198 | an individualized mixture B | dinocap |
| T-199 | an individualized mixture B | nitrothal-isopropyl |
| T-200 | an individualized mixture B | tecnazen |
| T-201 | an individualized mixture B | fentin salts |
| T-202 | an individualized mixture B | dithianon |
| T-203 | an individualized mixture B | isoprothiolane |
| T-204 | an individualized mixture B | edifenphos |
| T-205 | an individualized mixture B | fosetyl, fosetyl aluminum |
| T-206 | an individualized mixture B | iprobenfos |
| T-207 | an individualized mixture B | phosphorous acid and derivatives |
| T-208 | an individualized mixture B | pyrazophos |
| T-209 | an individualized mixture B | tolclofos-methyl |
| T-210 | an individualized mixture B | chlorthalonil |
| T-211 | an individualized mixture B | dichlofluanid |
| T-212 | an individualized mixture B | dichlorophene |
| T-213 | an individualized mixture B | flusulfamide |
| T-214 | an individualized mixture B | hexachlorobenzene |
| T-215 | an individualized mixture B | pencycuron |
| T-216 | an individualized mixture B | pentachlorophenol and salts |
| T-217 | an individualized mixture B | phthalide |
| T-218 | an individualized mixture B | quintozene |
| T-219 | an individualized mixture B | thiophanate methyl |
| T-220 | an individualized mixture B | tolylfluanid |
| T-221 | an individualized mixture B | N-(4-chloro-2-nitrophenyl)-N-ethyl-4-methylbenzenesulfonamide |
| T-222 | an individualized mixture B | Bordeaux mixture |
| T-223 | an individualized mixture B | copper acetate |
| T-224 | an individualized mixture B | copper hydroxide |
| T-225 | an individualized mixture B | copper oxychloride |
| T-226 | an individualized mixture B | basic copper sulfate |
| T-227 | an individualized mixture B | sulfur |
| T-228 | an individualized mixture B | biphenyl |
| T-229 | an individualized mixture B | bronopol |
| T-230 | an individualized mixture B | cyflufenamid |
| T-231 | an individualized mixture B | cymoxanil |
| T-232 | an individualized mixture B | diphenylamine |
| T-233 | an individualized mixture B | metrafenone |

(continued)

| Row | Components 1 and 2 | Component 3 |
|---|---|---|
| T-234 | an individualized mixture B | mildiomycin |
| T-235 | an individualized mixture B | oxine-copper |
| T-236 | an individualized mixture B | prohexadione-calcium |
| T-237 | an individualized mixture B | spiroxamine |
| T-238 | an individualized mixture B | tolylfluanid |
| T-239 | an individualized mixture B | N-(cyclopropylmethoxyimino-(6-difluoromethoxy-2,3-difluorophenyl) methyl)-2-phenylacetamide |
| T-240 | an individualized mixture B | N'-(4-(4-chloro-3-trifluoromethylphenoxy)-2,5-dimethylphenyl)-N-ethyl-N-methylformamidine |
| T-241 | an individualized mixture B | N'-(4-(4-fluoro-3-trifluoromethylphenoxy)-2,5-dimethylphenyl)-N-ethyl-N-methylformamidine |
| T-242 | an individualized mixture B | N'-(2-methyl-5-trifluoromethyl-4-(3-trimethylsilanylpropoxy)phenyl)-N-ethyl-N-methylformamidine |
| T-243 | an individualized mixture B | N'-(5-difluoromethyl-2-methyl-4-(3-trimethylsilanylpropoxy)phenyl)-N-ethyl-N-methylformamidine |
| T-244 | an individualized mixture B | methyl N-(1,2,3,4-tetrahydronaphthalen-1-yl)-2-{1-[2-(5-methyl-3-trifluoromethyl-pyrazol-1-yl)acetyl]piperidin-4-yl} thiazole-4-carboxamide |
| T-245 | an individualized mixture B | methyl (R)-N-(1,2,3,4-tetrahydronaphthalen-1-yl)-2-{1-[2-(5-methyl-3-trifluoromethyl-pyrazol-1-yl)acetyl]piperidin-4-yl} thiazole-4-carboxamide |
| T-246 | an individualized mixture B | 6-tert-butyl-8-fluoro-2,3-dimethylquinolin-4-yl acetate |
| T-247 | an individualized mixture B | 6-tert-butyl-8-fluoro-2,3-dimethylquinolin-4-yl methoxyacetate |
| T-248 | an individualized mixture B | *N*-methyl-2-{1-[(5-methyl-3-trifluoromethyl-1H-pyrazol-1-yl) acetyl]piperidin-4-yl}-*N*-[(1 R)-1,2,3,4-tetrahydronaphthalen-1-yl]-4-thiazolecarboxamide |
| T-249 | an individualized mixture B | carbaryl |
| T-250 | an individualized mixture B | carbofuran |
| T-251 | an individualized mixture B | carbosulfan |
| T-252 | an individualized mixture B | methomylthiodicarb |

(continued)

| Row | Components 1 and 2 | Component 3 |
|---|---|---|
| T-253 | an individualized mixture B | bifenthrin |
| T-254 | an individualized mixture B | cyfluthrin |
| T-255 | an individualized mixture B | cypermethrin |
| T-256 | an individualized mixture B | alpha-cypermethrin |
| T-257 | an individualized mixture B | zeta-cypermethrin |
| T-258 | an individualized mixture B | deltamethrin |
| T-259 | an individualized mixture B | esfenvalerate |
| T-260 | an individualized mixture B | lambda-cyhalothrin |
| T-261 | an individualized mixture B | permethrin |
| T-262 | an individualized mixture B | tefluthrin |
| T-263 | an individualized mixture B | diflubenzuron |
| T-264 | an individualized mixture B | flufenoxuron |
| T-265 | an individualized mixture B | lufenuron |
| T-266 | an individualized mixture B | teflubenzuron |
| T-267 | an individualized mixture B | spirotetramate |
| T-268 | an individualized mixture B | clothianidin |
| T-269 | an individualized mixture B | dinotefuran |
| T-270 | an individualized mixture B | imidacloprid |
| T-271 | an individualized mixture B | thiamethoxam |
| T-272 | an individualized mixture B | acetamiprid |
| T-273 | an individualized mixture B | thiacloprid |
| T-274 | an individualized mixture B | endosulfan |
| T-275 | an individualized mixture B | fipronil |
| T-276 | an individualized mixture B | abamectin |
| T-277 | an individualized mixture B | emamectin |
| T-278 | an individualized mixture B | spinosad |
| T-279 | an individualized mixture B | spinetoram |
| T-280 | an individualized mixture B | hydramethylnon |
| T-281 | an individualized mixture B | chlorfenapyr |
| T-282 | an individualized mixture B | fenbutatin oxide |
| T-283 | an individualized mixture B | indoxacarb |
| T-284 | an individualized mixture B | metaflumizone |
| T-285 | an individualized mixture B | flonicamid |
| T-286 | an individualized mixture B | lubendiamid |
| T-287 | an individualized mixture B | chlorantraniliprol |
| T-288 | an individualized mixture B | cyazypyr (HGW86) |
| T-289 | an individualized mixture B | cyflumetofen |
| T-290 | an individualized mixture B | acetochlor |

(continued)

| Row | Components 1 and 2 | Component 3 |
|---|---|---|
| T-291 | an individualized mixture B | dimethenamid |
| T-292 | an individualized mixture B | metolachlor |
| T-293 | an individualized mixture B | metazachlor |
| T-294 | an individualized mixture B | glyphosate |
| T-295 | an individualized mixture B | glufosinate |
| T-296 | an individualized mixture B | sulfosate |
| T-297 | an individualized mixture B | clodinafop |
| T-298 | an individualized mixture B | fenoxaprop |
| T-299 | an individualized mixture B | fluazifop |
| T-300 | an individualized mixture B | haloxyfop |
| T-301 | an individualized mixture B | paraquat |
| T-302 | an individualized mixture B | phenmedipham |
| T-303 | an individualized mixture B | clethodim |
| T-304 | an individualized mixture B | cycloxydim |
| T-305 | an individualized mixture B | profoxydim |
| T-306 | an individualized mixture B | sethoxydim |
| T-307 | an individualized mixture B | tepraloxydim |
| T-308 | an individualized mixture B | pendimethalin |
| T-309 | an individualized mixture B | prodiamine |
| T-310 | an individualized mixture B | trifluralin |
| T-311 | an individualized mixture B | acifluorfen |
| T-312 | an individualized mixture B | bromoxynil |
| T-313 | an individualized mixture B | imazamethabenz |
| T-314 | an individualized mixture B | imazamox |
| T-315 | an individualized mixture B | imazapic |
| T-316 | an individualized mixture B | imazapyr |
| T-317 | an individualized mixture B | imazaquin |
| T-318 | an individualized mixture B | imazethapyr |
| T-319 | an individualized mixture B | 2,4-dichlorophenoxyacetic acid (2,4-D) |
| T-320 | an individualized mixture B | chloridazon |
| T-321 | an individualized mixture B | clopyralid |
| T-322 | an individualized mixture B | fluroxypyr |
| T-323 | an individualized mixture B | picloram |
| T-324 | an individualized mixture B | picolinafen |
| T-325 | an individualized mixture B | bensulfuron |
| T-326 | an individualized mixture B | chlorimuron-ethyl |
| T-327 | an individualized mixture B | cyclosulfamuron |

(continued)

| Row | Components 1 and 2 | Component 3 |
|---|---|---|
| T-328 | an individualized mixture B | iodosulfuron |
| T-329 | an individualized mixture B | mesosulfuron |
| T-330 | an individualized mixture B | metsulfuron-methyl |
| T-331 | an individualized mixture B | nicosulfuron |
| T-332 | an individualized mixture B | rimsulfuron |
| T-333 | an individualized mixture B | triflusulfuron |
| T-334 | an individualized mixture B | atrazine |
| T-335 | an individualized mixture B | hexazinone |
| T-336 | an individualized mixture B | diuron |
| T-337 | an individualized mixture B | florasulam |
| T-338 | an individualized mixture B | pyroxasulfon |
| T-339 | an individualized mixture B | bentazone |
| T-340 | an individualized mixture B | cinidon-ethyl |
| T-341 | an individualized mixture B | cinmethylin |
| T-342 | an individualized mixture B | dicamba |
| T-343 | an individualized mixture B | diflufenzopyr |
| T-344 | an individualized mixture B | quinclorac |
| T-345 | an individualized mixture B | quinmerac |
| T-346 | an individualized mixture B | mesotrione |
| T-347 | an individualized mixture B | saflufenacil |
| T-348 | an individualized mixture B | topramezone |

Particularly preferred components 3 are compounds II selected from the group of the following compounds:

II-1 epoxiconazole

II-2 metconazole

II-3 tebuconazole

II-4 triticonazole

II-5 prothioconazole

II-6 kresoxim-methyl

II-7 pyraclostrobin

II-13 fenpropimorph

II-17 chlorothalonil

II-18 metrafenone

II-20 II-19 bixafen boscalid

II-21 fluxapyroxad

II-23 isopyrazam II-24 fluopyram

II-26 cyflufenamid

II-30 dimoxystrobin

II-33 prochloraz

II-35 difenoconazole

II-36 azoxystrobin

with the proviso that component 2 and component 3 are not identical. Particularly preferred mixtures are the mixtures of Table T1, where each row corresponds to one aspect of the mixtures according to the invention. According to one specific aspect, these are ternary mixtures which each only contain these three components as the active compound.

Table T1: Mixtures T1-1 to T1-460 comprising one component 1 selected from the compounds of the formula I, one component 2 selected from groups A to K and one component 3 selected from groups A to K. In the table below, each row of a mixture according to the invention corresponds to each mixture component 1 to 3 given in the corresponding row. "C" denotes "component".

The following components are preferred components of mixtures comprisning three components:

Preferred component 2:

II-1 epoxiconazole

II-2 metconazole

II-4 triticonazole

II-5 prothioconazole

II-7 pyraclostrobin

II-13 fenpropimorph

II-17 chlorothalonil

II-18 metrafenone

II-19 bixafen

II-20 boscalid

II-21 fluxapyroxad

II-23 isopyrazam 11-24 fluopyram

II-26 cyflufenamid

II-29 proquinazid

II-33 prochloraz

II-35 difenoconazole

Preferred component 3:

II-5 prothioconazole

II-7 pyraclostrobin

II-13 fenpropimorph

II-17 chlorothalonil

II-18 metrafenone

II-20 boscalid

II-21 fluxapyroxad

II-26 cyflufenamid

II-33 prochloraz

II-35 difenoconazole

| Table T1 | Components | | | Table T1 | Components | | |
|---|---|---|---|---|---|---|---|
| Mixture | C 1 | C 2 | C 3 | Mixture | C 1 | C 2 | C 3 |
| T1-1 | I-1 | II-1 | II-5 | T1-10 | I-1 | II-1 | II-35 |
| T1-2 | I-1 | II-1 | II-7 | T1-11 | I-1 | II-2 | II-5 |
| T1-3 | I-1 | II-1 | II-13 | T1-12 | I-1 | II-2 | II-7 |
| T1-4 | I-1 | II-1 | II-17 | T1-13 | I-1 | II-2 | II-13 |
| T1-5 | I-1 | II-1 | II-18 | T1-14 | I-1 | II-2 | II-17 |
| T1-6 | I-1 | II-1 | II-20 | T1-15 | I-1 | II-2 | II-18 |
| T1-7 | I-1 | II-1 | II-21 | T1-16 | I-1 | II-2 | II-20 |
| T1-8 | I-1 | II-1 | II-26 | T1-17 | I-1 | II-2 | II-21 |
| T1-9 | I-1 | II-1 | II-33 | T1-18 | I-1 | II-2 | II-26 |
| T1-19 | I-1 | II-2 | II-33 | T1-58 | I-1 | II-17 | II-26 |
| T1-20 | I-1 | II-2 | II-35 | T1-59 | I-1 | II-17 | II-33 |
| T1-21 | I-1 | II-4 | II-5 | T1-60 | I-1 | II-17 | II-35 |
| T1-22 | I-1 | II-4 | II-7 | T1-61 | I-1 | II-18 | II-20 |
| T1-23 | I-1 | II-4 | II-13 | T1-62 | I-1 | II-18 | II-21 |
| T1-24 | I-1 | II-4 | II-17 | T1-63 | I-1 | II-18 | II-26 |
| T1-25 | I-1 | II-4 | II-18 | T1-64 | I-1 | II-18 | II-33 |
| T1-26 | I-1 | II-4 | II-20 | T1-65 | I-1 | II-18 | II-35 |
| T1-27 | I-1 | II-4 | II-21 | T1-66 | I-1 | II-19 | II-5 |
| T1-28 | I-1 | II-4 | II-26 | T1-67 | I-1 | II-19 | II-7 |
| T1-29 | I-1 | II-4 | II-33 | T1-68 | I-1 | II-19 | II-13 |
| T1-30 | I-1 | II-4 | II-35 | T1-69 | I-1 | II-19 | II-17 |
| T1-31 | I-1 | II-5 | II-7 | T1-70 | I-1 | II-19 | II-18 |
| T1-32 | I-1 | II-5 | II-13 | T1-71 | I-1 | II-19 | II-20 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-33 | I-1 | II-5 | II-17 | T1-72 | I-1 | II-19 | II-21 |
| T1-34 | I-1 | II-5 | II-18 | T1-73 | I-1 | II-19 | II-26 |
| T1-35 | I-1 | II-5 | II-20 | T1-74 | I-1 | II-19 | II-33 |
| T1-36 | I-1 | II-5 | II-21 | T1-75 | I-1 | II-19 | II-35 |
| T1-37 | I-1 | II-5 | II-26 | T1-76 | I-1 | II-20 | II-21 |
| T1-38 | I-1 | II-5 | II-33 | T1-77 | I-1 | II-20 | II-26 |
| T1-39 | I-1 | II-5 | II-35 | T1-78 | I-1 | II-20 | II-33 |
| T1-40 | I-1 | II-7 | II-13 | T1-79 | I-1 | II-20 | II-35 |
| T1-41 | I-1 | II-7 | II-17 | T1-80 | I-1 | II-21 | II-26 |
| T1-42 | I-1 | II-7 | II-18 | T1-81 | I-1 | II-21 | II-33 |
| T1-43 | I-1 | II-7 | II-20 | T1-82 | I-1 | II-21 | II-35 |
| T1-44 | I-1 | II-7 | II-21 | T1-83 | I-1 | II-23 | II-5 |
| T1-45 | I-1 | II-7 | II-26 | T1-84 | I-1 | II-23 | II-7 |
| T1-46 | I-1 | II-7 | II-33 | T1-85 | I-1 | II-23 | II-13 |
| T1-47 | I-1 | II-7 | II-35 | T1-86 | I-1 | II-23 | II-17 |
| T1-48 | I-1 | II-13 | II-17 | T1-87 | I-1 | II-23 | II-18 |
| T1-49 | I-1 | II-13 | II-18 | T1-88 | I-1 | II-23 | II-20 |
| T1-50 | I-1 | II-13 | II-20 | T1-89 | I-1 | II-23 | II-21 |
| T1-51 | I-1 | II-13 | II-21 | T1-90 | I-1 | II-23 | II-26 |
| T1-52 | I-1 | II-13 | II-26 | T1-91 | I-1 | II-23 | II-33 |
| T1-53 | I-1 | II-13 | II-33 | T1-92 | I-1 | II-23 | II-35 |
| T1-54 | I-1 | II-13 | II-35 | T1-93 | I-1 | II-24 | II-5 |
| T1-55 | I-1 | II-17 | II-18 | T1-94 | I-1 | II-24 | II-7 |
| T1-56 | I-1 | II-17 | II-20 | T1-95 | I-1 | II-24 | II-13 |
| T1-57 | I-1 | II-17 | II-21 | T1-96 | I-1 | II-24 | II-17 |
| T1-97 | I-1 | II-24 | II-18 | T1-136 | I-2 | II-4 | II-5 |
| T1-98 | I-1 | II-24 | II-20 | T1-137 | I-2 | II-4 | II-7 |
| T1-99 | I-1 | II-24 | II-21 | T1-138 | I-2 | II-4 | II-13 |
| T1-100 | I-1 | II-24 | II-26 | T1-139 | I-2 | II-4 | II-17 |
| T1-101 | I-1 | II-24 | II-33 | T1-140 | I-2 | II-4 | II-18 |
| T1-102 | I-1 | II-24 | II-35 | T1-141 | I-2 | II-4 | II-20 |
| T1-103 | I-1 | II-26 | II-33 | T1-142 | I-2 | II-4 | II-21 |
| T1-104 | I-1 | II-26 | II-35 | T1-143 | I-2 | II-4 | II-26 |
| T1-105 | I-1 | II-29 | II-5 | T1-144 | I-2 | II-4 | II-33 |
| T1-106 | I-1 | II-29 | II-7 | T1-145 | I-2 | II-4 | II-35 |
| T1-107 | I-1 | II-29 | II-13 | T1-146 | I-2 | II-5 | II-7 |
| T1-108 | I-1 | II-29 | II-17 | T1-147 | I-2 | II-5 | II-13 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-109 | I-1 | II-29 | II-18 | T1-148 | I-2 | II-5 | II-17 |
| T1-110 | I-1 | II-29 | II-20 | T1-149 | I-2 | II-5 | II-18 |
| T1-111 | I-1 | II-29 | II-21 | T1-150 | I-2 | II-5 | II-20 |
| T1-112 | I-1 | II-29 | II-26 | T1-151 | I-2 | II-5 | II-21 |
| T1-113 | I-1 | II-29 | II-33 | T1-152 | I-2 | II-5 | II-26 |
| T1-114 | I-1 | II-29 | II-35 | T1-153 | I-2 | II-5 | II-33 |
| T1-115 | I-1 | II-33 | II-35 | T1-154 | I-2 | II-5 | II-35 |
| T1-116 | I-2 | II-1 | II-5 | T1-155 | I-2 | II-7 | II-13 |
| T1-117 | I-2 | II-1 | II-7 | T1-156 | I-2 | II-7 | II-17 |
| T1-118 | I-2 | II-1 | II-13 | T1-157 | I-2 | II-7 | II-18 |
| T1-119 | I-2 | II-1 | II-17 | T1-158 | I-2 | II-7 | II-20 |
| T1-120 | I-2 | II-1 | II-18 | T1-159 | I-2 | II-7 | II-21 |
| T1-121 | I-2 | II-1 | II-20 | T1-160 | I-2 | II-7 | II-26 |
| T1-122 | I-2 | II-1 | II-21 | T1-161 | I-2 | II-7 | II-33 |
| T1-123 | I-2 | II-1 | II-26 | T1-162 | I-2 | II-7 | II-35 |
| T1-124 | I-2 | II-1 | II-33 | T1-163 | I-2 | II-13 | II-17 |
| T1-125 | I-2 | II-1 | II-35 | T1-164 | I-2 | II-13 | II-18 |
| T1-126 | I-2 | II-2 | II-5 | T1-165 | I-2 | II-13 | II-20 |
| T1-127 | I-2 | II-2 | II-7 | T1-166 | I-2 | II-13 | II-21 |
| T1-128 | I-2 | II-2 | II-13 | T1-167 | I-2 | II-13 | II-26 |
| T1-129 | I-2 | II-2 | II-17 | T1-168 | I-2 | II-13 | II-33 |
| T1-130 | I-2 | II-2 | II-18 | T1-169 | I-2 | II-13 | II-35 |
| T1-131 | I-2 | II-2 | II-20 | T1-170 | I-2 | II-17 | II-18 |
| T1-132 | I-2 | II-2 | II-21 | T1-171 | I-2 | II-17 | II-20 |
| T1-133 | I-2 | II-2 | II-26 | T1-172 | I-2 | II-17 | II-21 |
| T1-134 | I-2 | II-2 | II-33 | T1-173 | I-2 | II-17 | II-26 |
| T1-135 | I-2 | II-2 | II-35 | T1-174 | I-2 | II-17 | II-33 |
| T1-175 | I-2 | II-17 | II-35 | T1-214 | I-2 | II-24 | II-21 |
| T1-176 | I-2 | II-18 | II-20 | T1-215 | I-2 | II-24 | II-26 |
| T1-177 | I-2 | II-18 | II-21 | T1-216 | I-2 | II-24 | II-33 |
| T1-178 | I-2 | II-18 | II-26 | T1-217 | I-2 | II-24 | II-35 |
| T1-179 | I-2 | II-18 | II-33 | T1-218 | I-2 | II-26 | II-33 |
| T1-180 | I-2 | II-18 | II-35 | T1-219 | I-2 | II-26 | II-35 |
| T1-181 | I-2 | II-19 | II-5 | T1-220 | I-2 | II-29 | II-5 |
| T1-182 | I-2 | II-19 | II-7 | T1-221 | I-2 | II-29 | II-7 |
| T1-183 | I-2 | II-19 | II-13 | T1-222 | I-2 | II-29 | II-13 |
| T1-184 | I-2 | II-19 | II-17 | T1-223 | I-2 | II-29 | II-17 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-185 | I-2 | II-19 | II-18 | T1-224 | I-2 | II-29 | II-18 |
| T1-186 | I-2 | II-19 | II-20 | T1-225 | I-2 | II-29 | II-20 |
| T1-187 | I-2 | II-19 | II-21 | T1-226 | I-2 | II-29 | II-21 |
| T1-188 | I-2 | II-19 | II-26 | T1-227 | I-2 | II-29 | II-26 |
| T1-189 | I-2 | II-19 | II-33 | T1-228 | I-2 | II-29 | II-33 |
| T1-190 | I-2 | II-19 | II-35 | T1-229 | I-2 | II-29 | II-35 |
| T1-191 | I-2 | II-20 | II-21 | T1-230 | I-2 | II-33 | II-35 |
| T1-192 | I-2 | II-20 | II-26 | T1-231 | I-3 | II-1 | II-5 |
| T1-193 | I-2 | II-20 | II-33 | T1-232 | I-3 | II-1 | II-7 |
| T1-194 | I-2 | II-20 | II-35 | T1-233 | I-3 | II-1 | II-13 |
| T1-195 | I-2 | II-21 | II-26 | T1-234 | I-3 | II-1 | II-17 |
| T1-196 | I-2 | II-21 | II-33 | T1-235 | I-3 | II-1 | II-18 |
| T1-197 | I-2 | II-21 | II-35 | T1-236 | I-3 | II-1 | II-20 |
| T1-198 | I-2 | II-23 | II-5 | T1-237 | I-3 | II-1 | II-21 |
| T1-199 | I-2 | II-23 | II-7 | T1-238 | I-3 | II-1 | II-26 |
| T1-200 | I-2 | II-23 | II-13 | T1-239 | I-3 | II-1 | II-33 |
| T1-201 | I-2 | II-23 | II-17 | T1-240 | I-3 | II-1 | II-35 |
| T1-202 | I-2 | II-23 | II-18 | T1-241 | I-3 | II-2 | II-5 |
| T1-203 | I-2 | II-23 | II-20 | T1-242 | I-3 | II-2 | II-7 |
| T1-204 | I-2 | II-23 | II-21 | T1-243 | I-3 | II-2 | II-13 |
| T1-205 | I-2 | II-23 | II-26 | T1-244 | I-3 | II-2 | II-17 |
| T1-206 | I-2 | II-23 | II-33 | T1-245 | I-3 | II-2 | II-18 |
| T1-207 | I-2 | II-23 | II-35 | T1-246 | I-3 | II-2 | II-20 |
| T1-208 | I-2 | II-24 | II-5 | T1-247 | I-3 | II-2 | II-21 |
| T1-209 | I-2 | II-24 | II-7 | T1-248 | I-3 | II-2 | II-26 |
| T1-210 | I-2 | II-24 | II-13 | T1-249 | I-3 | II-2 | II-33 |
| T1-211 | I-2 | II-24 | II-17 | T1-250 | I-3 | II-2 | II-35 |
| T1-212 | I-2 | II-24 | II-18 | T1-251 | I-3 | II-4 | II-5 |
| T1-213 | I-2 | II-24 | II-20 | T1-252 | I-3 | II-4 | II-7 |
| T1-253 | I-3 | II-4 | II-13 | T1-292 | I-3 | II-18 | II-21 |
| T1-254 | I-3 | II-4 | II-17 | T1-293 | I-3 | II-18 | II-26 |
| T1-255 | I-3 | II-4 | II-18 | T1-294 | I-3 | II-18 | II-33 |
| T1-256 | I-3 | II-4 | II-20 | T1-295 | I-3 | II-18 | II-35 |
| T1-257 | I-3 | II-4 | II-21 | T1-296 | I-3 | II-19 | II-5 |
| T1-258 | I-3 | II-4 | II-26 | T1-297 | I-3 | II-19 | II-7 |
| T1-259 | I-3 | II-4 | II-33 | T1-298 | I-3 | II-19 | II-13 |
| T1-260 | I-3 | II-4 | II-35 | T1-299 | I-3 | II-19 | II-17 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-261 | I-3 | II-5 | II-7 | T1-300 | I-3 | II-19 | II-18 |
| T1-262 | 1-3 | II-5 | II-13 | T1-301 | I-3 | II-19 | II-20 |
| T1-263 | I-3 | II-5 | II-17 | T1-302 | I-3 | II-19 | II-21 |
| T1-264 | I-3 | II-5 | II-18 | T1-303 | I-3 | II-19 | II-26 |
| T1-265 | I-3 | II-5 | II-20 | T1-304 | I-3 | II-19 | II-33 |
| T1-266 | I-3 | II-5 | II-21 | T1-305 | I-3 | II-19 | II-35 |
| T1-267 | I-3 | II-5 | II-26 | T1-306 | I-3 | II-20 | II-21 |
| T1-268 | I-3 | II-5 | II-33 | T1-307 | I-3 | II-20 | II-26 |
| T1-269 | I-3 | II-5 | II-35 | T1-308 | I-3 | II-20 | II-33 |
| T1-270 | I-3 | II-7 | II-13 | T1-309 | I-3 | II-20 | II-35 |
| T1-271 | I-3 | II-7 | II-17 | T1-310 | I-3 | II-21 | II-26 |
| T1-272 | I-3 | II-7 | II-18 | T1-311 | I-3 | II-21 | II-33 |
| T1-273 | I-3 | II-7 | II-20 | T1-312 | I-3 | II-21 | II-35 |
| T1-274 | I-3 | II-7 | II-21 | T1-313 | I-3 | II-23 | II-5 |
| T1-275 | I-3 | II-7 | II-26 | T1-314 | I-3 | II-23 | II-7 |
| T1-276 | I-3 | II-7 | II-33 | T1-315 | I-3 | II-23 | II-13 |
| T1-277 | I-3 | II-7 | II-35 | T1-316 | I-3 | II-23 | II-17 |
| T1-278 | I-3 | II-13 | II-17 | T1-317 | I-3 | II-23 | II-18 |
| T1-279 | I-3 | II-13 | II-18 | T1-318 | I-3 | II-23 | II-20 |
| T1-280 | I-3 | II-13 | II-20 | T1-319 | I-3 | II-23 | II-21 |
| T1-281 | I-3 | II-13 | II-21 | T1-320 | I-3 | II-23 | II-26 |
| T1-282 | I-3 | II-13 | II-26 | T1-321 | I-3 | II-23 | II-33 |
| T1-283 | I-3 | II-13 | II-33 | T1-322 | I-3 | II-23 | II-35 |
| T1-284 | I-3 | II-13 | II-35 | T1-323 | I-3 | II-24 | II-5 |
| T1-285 | I-3 | II-17 | II-18 | T1-324 | I-3 | II-24 | II-7 |
| T1-286 | I-3 | II-17 | II-20 | T1-325 | I-3 | II-24 | II-13 |
| T1-287 | I-3 | II-17 | II-21 | T1-326 | I-3 | II-24 | II-17 |
| T1-288 | I-3 | II-17 | II-26 | T1-327 | I-3 | II-24 | II-18 |
| T1-289 | I-3 | II-17 | II-33 | T1-328 | I-3 | II-24 | II-20 |
| T1-290 | I-3 | II-17 | II-35 | T1-329 | I-3 | II-24 | II-21 |
| T1-291 | I-3 | II-18 | II-20 | T1-330 | I-3 | II-24 | II-26 |
| T1-331 | I-3 | II-24 | II-33 | T1-370 | I-4 | II-4 | II-18 |
| T1-332 | I-3 | II-24 | II-35 | T1-371 | I-4 | II-4 | II-20 |
| T1-333 | I-3 | II-26 | II-33 | T1-372 | I-4 | II-4 | II-21 |
| T1-334 | I-3 | II-26 | II-35 | T1-373 | I-4 | II-4 | II-26 |
| T1-335 | I-3 | II-29 | II-5 | T1-374 | I-4 | II-4 | II-33 |
| T1-336 | I-3 | II-29 | II-7 | T1-375 | I-4 | II-4 | II-35 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-337 | I-3 | II-29 | II-13 | T1-376 | I-4 | II-5 | II-7 |
| T1-338 | I-3 | II-29 | II-17 | T1-377 | I-4 | II-5 | II-13 |
| T1-339 | I-3 | II-29 | II-18 | T1-378 | I-4 | II-5 | II-17 |
| T1-340 | I-3 | II-29 | II-20 | T1-379 | I-4 | II-5 | II-18 |
| T1-341 | I-3 | II-29 | II-21 | T1-380 | I-4 | II-5 | II-20 |
| T1-342 | I-3 | II-29 | II-26 | T1-381 | I-4 | II-5 | II-21 |
| T1-343 | I-3 | II-29 | II-33 | T1-382 | I-4 | II-5 | II-26 |
| T1-344 | I-3 | II-29 | II-35 | T1-383 | I-4 | II-5 | II-33 |
| T1-345 | I-3 | II-33 | II-35 | T1-384 | I-4 | II-5 | II-35 |
| T1-346 | I-4 | II-1 | II-5 | T1-385 | I-4 | II-7 | II-13 |
| T1-347 | I-4 | II-1 | II-7 | T1-386 | I-4 | II-7 | II-17 |
| T1-348 | I-4 | II-1 | II-13 | T1-387 | I-4 | II-7 | II-18 |
| T1-349 | I-4 | II-1 | II-17 | T1-388 | I-4 | II-7 | II-20 |
| T1-350 | I-4 | II-1 | II-18 | T1-389 | I-4 | II-7 | II-21 |
| T1-351 | I-4 | II-1 | II-20 | T1-390 | I-4 | II-7 | II-26 |
| T1-352 | I-4 | II-1 | II-21 | T1-391 | I-4 | II-7 | II-33 |
| T1-353 | I-4 | II-1 | II-26 | T1-392 | I-4 | II-7 | II-35 |
| | | | | T1-393 | I-4 | II-13 | II-17 |
| T1-354 | I-4 | II-1 | II-33 | T1-394 | I-4 | II-13 | II-18 |
| T1-355 | I-4 | II-1 | II-35 | T1-395 | I-4 | II-13 | II-20 |
| T1-356 | I-4 | II-2 | II-5 | T1-396 | I-4 | II-13 | II-21 |
| T1-357 | I-4 | II-2 | II-7 | T1-397 | I-4 | II-13 | II-26 |
| T1-358 | I-4 | II-2 | II-13 | T1-398 | I-4 | II-13 | II-33 |
| T1-359 | I-4 | II-2 | II-17 | T1-399 | I-4 | II-13 | II-35 |
| T1-360 | I-4 | II-2 | II-18 | T1-400 | I-4 | II-17 | II-18 |
| T1-361 | I-4 | II-2 | II-20 | T1-401 | I-4 | II-17 | II-20 |
| T1-362 | I-4 | II-2 | II-21 | T1-402 | I-4 | II-17 | II-21 |
| T1-363 | I-4 | II-2 | II-26 | T1-403 | I-4 | II-17 | II-26 |
| T1-364 | I-4 | II-2 | II-33 | T1-404 | I-4 | II-17 | II-33 |
| T1-365 | I-4 | II-2 | II-35 | T1-405 | I-4 | II-17 | II-35 |
| T1-366 | I-4 | II-4 | II-5 | T1-406 | I-4 | II-18 | II-20 |
| T1-367 | I-4 | II-4 | II-7 | T1-407 | I-4 | II-18 | II-21 |
| T1-368 | I-4 | II-4 | II-13 | T1-408 | I-4 | II-18 | II-26 |
| T1-369 | I-4 | II-4 | II-17 | | | | |

| | | | | | | | |
|---|---|---|---|---|---|---|---|
| T1-409 | I-4 | II-18 | II-33 | T1-436 | I-4 | II-23 | II-33 |
| T1-410 | I-4 | II-18 | II-35 | T1-437 | I-4 | II-23 | II-35 |
| T1-411 | I-4 | II-19 | II-5 | T1-438 | I-4 | II-24 | II-5 |

(continued)

| Table T1 | Components | | | Table T1 | Components | | |
|---|---|---|---|---|---|---|---|
| Mixture | C 1 | C 2 | C 3 | Mixture | C 1 | C 2 | C 3 |
| T1-412 | I-4 | II-19 | II-7 | T1-439 | I-4 | II-24 | II-7 |
| T1-413 | I-4 | II-19 | II-13 | T1-440 | I-4 | II-24 | II-13 |
| T1-414 | I-4 | II-19 | II-17 | T1-441 | I-4 | II-24 | II-17 |
| T1-415 | I-4 | II-19 | II-18 | T1-442 | I-4 | II-24 | II-18 |
| T1-416 | I-4 | II-19 | II-20 | T1-443 | I-4 | II-24 | II-20 |
| T1-417 | I-4 | II-19 | II-21 | T1-444 | I-4 | II-24 | II-21 |
| T1-418 | I-4 | II-19 | II-26 | T1-445 | I-4 | II-24 | II-26 |
| T1-419 | I-4 | II-19 | II-33 | T1-446 | I-4 | II-24 | II-33 |
| T1-420 | I-4 | II-19 | II-35 | T1-447 | I-4 | II-24 | II-35 |
| T1-421 | I-4 | II-20 | II-21 | T1-448 | I-4 | II-26 | II-33 |
| T1-422 | I-4 | II-20 | II-26 | T1-449 | I-4 | II-26 | II-35 |
| T1-423 | I-4 | II-20 | II-33 | T1-450 | I-4 | II-29 | II-5 |
| T1-424 | I-4 | II-20 | II-35 | T1-451 | I-4 | II-29 | II-7 |
| T1-425 | I-4 | II-21 | II-26 | T1-452 | I-4 | II-29 | II-13 |
| T1-426 | I-4 | II-21 | II-33 | T1-453 | I-4 | II-29 | II-17 |
| T1-427 | I-4 | II-21 | II-35 | T1-454 | I-4 | II-29 | II-18 |
| T1-428 | I-4 | II-23 | II-5 | T1-455 | I-4 | II-29 | II-20 |
| T1-429 | I-4 | II-23 | II-7 | T1-456 | I-4 | II-29 | II-21 |
| T1-430 | I-4 | II-23 | II-13 | T1-457 | I-4 | II-29 | II-26 |
| T1-431 | I-4 | II-23 | II-17 | T1-458 | I-4 | II-29 | II-33 |
| T1-432 | I-4 | II-23 | II-18 | T1-459 | I-4 | II-29 | II-35 |
| T1-433 | I-4 | II-23 | II-20 | T1-460 | I-4 | II-33 | II-35 |
| T1-434 | I-4 | II-23 | II-21 | | | | |
| T1-435 | I-4 | II-23 | II-26 | | | | |

According to a further embodiment, preference is given to mixtures comprising a component 1, a component 2 and a component 3, where preference is given in particular to those mixtures in which component 2 is a compound II selected from the group of the compounds

II-1 epoxiconazole

II-2 metconazole

II-4 triticonazole

II-5 prothioconazole

II-7 pyraclostrobin

II-13 fenpropimorph

II-17 chlorothalonil

II-18 metrafenone

II-19 bixafen

II-20 boscalid

II-21 fluxapyroxad II-23 isopyrazam

II-24 fluopyram

II-26 cyflufenamid

II-29 proquinazid

II-33 prochloraz

II-35 difenoconazole

and component 3 is a compound II selected from the compounds

II-41 mepiquat chloride

II-42 chlormequat chloride

II-43 trinexapac-ethyl

II-44 prohexadione-calcium of group M).

Such mixtures according to the invention are listed explicitly in Table T2. According to a specific embodiment, these are ternary mixtures comprising, as active compounds, in each case only these three components.

Table T2: Mixtures T2-1 to T2-272, comprising, as component 1, the compound I, a component 2 selected from the active compounds preferred for component 2 and a component 3 selected from the active compounds preferred for component 3. In the table below, in each case one row of a mixture according to the invention corresponds to the respective mixture components 1 to 3 listed in the row in question. "C" denotes "component", "M" denotes "mixture".

| M | C1 | C2 | C3 | | M | C1 | C2 | C3 |
|---|---|---|---|---|---|---|---|---|
| T2-1 | I-1 | II-1 | II-41 | | T2-19 | I-1 | II-7 | II-43 |
| T2-2 | I-1 | II-1 | II-42 | | T2-20 | I-1 | II-7 | II-44 |
| T2-3 | I-1 | II-1 | II-43 | | T2-21 | I-1 | II-13 | II-41 |
| T2-4 | I-1 | II-1 | II-44 | | T2-22 | I-1 | II-13 | II-42 |
| T2-5 | I-1 | II-2 | II-41 | | T2-23 | I-1 | II-13 | II-43 |
| T2-6 | I-1 | II-2 | II-42 | | T2-24 | I-1 | II-13 | II-44 |
| T2-7 | I-1 | II-2 | II-43 | | T2-25 | I-1 | II-17 | II-41 |
| T2-8 | I-1 | II-2 | II-44 | | T2-26 | I-1 | II-17 | II-42 |
| T2-9 | I-1 | II-4 | II-41 | | T2-27 | I-1 | II-17 | II-43 |
| T2-10 | I-1 | II-4 | II-42 | | T2-28 | I-1 | II-17 | II-44 |
| T2-11 | I-1 | II-4 | II-43 | | T2-29 | I-1 | II-18 | II-41 |
| T2-12 | I-1 | II-4 | II-44 | | T2-30 | I-1 | II-18 | II-42 |
| T2-13 | I-1 | II-5 | II-41 | | T2-31 | I-1 | 11-18 | 11-43 |
| T2-14 | I-1 | II-5 | II-42 | | T2-32 | I-1 | II-18 | II-44 |

(continued)

| M | C1 | C2 | C3 | | M | C1 | C2 | C3 |
|---|---|---|---|---|---|---|---|---|
| T2-15 | I-1 | II-5 | II-43 | | T2-33 | I-1 | II-19 | II-41 |
| T2-16 | I-1 | II-5 | II-44 | | T2-34 | I-1 | II-19 | II-42 |
| T2-17 | I-1 | II-7 | II-41 | | T2-35 | I-1 | II-19 | II-43 |
| T2-18 | I-1 | II-7 | II-42 | | T2-36 | I-1 | II-19 | II-44 |
| T2-37 | I-1 | II-20 | II-41 | | T2-75 | I-2 | II-2 | II-43 |
| T2-38 | I-1 | II-20 | II-42 | | T2-76 | I-2 | II-2 | II-44 |
| T2-39 | I-1 | II-20 | II-43 | | T2-77 | I-2 | II-4 | II-41 |
| T2-40 | 1-1 | II-20 | II-44 | | T2-78 | I-2 | II-4 | II-42 |
| T2-41 | 1-1 | II-21 | II-41 | | T2-79 | I-2 | II-4 | II-43 |
| T2-42 | I-1 | II-21 | II-42 | | T2-80 | I-2 | II-4 | II-44 |
| T2-43 | I-1 | II-21 | II-43 | | T2-81 | I-2 | II-5 | II-41 |
| T2-44 | I-1 | II-21 | II-44 | | T2-82 | I-2 | II-5 | II-42 |
| T2-45 | I-1 | II-23 | II-41 | | T2-83 | I-2 | II-5 | II-43 |
| T2-46 | I-1 | II-23 | II-42 | | T2-84 | I-2 | II-5 | II-44 |
| T2-47 | I-1 | II-23 | II-43 | | T2-85 | I-2 | II-7 | II-41 |
| T2-48 | I-1 | II-23 | II-44 | | T2-86 | I-2 | II-7 | II-42 |
| T2-49 | I-1 | II-24 | II-41 | | T2-87 | I-2 | II-7 | II-43 |
| T2-50 | I-1 | II-24 | II-42 | | T2-88 | I-2 | II-7 | II-44 |
| T2-51 | I-1 | II-24 | II-43 | | T2-89 | I-2 | II-13 | II-41 |
| T2-52 | I-1 | II-24 | II-44 | | T2-90 | I-2 | II-13 | II-42 |
| T2-53 | I-1 | II-26 | II-41 | | T2-91 | I-2 | II-13 | II-43 |
| T2-54 | I-1 | II-26 | II-42 | | T2-92 | I-2 | II-13 | II-44 |
| T2-55 | I-1 | II-26 | II-43 | | T2-93 | I-2 | II-17 | II-41 |
| T2-56 | I-1 | II-26 | II-44 | | T2-94 | I-2 | II-17 | II-42 |
| T2-57 | I-1 | II-29 | II-41 | | T2-95 | I-2 | II-17 | II-43 |
| T2-58 | I-1 | II-29 | II-42 | | T2-96 | I-2 | II-17 | II-44 |
| T2-59 | I-1 | II-29 | II-43 | | T2-97 | I-2 | II-18 | II-41 |
| T2-60 | I-1 | II-29 | II-44 | | T2-98 | I-2 | II-18 | II-42 |
| T2-61 | I-1 | II-33 | II-41 | | T2-99 | I-2 | II-18 | II-43 |
| T2-62 | I-1 | II-33 | II-42 | | T2-100 | I-2 | II-18 | II-44 |
| T2-63 | I-1 | II-33 | II-43 | | T2-101 | I-2 | II-19 | II-41 |
| T2-64 | I-1 | II-33 | II-44 | | T2-102 | I-2 | II-19 | II-42 |
| T2-65 | I-1 | II-35 | II-41 | | T2-103 | I-2 | II-19 | II-43 |
| T2-66 | I-1 | II-35 | II-42 | | T2-104 | I-2 | II-19 | II-44 |
| T2-67 | I-1 | II-35 | II-43 | | T2-105 | I-2 | II-20 | II-41 |
| T2-68 | I-1 | II-35 | II-44 | | T2-106 | I-2 | II-20 | II-42 |
| T2-69 | I-2 | II-1 | II-41 | | T2-107 | I-2 | II-20 | II-43 |
| T2-70 | I-2 | II-1 | II-42 | | T2-108 | I-2 | II-20 | II-44 |

(continued)

| M | C1 | C2 | C3 | | M | C1 | C2 | C3 |
|---|---|---|---|---|---|---|---|---|
| T2-71 | I-2 | II-1 | II-43 | | T2-109 | I-2 | II-21 | II-41 |
| T2-72 | I-2 | II-1 | II-44 | | T2-110 | I-2 | II-21 | II-42 |
| T2-73 | I-2 | II-2 | II-41 | | T2-111 | I-2 | II-21 | II-43 |
| T2-74 | I-2 | II-2 | II-42 | | T2-112 | I-2 | II-21 | II-44 |
| T2-113 | I-2 | II-23 | II-41 | | T2-151 | I-3 | II-5 | II-43 |
| T2-114 | I-2 | II-23 | II-42 | | T2-152 | I-3 | II-5 | II-44 |
| T2-115 | I-2 | II-23 | II-43 | | T2-153 | I-3 | II-7 | II-41 |
| T2-116 | I-2 | II-23 | II-44 | | T2-154 | I-3 | II-7 | II-42 |
| T2-117 | I-2 | II-24 | II-41 | | T2-155 | I-3 | II-7 | II-43 |
| T2-118 | I-2 | II-24 | II-42 | | T2-156 | I-3 | II-7 | II-44 |
| T2-119 | I-2 | II-24 | II-43 | | T2-157 | I-3 | II-13 | II-41 |
| T2-120 | I-2 | II-24 | II-44 | | T2-158 | I-3 | II-13 | II-42 |
| T2-121 | I-2 | II-26 | II-41 | | T2-159 | I-3 | II-13 | II-43 |
| T2-122 | I-2 | II-26 | II-42 | | T2-160 | I-3 | II-13 | II-44 |
| T2-123 | I-2 | II-26 | II-43 | | T2-161 | I-3 | II-17 | II-41 |
| T2-124 | I-2 | II-26 | II-44 | | T2-162 | I-3 | II-17 | II-42 |
| T2-125 | I-2 | II-29 | II-41 | | T2-163 | I-3 | II-17 | II-43 |
| T2-126 | I-2 | II-29 | II-42 | | T2-164 | I-3 | II-17 | II-44 |
| T2-127 | I-2 | II-29 | II-43 | | T2-165 | I-3 | II-18 | II-41 |
| T2-128 | I-2 | II-29 | II-44 | | T2-166 | I-3 | II-18 | II-42 |
| T2-129 | I-2 | II-33 | II-41 | | T2-167 | I-3 | II-18 | II-43 |
| T2-130 | I-2 | II-33 | II-42 | | T2-168 | I-3 | II-18 | II-44 |
| T2-131 | I-2 | II-33 | II-43 | | T2-169 | I-3 | II-19 | II-41 |
| T2-132 | I-2 | II-33 | II-44 | | T2-170 | I-3 | II-19 | II-42 |
| T2-133 | I-2 | II-35 | II-41 | | T2-171 | I-3 | II-19 | II-43 |
| T2-134 | I-2 | II-35 | II-42 | | T2-172 | I-3 | II-19 | II-44 |
| T2-135 | I-2 | II-35 | II-43 | | T2-173 | I-3 | II-20 | II-41 |
| T2-136 | I-2 | II-35 | II-44 | | T2-174 | I-3 | II-20 | II-42 |
| T2-137 | I-3 | II-1 | II-41 | | T2-175 | I-3 | II-20 | II-43 |
| T2-138 | I-3 | II-1 | II-42 | | T2-176 | I-3 | II-20 | II-44 |
| T2-139 | I-3 | II-1 | II-43 | | T2-177 | I-3 | II-21 | II-41 |
| T2-140 | I-3 | II-1 | II-44 | | T2-178 | I-3 | II-21 | II-42 |
| T2-141 | I-3 | II-2 | II-41 | | T2-179 | I-3 | II-21 | II-43 |
| T2-142 | I-3 | II-2 | II-42 | | T2-180 | I-3 | II-21 | II-44 |
| T2-143 | I-3 | II-2 | II-43 | | T2-181 | I-3 | II-23 | II-41 |
| T2-144 | I-3 | II-2 | II-44 | | T2-182 | I-3 | II-23 | II-42 |
| T2-145 | I-3 | II-4 | II-41 | | T2-183 | I-3 | II-23 | II-43 |
| T2-146 | I-3 | II-4 | II-42 | | T2-184 | I-3 | II-23 | II-44 |

(continued)

| M | C1 | C2 | C3 | | M | C1 | C2 | C3 |
|---|---|---|---|---|---|---|---|---|
| T2-147 | I-3 | II-4 | II-43 | | T2-185 | I-3 | II-24 | II-41 |
| T2-148 | I-3 | II-4 | II-44 | | T2-186 | I-3 | II-24 | II-42 |
| T2-149 | I-3 | II-5 | II-41 | | T2-187 | I-3 | II-24 | II-43 |
| T2-150 | I-3 | II-5 | II-42 | | T2-188 | I-3 | II-24 | II-44 |
| T2-189 | I-3 | II-26 | II-41 | | T2-227 | I-4 | II-13 | II-43 |
| T2-190 | I-3 | II-26 | II-42 | | T2-228 | I-4 | II-13 | II-44 |
| T2-191 | I-3 | II-26 | II-43 | | T2-229 | I-4 | II-17 | II-41 |
| T2-192 | I-3 | II-26 | II-44 | | T2-230 | I-4 | II-17 | II-42 |
| T2-193 | I-3 | II-29 | II-41 | | T2-231 | I-4 | II-17 | II-43 |
| T2-194 | I-3 | II-29 | II-42 | | T2-232 | I-4 | II-17 | II-44 |
| T2-195 | I-3 | II-29 | II-43 | | T2-233 | I-4 | II-18 | II-41 |
| T2-196 | I-3 | II-29 | II-44 | | T2-234 | I-4 | II-18 | II-42 |
| T2-197 | I-3 | II-33 | II-41 | | T2-235 | I-4 | II-18 | II-43 |
| T2-198 | I-3 | II-33 | II-42 | | T2-236 | I-4 | II-18 | II-44 |
| T2-199 | I-3 | II-33 | II-43 | | T2-237 | I-4 | II-19 | II-41 |
| T2-200 | I-3 | II-33 | II-44 | | T2-238 | I-4 | II-19 | II-42 |
| T2-201 | I-3 | II-35 | II-41 | | T2-239 | I-4 | II-19 | II-43 |
| T2-202 | I-3 | II-35 | II-42 | | T2-240 | I-4 | II-19 | II-44 |
| T2-203 | I-3 | II-35 | II-43 | | T2-241 | I-4 | II-20 | II-41 |
| T2-204 | I-3 | II-35 | II-44 | | T2-242 | I-4 | II-20 | II-42 |
| T2-205 | I-4 | II-1 | II-41 | | T2-243 | I-4 | II-20 | II-43 |
| T2-206 | I-4 | II-1 | II-42 | | T2-244 | I-4 | II-20 | II-44 |
| T2-207 | I-4 | II-1 | II-43 | | T2-245 | I-4 | II-21 | II-41 |
| T2-208 | I-4 | II-1 | II-44 | | T2-246 | I-4 | II-21 | II-42 |
| T2-209 | I-4 | II-2 | II-41 | | T2-247 | I-4 | II-21 | II-43 |
| T2-210 | I-4 | II-2 | II-42 | | T2-248 | I-4 | II-21 | II-44 |
| T2-211 | I-4 | II-2 | II-43 | | T2-249 | I-4 | II-23 | II-41 |
| T2-212 | I-4 | II-2 | II-44 | | T2-250 | I-4 | II-23 | II-42 |
| T2-213 | I-4 | II-4 | II-41 | | T2-251 | I-4 | II-23 | II-43 |
| T2-214 | I-4 | II-4 | II-42 | | T2-252 | I-4 | II-23 | II-44 |
| T2-215 | I-4 | II-4 | II-43 | | T2-253 | I-4 | II-24 | II-41 |
| T2-216 | I-4 | II-4 | II-44 | | T2-254 | I-4 | II-24 | II-42 |
| T2-217 | I-4 | II-5 | II-41 | | T2-255 | I-4 | II-24 | II-43 |
| T2-218 | I-4 | II-5 | II-42 | | T2-256 | I-4 | II-24 | II-44 |
| T2-219 | I-4 | II-5 | II-43 | | T2-257 | I-4 | II-26 | II-41 |
| T2-220 | I-4 | II-5 | II-44 | | T2-258 | I-4 | II-26 | II-42 |
| T2-221 | I-4 | II-7 | II-41 | | T2-259 | I-4 | II-26 | II-43 |
| T2-222 | I-4 | II-7 | II-42 | | T2-260 | I-4 | II-26 | II-44 |

(continued)

| M | C1 | C2 | C3 | | M | C1 | C2 | C3 |
|---|---|---|---|---|---|---|---|---|
| T2-223 | I-4 | II-7 | II-43 | | T2-261 | I-4 | II-29 | II-41 |
| T2-224 | I-4 | II-7 | II-44 | | T2-262 | I-4 | II-29 | II-42 |
| T2-225 | I-4 | II-13 | II-41 | | T2-263 | I-4 | II-29 | II-43 |
| T2-226 | I-4 | II-13 | II-42 | | T2-264 | I-4 | II-29 | II-44 |
| T2-265 | I-4 | II-33 | II-41 | | T2-270 | I-4 | II-35 | II-42 |
| T2-266 | I-4 | II-33 | II-42 | | T2-271 | I-4 | II-35 | II-43 |
| T2-267 | I-4 | II-33 | II-43 | | T2-272 | I-4 | II-35 | II-44 |
| T2-268 | I-4 | II-33 | II-44 | | | | | |
| T2-269 | I-4 | II-35 | II-41 | | | | | |

According to a further embodiment, preference is given to mixtures comprising a component 1, a component 2 and a component 3, where preference is given in particular to those mixtures in which component 2 is a compound II selected from the group of the following compounds:

II-6 kresoxim-methyl

II-7 pyraclostrobin

II-21 fluxypyroxad

II-22 sedaxane

II-24 fluopyram II-25 penflufen

II-36 azoxystrobin

II-37 trifloxystrobin

II-38 penthiopyrad

and in which component 3 is a compound II selected from the group of the following compounds:

II-30a fipronil

II-32a clothianidin

II-34a imidacloprid

II-35a thiamethoxam

Such mixtures according to the invention are listed explicitly in Table T3. According to a specific embodiment, these are ternary mixtures comprising, as active compounds, in each case only these three components.

Table T3: Mixtures T3-1 to T3-180 comprising, as component 1, a preferred compound I, a component 2 selected from the active compounds preferred for component 2 and a component 3 selected from the active compounds preferred for component 3. In the table below, in each case one row of a mixture according to the invention corresponds to the respective mixture components 1 to 3 listed in the row in question. "C" denotes "component", "M" denotes "mixture".

| Mixture | C 1 | C 2 | C 3 | | Mixture | C 1 | C 2 | C 3 |
|---|---|---|---|---|---|---|---|---|
| T3-1 | I-1 | II-6 | II-30a | | T3-3 | I-1 | II-6 | II-34a |

(continued)

| Mixture | C 1 | C 2 | C 3 | | Mixture | C 1 | C 2 | C 3 |
|---|---|---|---|---|---|---|---|---|
| T3-2 | I-1 | II-6 | II-32a | | T3-4 | I-1 | II-6 | II-35a |
| T3-5 | I-1 | II-7 | II-30a | | T3-45 | I-2 | II-21 | II-30a |
| T3-6 | I-1 | II-7 | II-32a | | T3-46 | I-2 | II-21 | II-32a |
| T3-7 | I-1 | II-7 | II-34a | | T3-47 | I-2 | II-21 | II-34a |
| T3-8 | I-1 | II-7 | II-35a | | T3-48 | I-2 | II-21 | II-35a |
| T3-9 | I-1 | II-21 | II-30a | | T3-49 | I-2 | II-22 | II-30a |
| T3-10 | I-1 | II-21 | II-32a | | T3-50 | I-2 | II-22 | II-32a |
| T3-11 | I-1 | II-21 | II-34a | | T3-51 | I-2 | II-22 | II-34a |
| T3-12 | I-1 | II-21 | II-35a | | T3-52 | I-2 | II-22 | II-35a |
| T3-13 | I-1 | II-22 | II-30a | | T3-53 | I-2 | II-24 | II-30a |
| T3-14 | I-1 | II-22 | II-32a | | T3-54 | I-2 | II-24 | II-32a |
| T3-15 | I-1 | II-22 | II-34a | | T3-55 | I-2 | II-24 | II-34a |
| T3-16 | I-1 | II-22 | II-35a | | T3-56 | I-2 | II-24 | II-35a |
| T3-17 | I-1 | II-24 | II-30a | | T3-57 | I-2 | II-25 | II-30a |
| T3-18 | I-1 | II-24 | II-32a | | T3-58 | I-2 | II-25 | II-32a |
| T3-19 | I-1 | II-24 | II-34a | | T3-59 | I-2 | II-25 | II-34a |
| T3-20 | I-1 | II-24 | II-35a | | T3-60 | I-2 | II-25 | II-35a |
| T3-21 | I-1 | II-25 | II-30a | | T3-61 | I-2 | II-36 | II-30a |
| T3-22 | I-1 | II-25 | II-32a | | T3-62 | I-2 | II-36 | II-32a |
| T3-23 | I-1 | II-25 | II-34a | | T3-63 | I-2 | II-36 | II-34a |
| T3-24 | I-1 | II-25 | II-35a | | T3-64 | I-2 | II-36 | II-35a |
| T3-25 | I-1 | II-36 | II-30a | | T3-65 | I-2 | II-37 | II-30a |
| T3-26 | I-1 | II-36 | II-32a | | T3-66 | I-2 | II-37 | II-32a |
| T3-27 | I-1 | II-36 | II-34a | | T3-67 | I-2 | II-37 | II-34a |
| T3-28 | I-1 | II-36 | II-35a | | T3-68 | I-2 | II-37 | II-35a |
| T3-29 | I-1 | II-37 | II-30a | | T3-69 | I-2 | II-38 | II-30a |
| T3-30 | I-1 | II-37 | II-32a | | T3-70 | I-2 | II-38 | II-32a |
| T3-31 | I-1 | II-37 | II-34a | | T3-71 | I-2 | II-38 | II-34a |
| T3-32 | I-1 | II-37 | II-35a | | T3-72 | I-2 | II-38 | II-35a |
| T3-33 | I-1 | II-38 | II-30a | | T3-73 | I-3 | II-6 | II-30a |
| T3-34 | I-1 | II-38 | II-32a | | T3-74 | I-3 | II-6 | II-32a |
| T3-35 | I-1 | II-38 | II-34a | | T3-75 | I-3 | II-6 | II-34a |
| T3-36 | I-1 | II-38 | II-35a | | T3-76 | I-3 | II-6 | II-35a |
| T3-37 | I-2 | II-6 | II-30a | | T3-77 | I-3 | II-7 | II-30a |
| T3-38 | I-2 | II-6 | II-32a | | T3-78 | I-3 | II-7 | II-32a |
| T3-39 | I-2 | II-6 | II-34a | | T3-79 | I-3 | II-7 | II-34a |
| T3-40 | I-2 | II-6 | II-35a | | T3-80 | I-3 | II-7 | II-35a |
| T3-41 | I-2 | II-7 | II-30a | | T3-81 | I-3 | II-21 | II-30a |

(continued)

| Mixture | C 1 | C 2 | C 3 | | Mixture | C 1 | C 2 | C 3 |
|---|---|---|---|---|---|---|---|---|
| T3-42 | I-2 | II-7 | II-32a | | T3-82 | I-3 | II-21 | II-32a |
| T3-43 | I-2 | II-7 | II-34a | | T3-83 | I-3 | II-21 | II-34a |
| T3-44 | I-2 | II-7 | II-35a | | T3-84 | I-3 | II-21 | II-35a |
| T3-85 | I-3 | II-22 | II-30a | | T3-125 | I-3 | II-24 | II-30a |
| T3-86 | I-3 | II-22 | II-32a | | T3-126 | I-3 | II-24 | II-32a |
| T3-87 | I-3 | II-22 | II-34a | | T3-127 | I-3 | II-24 | II-34a |
| T3-88 | I-3 | II-22 | II-35a | | T3-128 | I-3 | II-24 | II-35a |
| T3-89 | I-3 | II-24 | II-30a | | T3-129 | I-3 | II-25 | II-30a |
| T3-90 | I-3 | II-24 | II-32a | | T3-130 | I-3 | II-25 | II-32a |
| T3-91 | I-3 | II-24 | II-34a | | T3-131 | I-3 | II-25 | II-34a |
| T3-92 | I-3 | II-24 | II-35a | | T3-132 | I-3 | II-25 | II-35a |
| T3-93 | I-3 | II-25 | II-30a | | T3-133 | I-3 | II-36 | II-30a |
| T3-94 | I-3 | II-25 | II-32a | | T3-134 | I-3 | II-36 | II-32a |
| T3-95 | I-3 | II-25 | II-34a | | T3-135 | I-3 | II-36 | II-34a |
| T3-96 | I-3 | II-25 | II-35a | | T3-136 | I-3 | II-36 | II-35a |
| T3-97 | I-3 | II-36 | II-30a | | T3-137 | I-3 | II-37 | II-30a |
| T3-98 | I-3 | II-36 | II-32a | | T3-138 | I-3 | II-37 | II-32a |
| T3-99 | I-3 | II-36 | II-34a | | T3-139 | I-3 | II-37 | II-34a |
| T3-100 | I-3 | II-36 | II-35a | | T3-140 | I-3 | II-37 | II-35a |
| T3-101 | I-3 | II-37 | II-30a | | T3-141 | I-3 | II-38 | II-30a |
| T3-102 | I-3 | II-37 | II-32a | | T3-142 | I-3 | II-38 | II-32a |
| T3-103 | I-3 | II-37 | II-34a | | T3-143 | I-3 | II-38 | II-34a |
| T3-104 | I-3 | II-37 | II-35a | | T3-144 | I-3 | II-38 | II-35a |
| T3-105 | I-3 | II-38 | II-30a | | T3-145 | I-4 | II-6 | II-30a |
| T3-106 | I-3 | II-38 | II-32a | | T3-146 | I-4 | II-6 | II-32a |
| T3-107 | I-3 | II-38 | II-34a | | T3-147 | I-4 | II-6 | II-34a |
| T3-108 | I-3 | II-38 | II-35a | | T3-148 | I-4 | II-6 | II-35a |
| T3-109 | I-3 | II-6 | II-30a | | T3-149 | I-4 | II-7 | II-30a |
| T3-110 | I-3 | II-6 | II-32a | | T3-150 | I-4 | II-7 | II-32a |
| T3-111 | I-3 | II-6 | II-34a | | T3-151 | I-4 | II-7 | II-34a |
| T3-112 | I-3 | II-6 | II-35a | | T3-152 | I-4 | II-7 | II-35a |
| T3-113 | I-3 | II-7 | II-30a | | T3-153 | I-4 | II-21 | II-30a |
| T3-114 | I-3 | II-7 | II-32a | | T3-154 | I-4 | II-21 | II-32a |
| T3-115 | I-3 | II-7 | II-34a | | T3-155 | I-4 | II-21 | II-34a |
| T3-116 | I-3 | II-7 | II-35a | | T3-156 | I-4 | II-21 | II-35a |
| T3-117 | I-3 | II-21 | II-30a | | T3-157 | I-4 | II-22 | II-30a |
| T3-118 | I-3 | II-21 | II-32a | | T3-158 | I-4 | II-22 | II-32a |
| T3-119 | I-3 | II-21 | II-34a | | T3-159 | I-4 | II-22 | II-34a |

(continued)

| Mixture | C 1 | C 2 | C 3 | | Mixture | C 1 | C 2 | C 3 |
|---|---|---|---|---|---|---|---|---|
| T3-120 | I-3 | II-21 | II-35a | | T3-160 | I-4 | II-22 | II-35a |
| T3-121 | I-3 | II-22 | II-30a | | T3-161 | I-4 | II-24 | II-30a |
| T3-122 | I-3 | II-22 | II-32a | | T3-162 | I-4 | II-24 | II-32a |
| T3-123 | I-3 | II-22 | II-34a | | T3-163 | I-4 | II-24 | II-34a |
| T3-124 | I-3 | II-22 | II-35a | | T3-164 | I-4 | II-24 | II-35a |
| T3-165 | I-4 | II-25 | II-30a | | T3-173 | I-4 | II-37 | II-30a |
| T3-166 | I-4 | II-25 | II-32a | | T3-174 | I-4 | II-37 | II-32a |
| T3-167 | I-4 | II-25 | II-34a | | T3-175 | I-4 | II-37 | II-34a |
| T3-168 | I-4 | II-25 | II-35a | | T3-176 | I-4 | II-37 | II-35a |
| T3-169 | I-4 | II-36 | II-30a | | T3-177 | I-4 | II-38 | II-30a |
| T3-170 | I-4 | II-36 | II-32a | | T3-178 | I-4 | II-38 | II-32a |
| T3-171 | I-4 | II-36 | II-34a | | T3-179 | I-4 | II-38 | II-34a |
| T3-172 | I-4 | II-36 | II-35a | | T3-180 | I-4 | II-38 | II-35a |

According to a further embodiment, preference is given to mixtures comprising a component 1, a component 2 and a component 3, where preference is given in particular to those mixtures in which component 2 is a compound **II** selected from the group of the following compounds:

II-32a clothianidin
II-34a imidacloprid
II-35a thiamethoxam,

and component 3 is fipronil (compound II-30a). Such mixtures according to the invention are listed explicitly in Table T4. According to a specific embodiment, these are ternary mixtures comprising, as active compounds, in each case only these three components.

Table T4: Mixtures T4-1 to T4-12 comprising, as component 1, a preferred compound I and components selected from preferred active compounds II of group O) and fipronil as third component. In the table below, in each case one row corresponds to a mixture according to the invention having the respective mixture components 1 to 3 given in the row in question. "C" denotes "component", "M" denotes "mixture".

| M | C1 | C2 | C3 | | M | C1 | C2 | C3 |
|---|---|---|---|---|---|---|---|---|
| T4-1 | I-1 | II-32a | II-30a | | T4-8 | I-3 | II-34a | II-30a |
| T4-2 | I-1 | II-34a | II-30a | | T4-9 | I-3 | II-35a | II-30a |
| T4-3 | I-1 | II-35a | II-30a | | T4-10 | I-4 | II-32a | II-30a |
| T4-4 | I-2 | II-32a | II-30a | | T4-11 | I-4 | II-34a | II-30a |
| T4-5 | I-2 | II-34a | II-30a | | T4-12 | I-4 | II-35a | II-30a |
| T4-6 | I-2 | II-35a | II-30a | | | | | |
| T4-7 | I-3 | II-32a | II-30a | | | | | |

According to a further embodiment, preference is given to ternary mixtures comprising a component 1, a component 2 and a component 3, where preference is given in particular to those mixtures in which component 2 is a compound **II** selected from the group of the following compounds:

II-6 kresoxim-methyl

II-7 pyraclostrobin

II-21 fluxypyroxad

II-22 sedaxane

II-24 fluopyram

II-25 penflufen

II-36 azoxystrobin

II-37 trifloxystrobin

II-38 penthiopyrad

and component 3 is fipronil (compound II-30a). Such mixtures are listed explicitly in Table T5 below. According to a specific embodiment, these are ternary mixtures comprising, as active compounds, in each case only these three components.

Table T5: Mixtures T5-1 to T5-36 comprising, as component 1, a preferred compound I and components selected from preferred active compounds II of group O) and fipronil as third component. In the table below, in each case one row corresponds to a mixture according to the invention having the respective mixture components 1 to 3 given in the row in question. "C" denotes "component", "M" denotes "mixture".

| M | C1 | C2 | C3 |
|---|---|---|---|
| T5-1 | I-1 | II-6 | II-30a |
| T5-2 | I-1 | II-7 | II-30a |
| T5-3 | I-1 | II-21 | II-30a |
| T5-4 | I-1 | II-22 | II-30a |
| T5-5 | I-1 | II-24 | II-30a |
| T5-6 | I-1 | II-25 | II-30a |
| T5-7 | I-1 | II-36 | II-30a |
| T5-8 | I-1 | II-37 | II-30a |
| T5-9 | I-1 | II-38 | II-30a |
| T5-10 | I-2 | II-6 | II-30a |
| T5-11 | I-2 | II-7 | II-30a |
| T5-12 | I-2 | II-21 | II-30a |
| T5-13 | I-2 | II-22 | II-30a |
| T5-14 | I-2 | II-24 | II-30a |
| T5-15 | I-2 | II-25 | II-30a |
| T5-16 | I-2 | II-36 | II-30a |
| T5-34 | I-4 | II-36 | II-30a |
| T5-35 | I-4 | II-37 | II-30a |
| T5-17 | I-2 | II-37 | II-30a |
| T5-18 | I-2 | II-38 | II-30a |
| T5-19 | I-3 | II-6 | II-30a |
| T5-20 | I-3 | II-7 | II-30a |
| T5-21 | I-3 | II-21 | II-30a |
| T5-22 | I-3 | II-22 | II-30a |
| T5-23 | I-3 | II-24 | II-30a |
| T5-24 | I-3 | II-25 | II-30a |
| T5-25 | I-3 | II-36 | II-30a |
| T5-26 | I-3 | II-37 | II-30a |
| T5-27 | I-3 | II-38 | II-30a |
| T5-28 | I-4 | II-6 | II-30a |
| T5-29 | I-4 | II-7 | II-30a |
| T5-30 | I-4 | II-21 | II-30a |
| T5-31 | I-4 | II-22 | II-30a |
| T5-32 | I-4 | II-24 | II-30a |
| T5-33 | I-4 | II-25 | II-30a |
| T5-36 | I-4 | II-38 | II-30a |

According to a further embodiment, the invention relates to mixtures comprising a component 1, a component 2, a component 3 and a component 4.

Preferred fungicidal components 4 are the following components:

II-2 metconazole

II-3 tebuconazole

II-5 prothioconazole

II-7 pyraclostrobin

II-13 fenpropimorph

II-17 chlorothalonil

II-18 metrafenone

II-21 fluxapyroxad

II-35 difenoconazole

II-36 azoxystrobin

Specifically, in mixtures comprising four components, the component 2 is selected from:

II-1 epoxiconazole

II-2 metconazole

II-4 triticonazole

II-5 prothioconazole

II-7 pyraclostrobin

II-13 fenpropimorph

II-17 chlorothalonil

II-18 metrafenone

II-19 bixafen

II-20 boscalid

II-21 fluxapyroxad

II-23 isopyrazam II-24 fluopyram

II-26 cyflufenamid

II-29 proquinazid

II-33 prochloraz

II-35 difenoconazole

and the component 3 is selected from:

II-5 prothioconazole

II-7 pyraclostrobin

II-13 fenpropimorph

II-17 chlorothalonil

II-18 metrafenone

II-20 boscalid

II-21 fluxapyroxad

II-26 cyflufenamid

II-33 prochloraz

II-35 difenoconazole

and the component 4 is selected from

II-7 pyraclostrobin

11-13 fenpropimorph

II-17 chlorothalonil

Particularly preferred mixtures of the present invention comprising four components are the mixtures listed in the tables Q below:

Table QI.1: The mixtures QI.1-1 to QI.1-272 below, comprising as component 1 the compound I-1, a component 2 selected from the active compounds II preferred for component 2, a component 3 selected from the active compounds II preferred for component 3 and a component 4 selected from the active compounds II preferred for component 4. In the table below, in each case one row corresponds to a mixture comprisning 4 components of the invention having the mixing components 1 to 4 stated in each case in the row in question.

| M | C1 | C2 | C3 | C4 |
|---|---|---|---|---|
| QI.1-1 | I-1 | II-1 | II-5 | II-7 |
| QI.1-2 | I-1 | II-1 | II-5 | II-13 |
| QI.1-3 | I-1 | II-1 | II-5 | II-17 |
| QI.1-4 | I-1 | II-1 | II-7 | II-13 |
| QI.1-5 | I-1 | II-1 | II-7 | II-17 |
| QI.1-6 | I-1 | II-1 | II-13 | II-17 |
| QI.1-7 | I-1 | II-1 | II-18 | II-7 |
| QI.1-8 | I-1 | II-1 | II-18 | II-13 |
| QI.1-9 | I-1 | II-1 | II-18 | II-17 |
| QI.1-10 | I-1 | II-1 | II-20 | II-7 |
| QI.1-11 | I-1 | II-1 | II-20 | II-13 |
| QI.1-12 | I-1 | II-1 | II-20 | II-17 |
| QI.1-13 | I-1 | II-1 | II-21 | II-7 |
| QI.1-14 | I-1 | II-1 | II-21 | II-13 |
| QI.1-15 | I-1 | II-1 | II-21 | II-17 |

| M | C1 | C2 | C3 | C4 |
|---|---|---|---|---|
| Q1.1-39 | I-1 | II-2 | II-21 | II-17 |
| QI.1-40 | I-1 | II-2 | II-26 | II-7 |
| QI.1-41 | I-1 | II-2 | II-26 | II-13 |
| QI.1-42 | I-1 | II-2 | II-26 | II-17 |
| QI.1-43 | I-1 | II-2 | II-33 | II-7 |
| QI.1-44 | I-1 | II-2 | II-33 | II-13 |
| QI.1-45 | I-1 | II-2 | II-33 | II-17 |
| QI.1-46 | I-1 | II-2 | II-35 | II-7 |
| QI.1-47 | I-1 | II-2 | II-35 | II-13 |
| QI.1-48 | I-1 | II-2 | II-35 | II-17 |
| QI.1-49 | I-1 | II-4 | II-5 | II-7 |
| QI.1-50 | I-1 | II-4 | II-5 | II-13 |
| QI.1-51 | I-1 | II-4 | II-5 | II-17 |
| QI.1-52 | I-1 | II-4 | II-7 | II-13 |
| QI.1-53 | I-1 | II-4 | II-7 | II-17 |

(continued)

| M | C1 | C2 | C3 | C4 | | M | C1 | C2 | C3 | C4 |
|---|---|---|---|---|---|---|---|---|---|---|
| QI.1-16 | I-1 | II-1 | II-26 | II-7 | | QI.1-54 | I-1 | II-4 | II-13 | II-17 |
| Q1.1-17 | I-1 | II-1 | II-26 | II-13 | | QI.1-55 | I-1 | II-4 | II-18 | II-7 |
| QI.1-18 | I-1 | II-1 | II-26 | II-17 | | QI.1-56 | I-1 | II-4 | II-18 | II-13 |
| QI.1-19 | I-1 | II-1 | II-33 | II-7 | | Q1.1-57 | I-1 | II-4 | II-18 | II-17 |
| QI.1-20 | I-1 | II-1 | II-33 | II-13 | | QI.1-58 | I-1 | II-4 | II-20 | II-7 |
| QI.1-21 | I-1 | II-1 | II-33 | II-17 | | QI.1-59 | I-1 | II-4 | II-20 | II-13 |
| QI.1-22 | I-1 | II-1 | II-35 | II-7 | | QI.1-60 | I-1 | II-4 | II-20 | II-17 |
| QI.1-23 | I-1 | II-1 | II-35 | II-13 | | QI.1-61 | I-1 | II-4 | II-21 | II-7 |
| Q1.1-24 | I-1 | II-1 | II-35 | II-17 | | QI.1-62 | I-1 | II-4 | II-21 | II-13 |
| Q1.1-25 | I-1 | II-2 | II-5 | II-7 | | QI.1-63 | I-1 | II-4 | II-21 | II-17 |
| QI.1-26 | I-1 | II-2 | II-5 | II-13 | | QI.1-64 | I-1 | II-4 | II-26 | II-7 |
| QI.1-27 | I-1 | II-2 | II-5 | II-17 | | QI.1-65 | I-1 | II-4 | II-26 | II-13 |
| Q1.1-28 | I-1 | II-2 | II-7 | II-13 | | QI.1-66 | I-1 | II-4 | II-26 | II-17 |
| Q1.1-29 | I-1 | II-2 | II-7 | II-17 | | QI.1-67 | I-1 | II-4 | II-33 | II-7 |
| QI.1-30 | I-1 | II-2 | II-13 | II-17 | | QI.1-68 | I-1 | II-4 | II-33 | II-13 |
| QI.1-31 | I-1 | II-2 | II-18 | II-7 | | Q1.1-69 | I-1 | II-4 | II-33 | II-17 |
| Q1.1-32 | I-1 | II-2 | II-18 | II-13 | | QI.1-70 | I-1 | II-4 | II-35 | II-7 |
| Q1.1-33 | I-1 | II-2 | II-18 | II-17 | | QI.1-71 | I-1 | II-4 | II-35 | II-13 |
| Q1.1-34 | I-1 | II-2 | II-20 | II-7 | | QI.1-72 | I-1 | II-4 | II-35 | II-17 |
| QI.1-35 | I-1 | II-2 | II-20 | II-13 | | QI.1-73 | I-1 | II-5 | II-7 | II-13 |
| Q1.1-36 | I-1 | II-2 | II-20 | II-17 | | QI.1-74 | I-1 | II-5 | II-7 | II-17 |
| Q1.1-37 | I-1 | II-2 | II-21 | II-7 | | QI.1-75 | I-1 | II-5 | II-13 | II-17 |
| Q1.1-38 | I-1 | II-2 | II-21 | II-13 | | QI.1-76 | I-1 | II-5 | II-18 | II-7 |
| QI.1-77 | I-1 | II-5 | II-18 | II-13 | | Q1.1-115 | I-1 | II-13 | II-26 | II-7 |
| QI.1-78 | I-1 | II-5 | II-18 | II-17 | | QI.1-116 | I-1 | II-13 | II-26 | II-17 |
| QI.1-79 | I-1 | II-5 | II-20 | II-7 | | QI.1-117 | I-1 | II-13 | II-33 | II-7 |
| QI.1-80 | I-1 | II-5 | II-20 | II-13 | | QI.1-118 | I-1 | II-13 | II-33 | II-17 |
| QI.1-81 | I-1 | II-5 | II-20 | II-17 | | QI.1-119 | I-1 | II-13 | II-35 | II-7 |
| QI.1-82 | I-1 | II-5 | II-21 | II-7 | | QI.1-120 | I-1 | II-13 | II-35 | II-17 |
| QI.1-83 | I-1 | II-5 | II-21 | II-13 | | QI.1-121 | I-1 | II-17 | II-18 | II-7 |
| QI.1-84 | I-1 | II-5 | II-21 | II-17 | | QI.1-122 | I-1 | II-17 | II-18 | II-13 |
| QI.1-85 | I-1 | II-5 | II-26 | II-7 | | QI.1-123 | I-1 | II-17 | II-20 | II-7 |
| QI.1-86 | I-1 | II-5 | II-26 | II-13 | | QI.1-124 | I-1 | II-17 | II-20 | II-13 |
| QI.1-87 | I-1 | II-5 | II-26 | II-17 | | QI.1-125 | I-1 | II-17 | II-21 | II-7 |
| QI.1-88 | I-1 | II-5 | II-33 | II-7 | | QI.1-126 | I-1 | II-17 | II-21 | II-13 |
| QI.1-89 | I-1 | II-5 | II-33 | II-1 | | QI.1-127 | I-1 | II-17 | II-26 | II-7 |

(continued)

| M | C1 | C2 | C3 | C4 | | M | C1 | C2 | C3 | C4 |
|---|---|---|---|---|---|---|---|---|---|---|
| QI.1-90 | I-1 | II-5 | II-33 | II-17 | | QI.1-128 | I-1 | II-17 | II-26 | II-13 |
| QI.1-91 | I-1 | II-5 | II-35 | II-7 | | QI.1-129 | I-1 | II-17 | II-33 | II-7 |
| QI.1-92 | I-1 | II-5 | II-35 | II-13 | | QI.1-130 | I-1 | II-17 | II-33 | II-13 |
| QI.1-93 | I-1 | II-5 | II-35 | II-17 | | QI.1-131 | I-1 | II-17 | II-35 | II-7 |
| QI.1-94 | I-1 | II-7 | II-5 | II-17 | | QI.1-132 | I-1 | II-17 | II-35 | II-13 |
| QI.1-95 | I-1 | II-7 | II-13 | II-17 | | QI.1-133 | I-1 | II-18 | II-20 | II-7 |
| QI.1-96 | I-1 | II-7 | II-18 | II-13 | | QI.1-134 | I-1 | II-18 | II-20 | II-13 |
| QI.1-97 | I-1 | II-7 | II-18 | II-17 | | QI.1-135 | I-1 | II-18 | II-20 | II-17 |
| QI.1-98 | I-1 | II-7 | II-20 | II-13 | | QI.1-136 | I-1 | II-18 | II-21 | II-7 |
| QI.1-99 | I-1 | II-7 | II-20 | II-17 | | QI.1-137 | I-1 | II-18 | II-21 | II-13 |
| QI.1-100 | I-1 | II-7 | II-21 | II-13 | | QI.1-138 | I-1 | II-18 | II-21 | II-17 |
| QI.1-101 | I-1 | II-7 | II-21 | II-17 | | QI.1-139 | I-1 | II-18 | II-26 | II-7 |
| QI.1-102 | I-1 | II-7 | II-26 | II-13 | | QI.1-140 | I-1 | II-18 | II-26 | II-13 |
| QI.1-103 | I-1 | II-7 | II-26 | II-17 | | QI.1-141 | I-1 | II-18 | II-26 | II-17 |
| QI.1-104 | I-1 | II-7 | II-33 | II-13 | | QI.1-142 | I-1 | II-18 | II-33 | II-7 |
| QI.1-105 | I-1 | II-7 | II-33 | II-17 | | QI.1-143 | I-1 | II-18 | II-33 | II-13 |
| QI.1-106 | I-1 | II-7 | II-35 | II-13 | | QI.1-144 | I-1 | II-18 | II-33 | II-17 |
| QI.1-107 | I-1 | II-7 | II-35 | II-17 | | QI.1-145 | I-1 | II-18 | II-35 | II-7 |
| QI.1-108 | I-1 | II-13 | II-17 | II-7 | | QI.1-146 | I-1 | II-18 | II-35 | II-13 |
| QI.1-109 | I-1 | II-13 | II-18 | II-7 | | QI.1-147 | I-1 | II-18 | II-35 | II-17 |
| QI.1-110 | I-1 | II-13 | II-18 | II-17 | | QI.1-148 | I-1 | II-19 | II-5 | II-7 |
| QI.1-111 | I-1 | II-13 | II-20 | II-7 | | QI.1-149 | I-1 | II-19 | II-5 | II-13 |
| QI.1-112 | I-1 | II-13 | II-20 | II-17 | | QI.1-150 | I-1 | II-19 | II-5 | II-17 |
| QI.1-113 | I-1 | II-13 | II-21 | II-7 | | QI.1-151 | I-1 | II-19 | II-7 | II-13 |
| QI.1-114 | I-1 | II-13 | II-21 | II-17 | | QI.1-152 | I-1 | II-19 | II-13 | II-17 |
| QI.1-153 | I-1 | II-19 | II-18 | II-7 | | QI.1-191 | I-1 | II-21 | II-35 | II-17 |
| QI.1-154 | I-1 | II-19 | II-18 | II-13 | | QI.1-192 | I-1 | II-23 | II-5 | II-7 |
| QI.1-155 | I-1 | II-19 | II-18 | II-17 | | QI.1-193 | I-1 | II-23 | II-5 | II-13 |
| QI.1-156 | I-1 | II-19 | II-20 | II-7 | | QI.1-194 | I-1 | II-23 | II-5 | II-17 |
| QI.1-157 | I-1 | II-19 | II-20 | II-13 | | QI.1-195 | I-1 | II-23 | II-7 | II-7 |
| QI.1-158 | I-1 | II-19 | II-20 | II-17 | | QI.1-196 | I-1 | II-23 | II-7 | II-13 |
| QI.1-159 | I-1 | II-19 | II-21 | II-7 | | QI.1-197 | I-1 | II-23 | II-13 | II-17 |
| QI.1-160 | I-1 | II-19 | II-21 | II-13 | | QI.1-198 | I-1 | II-23 | II-18 | II-7 |
| QI.1-161 | I-1 | II-19 | II-21 | II-17 | | QI.1-199 | I-1 | II-23 | II-18 | II-13 |
| QI.1-162 | I-1 | II-19 | II-26 | II-7 | | QI.1-200 | I-1 | II-23 | II-18 | II-17 |
| QI.1-163 | I-1 | II-19 | II-26 | II-13 | | QI.1-201 | I-1 | II-23 | II-20 | II-7 |
| QI.1-164 | I-1 | II-19 | II-26 | II-17 | | QI.1-202 | I-1 | II-23 | II-20 | II-13 |

(continued)

| M | C1 | C2 | C3 | C4 | | M | C1 | C2 | C3 | C4 |
|---|---|---|---|---|---|---|---|---|---|---|
| QI.1-165 | I-1 | II-19 | II-33 | II-7 | | QI.1-203 | I-1 | II-23 | II-20 | II-17 |
| QI.1-166 | I-1 | II-19 | II-33 | II-13 | | QI.1-204 | I-1 | II-23 | II-21 | II-7 |
| QI.1-167 | I-1 | II-19 | II-33 | II-17 | | QI.1-205 | I-1 | II-23 | II-21 | II-13 |
| QI.1-168 | I-1 | II-19 | II-35 | II-7 | | QI.1-206 | I-1 | II-23 | II-21 | II-17 |
| QI.1-169 | I-1 | II-19 | II-35 | II-13 | | QI.1-207 | I-1 | II-23 | II-26 | II-7 |
| QI.1-170 | I-1 | II-19 | II-35 | II-17 | | QI.1-208 | I-1 | II-23 | II-26 | II-13 |
| Q1.1-171 | I-1 | II-20 | II-21 | II-7 | | QI.1-209 | I-1 | II-23 | II-26 | II-17 |
| QI.1-172 | I-1 | II-20 | II-21 | II-13 | | QI.1-210 | I-1 | II-23 | II-33 | II-7 |
| QI.1-173 | I-1 | II-20 | II-21 | II-17 | | QI.1-211 | I-1 | II-23 | II-33 | II-13 |
| QI.1-174 | I-1 | II-20 | II-26 | II-7 | | QI.1-212 | I-1 | II-23 | II-33 | II-17 |
| QI.1-175 | I-1 | II-20 | II-26 | II-13 | | QI.1-213 | I-1 | II-23 | II-35 | II-7 |
| QI.1-176 | I-1 | II-20 | II-26 | II-17 | | QI.1-214 | I-1 | II-23 | II-35 | II-13 |
| QI.1-177 | I-1 | II-20 | II-33 | II-7 | | QI.1-215 | I-1 | II-23 | II-35 | II-17 |
| QI.1-178 | I-1 | II-20 | II-33 | II-13 | | QI.1-216 | I-1 | II-24 | II-5 | II-7 |
| QI.1-179 | I-1 | II-20 | II-33 | II-17 | | QI.1-217 | I-1 | II-24 | II-5 | II-13 |
| QI.1-180 | I-1 | II-20 | II-35 | II-7 | | QI.1-218 | I-1 | II-24 | II-5 | II-17 |
| QI.1-181 | I-1 | II-20 | II-35 | II-13 | | QI.1-219 | I-1 | II-24 | II-7 | II-7 |
| QI.1-182 | I-1 | II-20 | II-35 | II-17 | | QI.1-220 | I-1 | II-24 | II-7 | II-13 |
| QI.1-183 | I-1 | II-21 | II-26 | II-7 | | QI.1-221 | I-1 | II-24 | II-13 | II-17 |
| QI.1-184 | I-1 | II-21 | II-26 | II-13 | | QI.1-222 | I-1 | II-24 | II-18 | II-7 |
| QI.1-185 | I-1 | II-21 | II-26 | II-17 | | QI.1-223 | I-1 | II-24 | II-18 | II-13 |
| QI.1-186 | I-1 | II-21 | II-33 | II-7 | | QI.1-224 | I-1 | II-24 | II-18 | II-17 |
| QI.1-187 | I-1 | II-21 | II-33 | II-13 | | QI.1-225 | I-1 | II-24 | II-20 | II-7 |
| QI.1-188 | I-1 | II-21 | II-33 | II-17 | | QI.1-226 | I-1 | II-24 | II-20 | II-13 |
| QI.1-189 | I-1 | II-21 | II-35 | II-7 | | QI.1-227 | I-1 | II-24 | II-20 | II-17 |
| QI.1-190 | I-1 | II-21 | II-35 | II-13 | | QI.1-228 | I-1 | II-24 | II-21 | II-7 |
| QI.1-229 | I-1 | II-24 | II-21 | II-13 | | QI.1-252 | I-1 | II-29 | II-18 | II-7 |
| QI.1-230 | I-1 | II-24 | II-21 | II-17 | | QI.1-253 | I-1 | II-29 | II-18 | II-13 |
| QI.1-231 | I-1 | II-24 | II-26 | II-7 | | QI.1-254 | I-1 | II-29 | II-18 | II-17 |
| QI.1-232 | I-1 | II-24 | II-26 | II-13 | | Q1.1-255 | I-1 | II-29 | II-20 | II-7 |
| QI.1-233 | I-1 | II-24 | II-26 | II-17 | | QI.1-256 | I-1 | II-29 | II-20 | II-13 |
| QI.1-234 | I-1 | II-24 | II-33 | II-7 | | QI.1-257 | I-1 | II-29 | II-20 | II-17 |
| QI.1-235 | I-1 | II-24 | II-33 | II-13 | | QI.1-258 | I-1 | II-29 | II-21 | II-7 |
| QI.1-236 | I-1 | II-24 | II-33 | II-17 | | QI.1-259 | I-1 | II-29 | II-21 | II-13 |
| QI. 1-237 | I-1 | II-24 | II-35 | II-7 | | QI.1-260 | I-1 | II-29 | II-21 | II-17 |
| QI.1-238 | I-1 | II-24 | II-35 | II-13 | | QI.1-261 | I-1 | II-29 | II-26 | II-7 |
| QI.1-239 | I-1 | II-24 | II-35 | II-17 | | QI.1-262 | I-1 | II-29 | II-26 | II-13 |

(continued)

| M | C1 | C2 | C3 | C4 | M | C1 | C2 | C3 | C4 |
|---|---|---|---|---|---|---|---|---|---|
| Q1.1-240 | I-1 | II-26 | II-33 | II-7 | QI.1-263 | I-1 | II-29 | II-26 | II-17 |
| QI.1-241 | I-1 | II-26 | II-33 | II-13 | QI.1-264 | I-1 | II-29 | II-33 | II-7 |
| QI.1-242 | I-1 | II-26 | II-33 | II-17 | QI.1-265 | I-1 | II-29 | II-33 | II-13 |
| QI.1-243 | I-1 | II-26 | II-35 | II-7 | QI.1-266 | I-1 | II-29 | II-33 | II-17 |
| QI.1-244 | I-1 | II-26 | II-35 | II-13 | QI.1-267 | I-1 | II-29 | II-35 | II-7 |
| QI.1-245 | I-1 | II-26 | II-35 | II-17 | QI.1-268 | I-1 | II-29 | II-35 | II-13 |
| QI.1-246 | I-1 | II-29 | II-5 | II-7 | QI.1-269 | I-1 | II-29 | II-35 | II-17 |
| QI.1-247 | I-1 | II-29 | II-5 | II-13 | QI.1-270 | I-1 | II-33 | II-35 | II-7 |
| QI.1-248 | I-1 | II-29 | II-5 | II-17 | QI.1-271 | I-1 | II-33 | II-35 | II-13 |
| QI.1-249 | I-1 | II-29 | II-7 | II-7 | QI.1-272 | I-1 | II-33 | II-35 | II-17 |
| QI.1-250 | I-1 | II-29 | II-7 | II-13 | | | | | |
| QI.1-251 | I-1 | II-29 | II-13 | II-17 | | | | | |

Table QI.2: Quarternary mixtures QI.2-1 to QI.2-272 which correspond to the quarternary mixtures QI.1-1 to QI.1-272 having the same numeration but which comprise, as component 1, instead of the compound I-1 the compound I-2 and therefore have the term "QI.2-" instead of "QI.1-" in front of the number.

Table QI.3: Quarternary mixtures Q1.3-1 to QI.3-272 which correspond to the quarternary mixtures Q1.1-1 to QI.1-272 having the same numeration but which comprise, as component 1, instead of the compound I-1 the compound I-3 and therefore have the term "QI.3-" instead of "QI.1-" in front of the number.

Table QI.4: Quarternary mixtures QI.4-1 to QI.4-272 which correspond to the quarternary mixtures QI.1-1 to QI.1-272 having the same numeration but which comprise, as component 1, instead of the compound I-1 the compound I-4 and therefore have the term "QI.4-" instead of "QI.1-" in front of the number.

Table QI.5: Quarternary mixtures QI.5-1 to QI.5-272 which correspond to the quarternary mixtures QI.1-1 to QI.1-272 having the same numeration but which comprise, as component 1, instead of the compound I-1 the compound I-5 and therefore have the term "QI.5-" instead of "QI.1-" in front of the number.

Table QI.6: Quarternary mixtures QI.6-1 to QI.6-272 which correspond to the quarternary mixtures QI.1-1 to QI.1-272 having the same numeration but which comprise, as component 1, instead of the compound I-1 the compound I-6 and therefore have the term "QI.6-" instead of "QI.1-" in front of the number.

According to a further embodiment of the invention, preference is given to mixtures comprising four components (1, 2, 3 and 4) in which component 2 is selected from the group of the following compounds:

II-6 kresoxim-methyl

II-7 pyraclostrobin

II-21 fluxypyroxad

II-22 sedaxane

II-24 fluopyram

II-25 penflufen

II-36 azoxystrobin

II-37 trifloxystrobin

II-38 penthiopyrad

and in which component 3 is a compound II selected from the group of the following compounds:

II-32a clothianidin

II-34a imidacloprid

II-35a thiamethoxan

and in which component 4 is fipronil (II-30a).

Such mixtures are listed explicitly in Table QII below:

Table QII: Mixtures QII-1 to QII-54 comprising, as component 1, a preferred compound I, a preferred component 2, a preferred component 3 of group O) and fipronil as component 4. In the table below, in each case one row corresponds to a mixture according to the invention having the respective mixture components 1 to 4 listed in the row in question. "C" denotes "component", "M" denotes "mixture".

| M | C1 | C2 | C3 | C4 | | M | C1 | C2 | C3 | C4 |
|---|---|---|---|---|---|---|---|---|---|---|
| Q11.1-1 | I-1 | II-6 | II-32a | II-30a | | QII.1-2 | I-1 | II-6 | II-34a | II-30a |
| QII.1-3 | I-1 | II-6 | II-35a | II-30a | | QII.1-30 | I-2 | II-6 | II-35a | II-30a |
| QII.1-4 | I-1 | II-7 | II-32 | II-30a | | QII.1-31 | I-2 | II-7 | II-32a | II-30a |
| QII.1-5 | I-1 | II-7 | II-34 | II-30a | | QII.1-32 | I-2 | II-7 | II-34a | II-30a |
| QII.1-6 | I-1 | II-7 | II-35 | II-30a | | QII.1-33 | I-2 | II-7 | II-35a | II-30a |
| QII.1-7 | I-1 | II-21 | II-32a | II-30a | | QII.1-34 | I-2 | II-21 | II-32a | II-30a |
| QII.1-8 | I-1 | II-21 | II-34a | II-30a | | QII.1-35 | I-2 | II-21 | II-34a | II-30a |
| QII.1-9 | I-1 | II-21 | II-35a | II-30a | | QII.1-36 | I-2 | II-21 | II-35a | II-30a |
| QII.1-10 | I-1 | II-22 | II-32a | II-30a | | Q11.1-37 | I-2 | II-22 | II-32a | 11-30a |
| QII.1-11 | I-1 | II-22 | II-34a | II-30a | | Q11.1-38 | I-2 | II-22 | II-34a | II-30a |
| QII.1-12 | I-1 | II-22 | II-35a | II-30a | | QII.1-39 | I-2 | II-22 | II-35a | II-30a |
| QII.1-13 | I-1 | II-24 | II-32a | II-30a | | QII.1-40 | I-2 | II-24 | II-32a | II-30a |
| QII.1-14 | I-1 | II-24 | II-34a | II-30a | | QII.1-41 | I-2 | II-24 | II-34a | II-30a |
| QII.1-15 | I-1 | II-24 | II-35 | II-30a | | QII.1-42 | I-2 | II-24 | II-35a | II-30a |
| QII.1-16 | I-1 | II-25 | II-32a | II-30a | | QII.1-43 | I-2 | II-25 | II-32 | II-30a |
| QII.1-17 | I-1 | II-25 | II-34a | II-30a | | QII.1-44 | 1-2 | II-25 | II-34a | II-30a |
| QII.1-18 | I-1 | II-25 | II-35a | II-30a | | QII.1-45 | I-2 | II-25 | II-35a | II-30a |
| QII.1-19 | I-1 | II-36 | II-32a | II-30a | | QII.1-46 | I-2 | II-36 | II-32a | II-30a |
| QII.1-20 | I-1 | II-36 | II-34a | II-30a | | QII.1-47 | I-2 | II-36 | II-34a | II-30a |
| QII.1-21 | I-1 | II-36 | II-35a | II-30a | | QII.1-48 | I-2 | II-36 | II-35a | II-30a |
| QII.1-22 | I-1 | II-37 | II-32a | II-30a | | QII.1-49 | I-2 | II-37 | II-32a | II-30a |
| QII.1-23 | I-1 | II-37 | II-34a | II-30a | | QII.1-50 | I-2 | II-37 | II-34a | II-30a |
| QII.1-24 | I-1 | II-37 | II-35a | II-30a | | QII.1-51 | I-2 | II-37 | II-35a | II-30a |
| QII.1-25 | I-1 | II-38 | II-32a | II-30a | | QII.1-52 | I-2 | II-38 | II-32a | II-30 |
| QII.1-26 | I-1 | II-38 | II-34a | II-30a | | QII.1-53 | I-2 | II-38 | II-34a | II-30a |
| QII.1-27 | I-1 | II-38 | II-35a | II-30a | | QII.1-54 | I-2 | II-38 | 11-35a | 11-30a |

(continued)

| M | C1 | C2 | C3 | C4 | M | C1 | C2 | C3 | C4 |
|---|---|---|---|---|---|---|---|---|---|
| QII.1-28 | I-2 | II-6 | II-32a | II-30a | | | | | |
| QII.1-29 | I-2 | II-6 | II-34a | II-30a | | | | | |

The mixtures of the compounds I and II (= mixtures according to the invention) I and the compositions thereof (= compositions according to the invention) are suitable as fungicides for controlling harmful fungi.

The mixtures and compositions according to the invention, respectively, are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The mixtures and the compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines

(table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the mixtures and compositions of the invention, respectively are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with mixtures and compositions of the invention, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are

e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CrylA(b), CrylA(c), CrylF, CrylF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum)* or T4-lysozym (e. g. potato cultivars capable of synthesizing these proteins with increased resistance against bacteria such as *Erwinia amylvora).* The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount

of substances of content or new substances of content, specifically to improve raw material production, e. g. potatoes that produce increased amounts of amylopectin (e. g. Amflora® potato, BASF SE, Germany).

The mixtures and compositions of the invention, respectively, are particularly suitable for controlling the following plant diseases:

*Albugo* spp. (white rust) on ornamentals, vegetables (e. g. A. *candida)* and sunflowers (e. g. *A. tragopogonis); Alternaria* spp. (Alternaria leaf spot) on vegetables, rape (*A. brassicola* or *brassicae),* sugar beets (*A. tenuis),* fruits, rice, soybeans, potatoes (e. g. *A. solani* or A. *alternata),* tomatoes (e. g. *A. solani* or *A. alternata)* and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight *(D. maydis)* or Northern leaf blight *(B. zeicola)* on corn, e. g. spot blotch *(B. sorokiniana)* on cereals and e.g. *B. oryzae* on rice and turfs; *Blumeria* (formerly *Erysiphe) graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma)* spp. (rot or wilt) on broad-leaved trees and evergreens, e. g. *C. ulmi* (Dutch elm disease) on elms; *Cercospora* spp. (Cercospora leaf spots) on corn (e.g. Gray leaf spot: *C. zeae-maydis),* rice, sugar beets (e. g. *C. beticola),* sugar cane, vegetables, coffee, soybeans (e. g. *C. sojina* or *C. kikuchii)* and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris)* spp. (leaf spots) on corn (*C. carbonum),* cereals (e. g. *C. sativus,* anamorph: *B. sorokiniana)* and rice (e. g. *C. miyabeanus,* anamorph: *H. oryzae); Colletotrichum* (teleomorph: *Glomerella)* spp. (anthracnose) on cotton (e. g. *C. gossypii),* corn (e. g. *C. graminicola:* Anthracnose stalk rot), soft fruits, potatoes (e. g. *C. coccodes:* black dot), beans (e. g. *C. lindemuthianum)* and soybeans (e. g. *C. truncatum* or *C. gloeosporioides); Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia)* necatrix (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus) punctata, F. mediterranea, Phaeomoniella chlamydospora* (earlier *Phaeoacremonium chlamydosporum), Phaeoacremonium aleophilum* and/or *Botryosphaeria obtusa; Elsinoe* spp. on pome fruits *(E. pyri),* soft fruits *(E. veneta:* anthracnose) and vines *(E. ampelina:* anthracnose); *Entyloma oryzae* (leaf smut) on rice; *Epicoccum* spp. (black mold) on wheat; *Erysiphe* spp. (powdery mildew) on sugar beets *(E. betae),* vegetables (e. g. *E. pisi),* such as cucurbits (e. g. *E. cichoracearum),* cabbages, rape (e. g. *E. cruciferarum); Eutypa lata* (Eutypa canker or dieback, anamorph: *Cytosporina lata,* syn. *Libertella blepharis)* on fruit trees, vines and ornamental woods; *Exserohilum* (syn. *Helminthosporium)* spp. on corn (e. g. *E. turcicum); Fusarium* (teleomorph: *Gibberella)* spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G.* zeae) and rice (e. g. *G. fujikuroi:* Bakanae disease); *Glomerella cingulata* on vines, pome fruits and other plants and *G. gossypii* on cotton; Grain-staining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus)* on corn, cereals and rice; *Hemileia* spp., e. g. *H. vastatrix* (coffee leaf rust) on coffee; *Isariopsis clavispora* (syn. *Cladosporium vitis)* on vines; *Macrophomina phaseolina* (syn. *phaseoli)* (root and stem rot) on soybeans and cotton; *Microdochium* (syn. *Fusarium) nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae),* rape (e. g. *P. parasitica),* onions (e. g. *P. destructor),* tobacco *(P. tabacina)* and soybeans (e. g. *P. manshurica); Phakopsora pachyrhizi* and *P. meibomiae* (soybean rust) on soybeans; *Phialophora* spp. e. g. on vines (e. g. *P. tracheiphila* and *P. tetraspora)* and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici),* soybeans (e. g. *P. megasperma,* syn. *P. sojae),* potatoes and tomatoes (e. g. *P. infestans:* late blight) and broad-leaved trees (e. g. *P. ramorum:* sudden

oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat *(P. graminis)* and sugar beets *(P. betae)* and thereby transmitted viral diseases; *Pseudocercosporella herpotrichoides* (eyespot, teleomorph: *Tapesia yallundae)* on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora)* on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera) tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum); Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum)* and soybeans (e. g. *S. rolfsii* or *S. sclerotiorum); Septoria* spp. on various plants, e. g. *S. glycines* (brown spot) on soybeans, *S. tritici* (Septoria blotch) on wheat and *S.* (syn. *Stagonospora)* nodorum (Stagonospora blotch) on cereals; *Uncinula* (syn. *Erysiphe) necator* (powdery mildew, anamorph: *Oidium tuckeri)* on vines; *Setospaeria* spp. (leaf blight) on corn (e. g. *S. turcicum,* syn. *Helminthosporium turcicum)* and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans); Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli)* and sugar beets (e. g. *U. betae); Ustilago* spp. (loose smut) on cereals (e. g. *U. nuda* and *U. avaenae),* corn (e. g. *U. maydis:* corn smut) and sugar cane; *Venturia* spp. (scab) on apples (e. g. *V. inaequalis)* and pears; and *Verticillium* spp. (wilt) on various plants, such as fruits and ornamentals, vines, soft fruits, vegetables and field crops, e. g. *V. dahliae* on strawberries, rape, potatoes and tomatoes.

The mixtures and compositions of the invention, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucorspp.,* and in addition in the protection of stored products and harvest the following yeast fungi are worthy of note: *Candida* spp. and *Saccharomyces cerevisae.*

The compounds of the formula I, and also those of the formula II, may be present in various crystal modifications which may differ in their biological activity. Their mixtures are included in the scope of the present invention.

The mixtures and compositions of the invention, resepectively, may be used for improving the health of a plant. The invention also relates to a method for improving plant health by treating a plant, its propagation material and/or the locus where the plant is growing or is to grow with an effective amount of a mixture or composition of the invention, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic

stress.The above identified indicators for the health condition of a plant may be interdependent or may result from each other.

The compounds of the the inventive mixtures are employed as such or in form of compositions by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with compounds of the inventive mixtures as such or a composition comprising them (a composition comprising at least one compound I and at least one compound II, preferably one or two compounds II) prophylactically either at or before planting or transplanting.

The invention also relates to agrochemical compositions comprising a solvent or solid carrier and a mixture of the invention and to the use for controlling harmful fungi.

An agrochemical composition comprises a fungicidally effective amount of the components of the inventive mixtures. The term "effective amount" denotes an amount of the mixture or composition of the invention, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific components.

The compounds I and the one or more compounds II can be applied simultaneously, that is jointly or separately, or in succession, the order, in the case of separate application, generally not having any effect on the control results. The method for controlling harmful fungi is carried out by separate or joint application of the compound I and the compound (s) II or of mixtures of the compound I and the compound(s) II by spraying or dusting the seed, the plants or the soil before or after sowing of the plants or before or after emergence of the plants.

The compounds I and I may be present in a joint composition or in separate compositions. Here, type and preparation of the composition in question corresponds to type and preparation as described here in a general manner for compositions.

The compounds I and the compounds II, and also their N-oxides and salts and their mixtures, can be converted into the types customary for agrochemical compositions, for example solutions, emulsions, suspensions, dusts, powders, pastes and granules. The type of composition depends on the respective intended purpose; in each case, it should ensure a fine and even distribution of the compounds of the mixtures according to the invention.

Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF).

Usually the composition types (e. g. SC, OD, FS, EC, WG, SG, WP, SP, SS, WS, GF) are employed diluted. Composition types such as DP, DS, GR, FG, GG and MG are usually used undiluted.

The compositions are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical compositions may also comprise auxiliaries which are customary in agrochemical compositions. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalenesulfonic acid (Nekal® types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof.

Examples for thickeners (i. e. compounds that impart a modified flowability to compositions, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the composition. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48: 2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the compounds I and, if appropriate, further active substances, with at least one solid carrier.

Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Examples for composition types are:

1. Composition types for dilution with water

i) Water-soluble concentrates (SL, LS)

10 parts by weight of of the active compounds are dissolved in 90 parts by weight of water or in a water-soluble solvent. As an alternative, wetting agents or other auxiliaries are added. The active substance dissolves upon dilution with water. In this way, a composition having a content of 10% by weight of active substance is obtained.

ii) Dispersible concentrates (DC)

20 parts by weight of the active compounds are dissolved in 70 parts by weight of cyclohexanone with addition of 10 parts by weight of a dispersant, e. g. polyvinylpyrrolidone. Dilution with water gives a dispersion. The active substance content is 20% by weight.

iii) Emulsifiable concentrates (EC)

15 parts by weight of the active compounds are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

iv)Emulsions (EW, EO, ES)

25 parts by weight of the active compounds are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substance content of 25% by weight.

v) Suspensions (SC, OD, FS)

In an agitated ball mill, 20 parts by weight of the active compounds are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.

vi)Water-dispersible granules and water-soluble granules (WG, SG)

50 parts by weight of the active compounds are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.

vii) Water-dispersible powders and water-soluble powders (WP, SP, SS, WS)

75 parts by weight of the active compounds are ground in a rotor-stator mill with addition of 25 parts by weight of dispersants, wetting agents and silica gel. Dilution with water gives a stable dispersion or solution of the active substance. The active substance content of the composition is 75% by weight.

viii) Gel (GF)

In an agitated ball mill, 20 parts by weight of the active compounds are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix)Dustable powders (DP, DS)

5 parts by weight of the active compounds are ground finely and mixed intimately with 95 parts by weight of finely divided kaolin. This gives a dustable composition having an active substance content of 5% by weight.

x) Granules (GR, FG, GG, MG)

0.5 parts by weight of the active compounds is ground finely and associated with 99.5 parts by weight of carriers. Current methods are extrusion, spray-drying or the fluidized bed. This gives granules to be applied undiluted having an active substance content of 0.5% by weight.

xi)ULV solutions (UL)

10 parts by weight of the active compounds are dissolved in 90 parts by weight of an organic solvent, e. g. xylene. This gives a composition to be applied undiluted having an active substance content of 10% by weight.

The agrochemical compositions generally comprise between 0.01 and 95%, preferably between 0.1 and 90%, most preferably between 0.5 and 90%, by weight of active substance. The active substances are employed in a purity of from 90% to 100%, preferably from 95% to 100% (according to NMR spectrum).

Water-soluble concentrates (LS), flowable concentrates (FS), powders for dry treatment (DS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting, soaking and in-furrow application methods of the propagation material. In a preferred embodiment, the compounds or the compositions thereof, respectively, are applied on to the plant propagation material by a method such that germination is not induced, e. g. by seed dressing, pelleting, coating and dusting.

In a preferred embodiment, a suspension-type (FS) composition is used for seed treatment. Typcially, a FS composition may comprise 1-800 g/l of active substance, 1-200 g/l Surfactant, 0 to 200 g/l antifreezing agent, 0 to 400 g/l of binder, 0 to 200 g/l of a pigment and up to 1 liter of a solvent, preferably water.

The active substances can be used as such or in the form of their compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The

application forms depend entirely on the intended purposes; it is intended to ensure in each case the finest possible distribution of the active substances according to the invention.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of active substance.

The active substances may also be used successfully in the ultra-low-volume process (U LV), it being possible to apply compositions comprising over 95% by weight of active substance, or even to apply the active substance without additives.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

When used in the protection of materials or stored products, the amount of active substance applied depends on the kind of application area and on the desired effect. Amounts customarily applied in the protection of materials are, e. g., 0.001 g to 2 kg, preferably 0.005 g to 1 kg, of active substance per cubic meter of treated material.

Various types of oils, wetters, adjuvants, herbicides, bactericides, other fungicides and/or pesticides may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plurafac LF 300® and Lutensol ON 30®; EO/PO block polymers, e. g. Pluronic RPE 2035® and Genapol B®; alcohol ethoxylates such as Lutensol XP 80®; and dioctyl sulfosuccinate sodium such as Leophen RA®.

Further specific preferred embodiments of the present invention are detailled in the following:

According to one preferred embodiment of the invention, as component 2 an active ingredient, selected from pyraclostrobin, fluxapyroxad, fenpropimorph, prothioconazole and chlorothalonil, and/or agriculturally acceptable salts thereof, is used in a weight ratio of from 20:1 to 1:20 (component 1 : component 2), wherein component 1 is preferably a compound selected from I-1, I-2, I-3, I-4, I-5 and I-6. Specifically, these mixtures are binary mixtures, i.e. compositions according to the invention comprising compound I (component 1) and one further active compound (component 2) as active ingredients, wherein said component 2 is selected from pyraclostrobin, fluxapyroxad, fenpropimorph, prothioconazole and chlorothalonil in a weight ratio from 1:20 to 20:1, particularly preferably in the range of from 1: 10 to 10:1, in particular in the range of from 1:3 to 3:1. It may also be preferable that the weight ratio is in the range of from 1:2 to 2:1. "Binary mixture" in the sense of the present invention means that only two active compounds are present. The mixture may, of course contain any kind of additive or the like as detailled below in order to provide a formulation suitable for use in agriculture.

According to one specific embodiment, the present invention relates to the binary mixture of compound I, wherein component 1 is preferably a compound selected from I-1, I-2, I-3, I-4, I-5 and I-6, and fluxapyroxad in a weight ratio of 20:1 to 1:20, more specifically 5:1 to 1:5, in particular 3:1 to 1:3, more specifically 2:1 to 1:2. Surprisingly, this mixture shows synergistical effects and the components are in particular used in synergistically effective amounts.

According to one further specific embodiment, the present invention relates to the use of the binary mixture of compound I, wherein component 1 is preferably a compound selected from I-1, I-2, I-3, I-4, I-5 and I-6, and fluxapyroxad for the control of cereal pathogens, wherein the components are used in the above mentioned weight ratios.

In particular, said mixture is suitable for controlling wheat pathogens. When used in wheat, especially preferred weight ratios of the active ingredients are 20:1 to 1:20, in particular 2:1 to 1:2, wherein it may be especially preferred if compound I to fluxapyroxad are present 1:1 to 2:1, wherein component 1 is preferably a compound selected from I-1, I-2, I-3, I-4, I-5 and I-6. Said mixture is particularly suitable for controlling the wheat pathogens selected from Septoria tritici, Stagonospora nodorum, Pyrenophora tritici repentis, Puccinia recondita, Puccinia striiformis and Blumeria graminis. Furthermore, said mixture is useful for the control of the pathogens selected from Fusarium culmorum, Fusarium graminearum and Pseudocercosporella herpotrichoides.

Furthermore, said mixture is suitable for controlling barley pathogens. When used in barley, especially preferred weight ratios of the active ingredients are 20:1 to 1:20, in particular 2:1 to 1:2, wherein it may be especially preferred if compound I to fluxapyroxad are present 1:1 to 2:1, wherein component 1 is preferably a compound selected from I-1, I-2, I-3, I-4, I-5 and I-6. Said mixture is particularly suitable for controlling the barley pathogens, selected from Pyrenophera teres, Rhychosporium secalis, Puccinia hordei and Blumeria graminis. Furthermore, said mixture is useful for controlling the barley pathogens, selected from Ramularia collo-cygni and Pseudocercosporella herpotrichoides.

According to another embodiment, the present invention relates to the use of the binary mixture of compound I and fluxapyroxad for the control of soy pathogens. When used in soy, especially preferred weight ratios of the active ingredients are 20:1 to 1:20, in particular 3:1 to 1:3, wherein it may be especially preferred if compound I to fluxapyroxad are present 3:1 to 2:1, wherein component 1 is preferably a compound selected from I-1, I-2, I-3, I-4, I-5 and I-6. In particular, said mixture is suitable for controlling soy pathogens selected from phakopsora pachyrizi, P. meibomiae and Microsphaera diffusa. In soy, said mixture may also be effectlively used for the control of the so-called FDC (Foliar Disease Complex), e.g. against Septoria glycines, Cercospora kikuchii, C. sojina, Corynespora cassiicola and/or Alternaria spp..

According to another embodiment, the present invention relates to the use of the binary mixture of compound I and fluxapyroxad for the control of corn pathogens, wherein component 1 is preferably a compound selected from I-1, I-2, I-3, I-4, I-5 and I-6. When used in corn, especially preferred weight ratios of the active ingredients are 20:1 to 1:20, in particular 2:1 to 1:2, wherein it may be especially preferred if compound I to fluxapyroxad are present 2:1 to 1:1, wherein component 1 is preferably a compound selected from I-1, I-2, I-3, I-4, I-5 and I-6. In particular, said mixture is suitable for controlling corn pathogens selected from Cercospora zeae-maydis, Puccinia sorghi and Helminthosporium maydis.

According to still another embodiment, the present invention relates to the use of the binary mixture of compound I and fluxapyroxad for the control of sugar beet pathogens. When used in sugar beet, especially preferred weight ratios of the active ingredients are 20:1 to 1:20, in particular 2:1 to 1:2, wherein it may be especially preferred if compound I to fluxapyroxad are present 2:1 to 1:1, wherein component 1 is preferably a compound selected from I-1, I-2, I-3, I-4, I-5 and I-6. In particular, said mixture is suitable for controlling corn pathogens selected from Cercospora beticola, Erysiphe betae, Ramularia betae and Uromyces betae.

According to still another embodiment, the present invention relates to the use of the binary mixture of compound I and fluxapyroxad for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if compound I to fluxapyroxad are present 2:1 to 1:1, wherein component 1 is preferably a compound selected from I-1, I-2, I-3, I-4, I-5 and I-6.

According to still another embodiment, the present invention relates to the use of the binary mixture of compound I and fluxapyroxad for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if compound I to fluxapyroxad are present 2:1 to 1:1, wherein component 1 is preferably a compound selected from I-1, I-2, I-3, I-4, I-5 and I-6.

According to still another embodiment, the present invention relates to the use of the binary mixture of compound I and fluxapyroxad for the control of rice pathogens, selected from Rhizoctonia solani and Pyricularia oryzae. When used in rice, especially preferred weight ratios of the active ingredients are 20:1 to 1:20, in particular 2:1 to 1:2, wherein it may be especially preferred if compound I to fluxapyroxad are present 2:1 to 1:1, wherein component 1 is preferably a compound selected from I-1, I-2, I-3, I-4, I-5 and I-6.

The mixture of compound I, preferably a compound I selected from I-1, I-2, I-3, I-4, I-5 and I-6, and fluxapyroxad is also suitable for the control of pathogens in specialty crops, such as turf, potato, tomato, cucurbits, grapes, apples, ornamentals and bananas. Turf pathogens that may be controlled according to the present invention are selected from Sclerotinia homeocarpa and Rhizoctonia solani. When used in turf, especially preferred weight ratios of the active ingredients are 20:1 bis 1:20, in particular 2:1 bis 1:2, wherein it may be especially preferred if compound I and fluxapyroxad are present 1:1 to 1:2, wherein component 1 is preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea. An apple pathogen that may be controlled according to the present invention is in particular Podosphaera leucotricha and Venturia inaequalis. Ornamental pathogens that may be controlled according to the present invention are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

According to another specific embodiment, the present invention relates to the binary mixture of compound I and pyraclostrobin in a weight ratio of 20:1 to 1:20, more specifically 5:1 to 1:5, in particular 3:1 to 1:3, more specifically 2:1 to 1:2, wherein component 1 is preferably a compound selected from I-1, I-2, I-3, I-4, I-5 and I-6. Surprisingly, this mixture shows synergistical effects and the components are in particular used in synergistically effective amounts.

According to one embodiment, the present invention relates to the use of the binary mixture of compound I and pyraclostrobin for the control of cereal pathogens, wherein the components are used in the above mentioned weight ratios, wherein component 1 is preferably a compound selected from I-1, I-2, I-3, I-4, I-5 and I-6.

In particular, said mixture is suitable for controlling wheat pathogens. When used in wheat, especially preferred weight ratios of the active ingredients are 20:1 to 1:20, in particular 2:1 to 1:2, wherein it may be especially preferred if compound I to pyraclostrobin are present 1:1 to 2:1, wherein component 1 is preferably a compound selected from I-1, I-2, I-3, I-4, I-5 and I-6. Said mixture is particularly suitable for controlling the wheat pathogens selected from Septoria tritici, Stagonospora nodorum, Pyrenophora tritici repentis, Puccinia recondita, Puccinia striiformis and Blumeria graminis. Furthermore, said mixture is useful for the control of the pathogens selected from Fusarium culmorum, Fusarium graminearum and Pseudocercosporella herpotrichoides.

Furthermore, said mixture is suitable for controlling barley pathogens. When used in barley, especially preferred weight ratios of the active ingredients are 20:1 to 1:20, in particular 2:1 to 1:2, wherein it may be especially preferred if compound I to pyraclostrobin are present 1:1 to 2:1, wherein component 1 is preferably a compound selected from I-1, I-2, I-3, I-4, I-5 and I-6. Said mixture is particularly suitable for controlling the barley pathogens, selected from Pyrenophera teres, Rhychosporium secalis, Puccinia hordei and Blumeria graminis. Furthermore, said mixture is useful for controlling the barley pathogens, selected from Ramularia collo-cygni and Pseudocercosporella herpotrichoides.

According to another embodiment, the present invention relates to the use of the binary mixture of compound I and pyraclostrobin for the control of soy pathogens. When used in soy, especially preferred weight ratios of the active ingredients are 20:1 to 1:20, in particular 3:1 to 1:3, wherein it may be especially preferred if compound I to pyraclostrobin are present 2:1 to 2:1, wherein component 1 is preferably a compound selected from I-1, I-2, I-3, I-4, I-5 and I-6. In particular, said mixture is suitable for controlling soy pathogens selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp..

According to still another embodiment, the present invention relates to the use of the binary mixture of compound I and pyraclostrobin for the control of corn pathogens. When used in corn, especially preferred weight ratios of the active ingredients are 20:1 to 1:20, in particular 2:1 to 1:2, wherein it may be especially preferred if compound I to pyraclostrobin are present 2:1 to 1:1, wherein component 1 is preferably a compound selected from I-1, I-2, I-3, I-4, I-5 and I-6. In particular, said mixture is suitable for controlling corn pathogens selected from Cercospora zeae-maydis, Puccinia sorghi and Helminthosporium maydis.

According to still another embodiment, the present invention relates to the use of the binary mixture of compound I and pyraclostrobin for the control of sugar beet pathogens. When used in sugar beet, especially preferred weight ratios of the active ingredients are 20:1 to 1:20, in particular 2:1 to 1:2, wherein it may be especially preferred if compound I to pyraclostrobin are present 2:1 to 1:1, wherein component 1 is in each case preferably a compound selected from I-1, I-2, I-3, I-4, I-5 and I-6. In particular, said mixture is suitable for controlling corn pathogens selected from Cercospora beticola, Erysiphe betae, Ramularia betae and Uromyces betae.

According to still another embodiment, the present invention relates to the use of the binary mixture of compound I and pyraclostrobin for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if compound I to pyraclostrobin are present 2:1 to 1:1, wherein component 1 is in each case preferably a compound selected from I-1, I-2, I-3, I-4, I-5 and I-6. According to still another embodiment, the present invention relates to the use of the binary mixture of compound I and pyraclostrobin for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if compound I to pyraclostrobin are present 2:1 to 1:1, wherein component 1 is in each case preferably a compound selected from I-1, I-2, I-3, I-4, I-5 and I-6.

According to still another embodiment, the present invention relates to the use of the binary mixture of compound I and pyraclostrobin for the control of rice pathogens, selected from Rhizoctonia solani and Pyricularia oryzae. When used in rice, especially preferred weight ratios of the active ingredients are 20:1 to 1:20, in particular 2:1 to 1:2, wherein it may be especially preferred if compound I to pyraclostrobin are present 2:1 to 1:1, wherein component 1 is in each case preferably a compound selected from I-1, I-2, I-3, I-4, I-5 and I-6.

The mixture of compound I and pyraclostrobin is also suitable for the control of pathogens in in specialty crops, such as turf, potato, tomato, cucurbits, grapes, apples, ornamentals and bananas. Turf pathogens that may be controlled

according to the present invention are selected from Sclerotinia homeocarpon and Rhizoctonia solani. When used in turf, especially preferred weight ratios of the active ingredients are 20:1 bis 1:20, in particular 2:1 bis 1:2, wherein it may be especially preferred if compound I and pyraclostrobin are present 1:1 to 1.2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea . An apple pathogen that may be controlled according to the present invention is in particular Podosphaera leucotricha and Venturia inaequalis. Ornamental pathogens that may be controlled according to the present invention are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

According to another embodiment, the present invention relates to the binary mixture of compound I and fenpropimorph in a weight ratio of 20:1 to 1:20, more specifically 5:1 to 1:5, in particular 3:1 to 1:3, more specifically 2: 1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts.

According to one embodiment, the present invention relates to the use of the binary mixture of compound I and fenpropimorph for the control of cereal pathogens, wherein the components are used in the above mentioned weight ratios.

In particular, said mixture is suitable for controlling wheat pathogens. When used in wheat, especially preferred weight ratios of the active ingredients are 20:1 to 1:20, in particular 2:1 to 1:2, wherein it may be especially preferred if compound I and fenpropimorph are present 1:1 to 2:1, wherein component 1 is in each case preferably a compound selected from I-1, I-2, I-3, I-4, I-5 and I-6. Said mixture is particularly suitable for controlling the wheat pathogens selected from Septoria tritici, Stagonospora nodorum, Pyrenophora tritici repentis, Puccinia recondita, Puccinia striiformis and Blumeria graminis. Furthermore, said mixture is useful for the control of the pathogens selected from Fusarium culmorum, Fusarium graminearum and Pseudocercosporella herpotrichoides.

Furthermore, said mixture is suitable for controlling barley pathogens. When used in barley, especially preferred weight ratios of the active ingredients are 20:1 to 1:20, in particular 2:1 to 1:2, wherein it may be especially preferred if compound I to fenpropimorph are present 1:1 to 2:1, wherein component 1 is in each case preferably a compound selected from I-1, I-2, I-3, I-4, I-5 and I-6. Said mixture is particularly suitable for controlling the barley pathogens, selected from Pyrenophera teres, Rhychosporium secalis, Puccinia hordei and Blumeria graminis. Furthermore, said mixture is useful for controlling the barley pathogens, selected from Ramularia collo-cygni and Pseudocercosporella herpotrichoides.

According to another embodiment, the present invention relates to the use of the binary mixture of compound I and fenpropimorph for the control of soy pathogens. When used in soy, especially preferred weight ratios of the active ingredients are 20:1 to 1:20, in particular 3:1 to 1:3, wherein it may be especially preferred if compound I to fenpropimorph are present 3:1 to 2:1, wherein component 1 is in each case preferably a compound selected from I-1, I-2, I-3, I-4, I-5 and I-6. In particular, said mixture is suitable for controlling soy pathogens selected from phakopsora pachyrizi, P. meibomiae and Microsphaera diffusa. In soy, said mixture may also be effectlively used for the control of the so-called FDC (Foliar Disease Complex), e.g. against Septoria glycines, Cercospora kikuchii, C. sojina, Corynespora cassiicola and/or Alternaria spp..

According to still another embodiment, the present invention relates to the use of the binary mixture of compound I and fenpropimorph for the control of corn pathogens. When used in corn, especially preferred weight ratios of the active ingredients are 20:1 to 1:20, in particular 2:1 to 1:2, wherein it may be especially preferred if compound I to fenpropimorph are present 2:1 to 1:1, wherein component 1 is in each case preferably a compound selected from I-1, I-2, I-3, I-4, I-5 and I-6. In particular, said mixture is suitable for controlling corn pathogens selected from Cercospora zeae-maydis, Puccinia sorghi and Helminthosporium maydis.

According to still another embodiment, the present invention relates to the use of the binary mixture of compound I and fenpropimorph for the control of sugar beet pathogens. When used in sugar beet, especially preferred weight ratios of the active ingredients are 20:1 to 1:20, in particular 2:1 to 1:2, wherein it may be especially preferred if compound I to fenpropimorph are present 2:1 to 1:1, wherein component 1 is in each case preferably a compound selected from I-1, I-2, I-3, I-4, I-5 and I-6. In particular, said mixture is suitable for controlling corn pathogens selected from Cercospora beticola, Erysiphe betae, Ramularia betae and Uromyces betae.

According to still another embodiment, the present invention relates to the use of the binary mixture of compound I and fenpropimorph for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if compound I to fenpropimorph are present

2:1 to 1:1, wherein component 1 is in each case preferably a compound selected from I-1, I-2, I-3, I-4, I-5 and I-6.

According to still another embodiment, the present invention relates to the use of the binary mixture of compound I and fenpropimorph for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if compound I to fenpropimorph are present 2:1 to 1:1, wherein component 1 is in each case preferably a compound selected from I-1, I-2, I-3, I-4, I-5 and I-6.

According to still another embodiment, the present invention relates to the use of the binary mixture of compound I and fenpropimorph for the control of rice pathogens, selected from Rhizoctonia solani and Pyricularia oryzae. When used in rice, especially preferred weight ratios of the active ingredients are 20:1 to 1:20, in particular 2:1 to 1:2, wherein it may be especially preferred if compound I to fenpropimorph are present 2:1 to 1:1, wherein component 1 is in each case preferably a compound selected from I-1, I-2, I-3, I-4, I-5 and I-6.

The binary mixture of compound I and fenpropimorph is also suitable for the control of pathogens in specialty crops such as turf, potato, tomato, cucurbits, grapes, apples, ornamentals and bananas. Turf pathogens that may be controlled according to the present invention are selected from Sclerotinia homeocarpon and Rhizoctonia solani. When used in turf, especially preferred weight ratios of the active ingredients are 20:1 bis 1:20, in particular 2:1 bis 1:2, wherein it may be especially preferred if compound I to fenpropimorph are present 1:1 to 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea. An apple pathogen that may be controlled according to the present invention is in particular Podosphaera leucotricha and Venturia inaequalis . Ornamental pathogens that may be controlled according to the present invention are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

According to another embodiment, the present invention relates to the binary mixture of compound I and prothioconazole in a weight ratio of 20:1 to 1:20, more specifically 5:1 to 1:5, in particular 3:1 to 1:3, more specifically 2:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one embodiment, the present invention relates to the use of the binary mixture of compound I and prothioconazole for the control of cereal pathogens, wherein the components are used in the above mentioned weight ratios.

In particular, said mixture is suitable for controlling wheat pathogens. When used in wheat, especially preferred weight ratios of the active ingredients are 20:1 to 1:20, in particular 2:1 to 1:2, wherein it may be especially preferred if compound I to prothioconazole are present 1:1 to 2:1, wherein component 1 is in each case preferably a compound selected from I-1, I-2, I-3, I-4, I-5 and I-6. Said mixture is particularly suitable for controlling the wheat pathogens selected from Septoria tritici, Stagonospora nodorum, Pyrenophora tritici repentis, Puccinia recondita, Puccinia striiformis and Blumeria graminis. Furthermore, said mixture is useful for the control of the pathogens selected from Fusarium culmorum, Fusarium graminearum and Pseudocercosporella herpotrichoides.

Furthermore, said mixture is suitable for controlling barley pathogens. When used in barley, especially preferred weight ratios of the active ingredients are 20:1 to 1:20, in particular 2:1 to 1:2, wherein it may be especially preferred if compound I to prothioconazole are present 1:1 to 2:1, wherein component 1 is in each case preferably a compound selected from I-1, I-2, I-3, I-4, I-5 and I-6. Said mixture is particularly suitable for controlling the barley pathogens, selected from Pyrenophera teres, Rhychosporium secalis, Puccinia hordei and Blumeria graminis. Furthermore, said mixture is useful for controlling the barley pathogens, selected from Ramularia collo-cygni and Pseudocercosporella herpotrichoides.

According to still another embodiment, the present invention relates to the use of the binary mixture of compound I and prothioconazole for the control of soy pathogens. When used in soy, especially preferred weight ratios of the active ingredients are 20:1 to 1:20, in particular 3:1 to 1:3, wherein it may be especially preferred if compound I to prothioconazole are present 3:1 to 2:1, wherein component 1 is in each case preferably a compound selected from I-1, I-2, I-3, I-4, I-5 and I-6. In particular, said mixture is suitable for controlling soy pathogens selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp..

According to still another embodiment, the present invention relates to the use of the binary mixture of compound I and prothioconazole for the control of corn pathogens. When used in corn, especially preferred weight ratios of the

active ingredients are 20:1 to 1:20, in particular 2:1 to 1:2, wherein it may be especially preferred if compound I to prothioconazole are present 2:1 to 1:1, wherein component 1 is in each case preferably a compound selected from I-1, I-2, I-3, I-4, I-5 and I-6. In particular, said mixture is suitable for controlling corn pathogens selected from Cercospora zeae-maydis, Puccinia sorghi and Helminthosporium maydis.

According to still another embodiment, the present invention relates to the use of the binary mixture of compound I and prothioconazole for the control of sugar beet pathogens. When used in sugar beet, especially preferred weight ratios of the active ingredients are 20:1 to 1:20, in particular 2:1 to 1:2, wherein it may be especially preferred if compound I to prothioconazole are present 2:1 to 1:1, wherein component 1 is in each case preferably a compound selected from I-1, I-2, I-3, I-4, I-5 and I-6. In particular, said mixture is suitable for controlling corn pathogens selected from Cercospora beticola, Erysiphe betae, Ramularia betae and Uromyces betae.

According to still another embodiment, the present invention relates to the use of the binary mixture of compound I and prothioconazole for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if compound I to prothioconazole are present 2:1 to 1:1, wherein component 1 is in each case preferably a compound selected from I-1, I-2, I-3, I-4, I-5 and I-6.

According to still another embodiment, the present invention relates to the use of the binary mixture of compound I and prothioconazole for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if compound I to prothioconazole are present 2:1 to 1:1, wherein component 1 is in each case preferably a compound selected from I-1, I-2, I-3, I-4, I-5 and I-6.

According to still another embodiment, the present invention relates to the use of the binary mixture of compound I and prothioconazole for the control of rice pathogens, selected from Rhizoctonia solani and Pyricularia oryzae. When used in rice, especially preferred weight ratios of the active ingredients are 20:1 to 1:20, in particular 2:1 to 1:2, wherein it may be especially preferred if compound I to prothioconazole are present 2:1 to 1:1, wherein component 1 is in each case preferably a compound selected from I-1, I-2, I-3, I-4, I-5 and I-6.

The binary mixture of compound I and prothioconazole is also suitable for the control of pathogens in speciality crops, such as turf, potato, tomato, cucurbits, grapes, apples, ornamentals and bananas. Turf pathogens that may be controlled according to the present invention are selected from Sclerotinia homeocarpon and Rhizoctonia solani. When used in turf, especially preferred weight ratios of the active ingredients are 20:1 bis 1:20, in particular 2:1 bis 1:2, wherein it may be especially preferred if compound I to prothioconazole are present 1:1 to 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea . An apple pathogen that may be controlled according to the present invention is in particular Podosphaera leucotricha and Venturia inaequalis . Ornamental pathogens that may be controlled according to the present invention are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

According to another embodiment, the present invention relates to the binary mixture of compound I and chlorothalonil in a weight ratio of 20:1 to 1:20, more specifically 5:1 to 1:5, in particular 3:1 to 1:3, more specifically 2:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts.

According to one embodiment, the present invention relates to the use of the binary mixture of compound I and chlorothalonil for the control of cereal pathogens, wherein the components are used in the above mentioned weight ratios, wherein component 1 is in each case preferably a compound selected from I-1, I-2, I-3, I-4, I-5 and I-6.

In particular, said mixture is suitable for controlling wheat pathogens. When used in wheat, especially preferred weight ratios of the active ingredients are 20:1 to 1:20, in particular 2:1 to 1:2, wherein it may be especially preferred if compound I to chlorothalonil are present 1:1 to 2:1, wherein component 1 is in each case preferably a compound selected from I-1, I-2, I-3, I-4, I-5 and I-6. Said mixture is particularly suitable for controlling the wheat pathogens selected from Septoria tritici, Stagonospora nodorum, Pyrenophora tritici repentis, Puccinia recondita, Puccinia striiformis and Blumeria graminis. Furthermore, said mixture is useful for the control of the pathogens selected from Fusarium culmorum, Fusarium graminearum and Pseudocercosporella herpotrichoides.

Furthermore, said mixture is suitable for controlling barley pathogens. When used in barley, especially preferred weight ratios of the active ingredients are 20:1 to 1:20, in particular 2:1 to 1:2, wherein it may be especially preferred if compound I to chlorothalonil are present 1:1 to 2:1, wherein component 1 is in each case preferably a compound selected from I-1, I-2, I-3, I-4, I-5 and I-6. Said mixture is particularly suitable for controlling the barley pathogens, selected from

Pyrenophera teres, Rhychosporium secalis, Puccinia hordei and Blumeria graminis. Furthermore, said mixture is useful for controlling the barley pathogens, selected from Ramularia collo-cygni and Pseudocercosporella herpotrichoides.

According to another embodiment, the present invention relates to the use of the binary mixture of compound I and chlorothalonil for the control of soy pathogens. When used in soy, especially preferred weight ratios of the active ingredients are 20:1 to 1:20, in particular 3:1 to 1:3, wherein it may be especially preferred if compound I to chlorothalonil are present 3:1 to 2:1, wherein component 1 is in each case preferably a compound selected from I-1, I-2, I-3, I-4, I-5 and I-6. In particular, said mixture is suitable for controlling soy pathogens selected from phakopsora pachyrizi, P. meibomiae and Microsphaera diffusa. In soy, said mixture may also be effectlively used for the control of the so-called FDC (Foliar Disease Complex), e.g. against Septoria glycines, Cercospora kikuchii, C. sojina, Corynespora cassiicola and/or Alternaria spp.. According to still another embodiment, the present invention relates to the use of the binary mixture of compound I and chlorothalonil for the control of corn pathogens. When used in corn, especially preferred weight ratios of the active ingredients are 20:1 to 1:20, in particular 2:1 to 1:2, wherein it may be especially preferred if compound I to chlorothalonil are present 2:1 to 1:1, wherein component 1 is in each case preferably a compound selected from I-1, I-2, I-3, I-4, I-5 and I-6. In particular, said mixture is suitable for controlling corn pathogens selected from Cercospora zeae-maydis, Puccinia sorghi and Helminthosporium maydis.

According to still another embodiment, the present invention relates to the use of the binary mixture of compound I and chlorothalonil for the control of sugar beet pathogens. When used in sugar beet, especially preferred weight ratios of the active ingredients are 20:1 to 1:20, in particular 2:1 to 1:2, wherein it may be especially preferred if compound I to chlorothalonil are present 2:1 to 1:1, wherein component 1 is in each case preferably a compound selected from I-1, I-2, I-3, I-4, I-5 and I-6. In particular, said mixture is suitable for controlling corn pathogens selected from Cercospora beticola, Erysiphe betae, Ramularia betae and Uromyces betae.

According to still another embodiment, the present invention relates to the use of the binary mixture of compound I and chlorothalonil for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if compound I to chlorothalonil are present 2:1 to 1:1, wherein component 1 is in each case preferably a compound selected from I-1, I-2, I-3, I-4, I-5 and I-6.

According to still another embodiment, the present invention relates to the use of the binary mixture of compound I and chlorothalonil for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if compound I to chlorothalonil are present 2:1 to 1:1, wherein component 1 is in each case preferably a compound selected from I-1, I-2, I-3, I-4, I-5 and I-6.

According to still another embodiment, the present invention relates to the use of the binary mixture of compound I and chlorothalonil for the control of rice pathogens, selected from Rhizoctonia solani and Pyricularia oryzae. When used in rice, especially preferred weight ratios of the active ingredients are 20:1 to 1:20, in particular 2:1 to 1:2, wherein it may be especially preferred if compound I to chlorothalonil are present 2:1 to 1:1, wherein component 1 is in each case preferably a compound selected from I-1, I-2, I-3, I-4, I-5 and I-6.

The binary mixture of compound I and chlorothalonil is also suitable for the control of pathogens in speciality crops, such as turf, potato, tomato, cucurbits, grapes, apples, ornamentals and bananas. Turf pathogens that may be controlled according to the present invention are selected from Sclerotinia homeocarpon and Rhizoctonia solani. When used in turf, especially preferred weight ratios of the active ingredients are 20:1 bis 1:20, in particular 2:1 bis 1:2, wherein it may be especially preferred if compound I and chlorothalonil are present 1:1 to 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea . An apple pathogen that may be controlled according to the present invention is in particular Podosphaera leucotricha and Venturia inaequalis . Ornamental pathogens that may be controlled according to the present invention are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

In a further specific embodiment of the present invention, the mixtures are ternary mixtures, i.e. compositions according to the invention comprising as active ingredients compound I, a second active ingredient (component 2) and a third active ingredient (component 3). Component 2 is a) fluxapyroxad or b) prothioconazole and component 3 is, if component 2 is fluxapyroxad, selected from a) pyraclostrobin and fenpropimorph; and, if component 2 is prothioconazole, selected from b) fluxapyroxad, bixafen, pyraclostrobin, dimoxystrobin, picoxystrobin, fluoxastrobin, fluopyram and penflufen. Component 1 is in each case preferably a compound selected from I-1, I-2, I-3, I-4, I-5 and I-6.

"Ternary mixture" in the sense of the present invention means that only three active compounds are present.

The mixture may, of course contain any kind of additive or the like as detailled below in order to provide a formulation suitable for use in agriculture.

Here, the weight ratio of compound I to component 2 is 1:20 to 20:1, wherein component 1 is in each case preferably a compound selected from I-1, I-2, I-3, I-4, I-5 and I-6. It may be preferable for the weight ratio to be in the region of from 1:10 to 10:1, preferably from 1:3 to 3:1, in particular from 1:2 to 2:1, wherein component 1 is in each case preferably a compound selected from I-1, I-2, I-3, I-4, I-5 and I-6. The weight ratio of compound I to the component 3 is in the range of from 1:20 to 20:1. It may be preferable for the weight ratio to be in the region of from 1:10 to 10:1, preferably from 1:3 to 3:1, in particular from 1:2 to 2:1, wherein component 1 is in each case preferably a compound selected from I-1, I-2, I-3, I-4, I-5 and I-6. The weight ratio of compound I component 3 is in the range of from 1:20 to 20:1, and in particular in the range of from 1:10 to 10:1, wherein component 1 is in each case preferably a compound selected from I-1, I-2, I-3, I-4, I-5 and I-6. It may be preferable for the weight to be in the range of from 1:3 to 3:1, in particular from 1:2 to 2:1, wherein component 1 is in each case preferably a compound selected from I-1, I-2, I-3, I-4, I-5 and I-6.

According to one embodiment, the present invention relates to the ternary mixture of compound I, fluxapyroxad and pyraclostrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6. It may be preferred if the components are present in a weight ratio of 1:1:1 to 2:1:2 or 2:1:2 to 2:1:1, wherein component 1 is in each case preferably a compound selected from I-1, I-2, I-3, I-4, I-5 and I-6. Surprisingly, this mixture shows synergistical effects and the components are in particular used in synergistically effective amounts.

According to another embodiment the present invention relates to the use of the ternary mixture of compound I, fluxapyroxad and pyraclostrobin for the control of cereal pathogens, wherein the components are used in the above mentioned weight ratios. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to one specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis. Furthermore, said mixture is useful for the control of the wheat pathogens selected from Fusarium culmorum, Fusarium graminearum and Pseudocercosporella herpotrichoides. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to another specific embodiment, said ternary mixture is used for controlling barley pathogens, selected from Pyrenophera teres, Rhychosporium secalis, Puccinia hordei and Blumeria graminis. Furthermore, said mixture is suitable for the control of barley pathogens selected from Ramularia collo-cygni and Pseudocercosporella herpotrichoides. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for controlling soy pathogens, selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3. It may be especially preferred if the three components are present in a weight ratio of 1:0.5:1 to 1:0.5:0.5, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for controlling corn pathogens, in particular selected from Cercospora zeae-maydis, Puccinia sorghi and Helminthosporium maydis. When used in corn, especially preferred weight ratios of two of the active ingredients in the ternary mixture are 20:1 to 1:20, in particular 2: 1 to 1:2. It may be especially preferred if the three components are present in a weight ratio of 1:0.5:1 to 1:0.5:0.5, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for controlling sugar beet pathogens,

in particular selected from Cercospora beticola, Erysiphe betae, Ramularia betae and Uromyces betae. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for the control of peanut pathogens, in particular selected from Mycosphaerella arachidis (= Cercospora) and Puccinia arachidis. When used in peanuts, especially preferred weight ratios of two of the active ingredients in the ternary mixture are 20:1 to 1:20, in particular 2: 1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for the control of rice pathogens, in particular selected from Rhizoctonia solani and Pyricularia oryzae. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to still another specific embodiment, said ternary mixture is used for the control of pathogens in speciality crops, such as for example in turf, potato, tomato, cucurbits, grapes, apples, ornamentals and bananas. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea . An apple pathogen that may be controlled using said ternary mixture according to the present invention is in particular Podosphaera leucotricha and Venturia inaequalis . Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 are 1:1 to 2:1; component 1 to component 3 1:1 to 2:1 and component 2 to component 3 1:1 to 1:2, wherein component 1 is in each case preferably a compound selected from I-1, I-2, I-3, I-4, I-5 and I-6.

According to another embodiment, the present invention relates to the ternary mixture of compound I, fluxapyroxad and fenpropimorph, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6. It may be preferred if the components are present in a weight ratio of 1:1:3 to 1:1:6, wherein component 1 is in each case preferably a compound selected from I-1, I-2, I-3, I-4, I-5 and I-6. Surprisingly, this mixture shows synergistical effects and the components are in particular used in synergistically effective amounts.

According to one specific embodiment the present invention relates to the use of the ternary mixture of compound I, fluxapyroxad and fenpropimorph for the control of cereal pathogens, wherein the components are used in the above mentioned weight ratios. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to another specific embodiment, said mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau). According to another specific embodiment, the wheat pathogens are selected from Fusarium culmorum, Fusarium graminearum and Pseudocercosporella herpotrichoides. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment said mixture is used for controlling barley pathogens, selected from Pyrenophera teres, Rhychosporium secalis, Puccinia hordei and Blumeria graminis. According to another specific embodiment, the barley pathogens are selected from Ramularia collo-cygni and Pseudocercosporella herpotrichoides. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment, the mixture of compound I, fluxapyroxad and fenpropimorph is used for controlling soy pathogens, selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6. It may be especially preferred if the three components are present in a weight ratio of 1:1:3 to 1:1:6, wherein component 1 is in each case preferably a compound selected from I-1, I-2, I-3, I-4, I-5 and I-6.

According to still another specific embodiment, the mixture of compound I, fluxapyroxad and fenpropimorph is suitable for controlling corn pathogens, in particular selected from Cercospora zeae-maydis, Puccinia sorghi and Helminthosporium maydis. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment, the mixture of compound I, fluxapyroxad and fenpropimorph is used for controlling sugar beet pathogens, in particular selected from Cercospora beticola, Erysiphe betae, Ramularia betae and Uromyces betae. When used in sugar beet, especially preferred weight ratios of two of the active ingredients in the ternary mixture are 20:1 to 1:20, in particular 2:1 to 1:2. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment, the mixture of compound I, fluxapyroxad and fenpropimorph is used for the control of peanut pathogens, in particular selected from Mycosphaerella arachidis (= Cercospora) and Puccinia arachidis. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment, the mixture of compound I, fluxapyroxad and fenpropimorph is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another specific embodiment, the mixture of compound I, fluxapyroxad and fenpropimorph is used for the control of rice pathogens, in particular selected from Rhizoctonia solani and Pyricularia oryzae. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 are 1:1 to 2:1; component 1 to component 3 1:3 to 1:6 and component 2 to component 3 1:3 to 1:6, wherein

component 1 is in each case preferably a compound selected from I-1, I-2, I-3, I-4, I-5 and I-6.

According to still another specific embodiment, the mixture of compound I, fluxapyroxad and fenpropimorph is used for the control of pathogens in speciality crops, such as for example in turf, potato, tomato, cucurbits, grapes, apples, ornamentals and bananas. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea . An apple pathogen that may be controlled using said ternary mixture according to the present invention is in particular Podosphaera leucotricha and Venturia inaequalis . Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. Thereby, the weight ratios for the three components are especially: component 1 to component 2 1:1 to 2:1; component 1 to component 3 1:3 to 1:6 and component 2 to component 3 1:3 to 1:6, wherein component 1 is in each case preferably a compound selected from I-1, I-2, I-3, I-4, I-5 and I-6.

According to still another embodiment, the present invention relates to the ternary mixture of compound I, prothioconazole and fluxapyroxad, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of 1:1:1 to 2:2:1, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and fluxapyroxad for the control of cereal pathogens, wherein the components are used in the above mentioned weight ratios. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau). According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for controlling barley pathogens, selected from Pyrenophera teres, Rhychosporium secalis, Puccinia hordei and Blumeria graminis. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for controlling soy pathogens, selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3: 1 to 1:3, wherein component 1 is in each case preferably a compound selected from I-1, I-2, I-3, I-4, I-5 and I-6. It may be especially preferred if the three components are present in a weight ratio of 1:1:1 to 2:2:1, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for controlling corn pathogens, in particular selected from Cercospora zeae-maydis, Puccinia sorghi and

Helminthosporium maydis. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for controlling sugar beet pathogens, in particular selected from Cercospora beticola, Erysiphe betae, Ramularia betae and Uromyces betae. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for the control of peanut pathogens, in particular selected from Mycosphaerella arachidis (= Cercospora) and Puccinia arachidis. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for the control of rice pathogens, in particular selected from Rhizoctonia solani and Pyricularia oryzae. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and fluxapyroxad is used for the control of pathogens in speciality crops, such as for example in turf, potato, tomato, cucurbits, grapes, apples, ornamentals and bananas. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another embodiment, the present invention relates to the ternary mixture of compound I, prothioconazole and bixafen, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6.. It may be preferred if the components are present in a weight ratio of 1:1:1 to 2:2:1. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound

selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and bixafen for the control of cereal pathogens, wherein the components are used in the above mentioned weight ratios. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau). According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is suitable for controlling barley pathogens, selected from Pyrenophera teres, Rhychosporium secalis, Puccinia hordei and Blumeria graminis. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is suitable for controlling soy pathogens, selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3: 1 to 1:3, wherein component 1 is in each case preferably a compound selected from I-1, I-2, I-3, I-4, I-5 and I-6. It may be especially preferred if the three components are present in a weight ratio of 1:1:1 to 2:2:1. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is suitable for controlling corn pathogens, in particular selected from Cercospora zeae-maydis, Puccinia sorghi and Helminthosporium maydis. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is suitable for controlling sugar beet pathogens, in particular selected from Cercospora beticola, Erysiphe betae, Ramularia betae and Uromyces betae. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is used for the control of peanut pathogens, in particular selected from Mycosphaerella arachidis (= Cercospora) and Puccinia arachidis. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1: 1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is used for the control of rice pathogens, in particular selected from Rhizoctonia solani and Pyricularia oryzae. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and bixafen is used for the control of pathogens in speciality crops, such as for example in turf, potato, tomato, cucurbits, grapes, apples, ornamentals and bananas. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another embodiment, the present invention relates to the ternary mixture of compound I, prothioconazole and penflufen, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of 1:1:1 to 2:2:1. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment, the present invention relates to the use of the ternary mixture of compound I, prothioconazole and penflufen for the control of cereal pathogens, wherein the components are used in the above mentioned weight ratios. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau). According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6..

According to still another specific embodiment, the mixture of compound I, prothioconazole and penflufen is suitable for controlling barley pathogens, selected from Pyrenophera teres, Rhychosporium secalis, Puccinia hordei and Blumeria graminis, wherein component 1 is in each case preferably a compound selected from I-1, I-2, I-3, I-4, I-5 and I-6. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is suitable for controlling soy pathogens, selected from phakopsora pachyrizi, P. meibomiae and Microsphaera diffusa, wherein component 1 is in each case preferably a compound selected from I-1, I-2, I-3, I-4, I-5 and I-6. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially

preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is suitable for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is suitable for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is used for the control of peanut pathogens, in particular selected from Mycosphaerella arachidis (= Cercospora) and Puccinia arachidis, wherein component 1 is in each case preferably a compound selected from I-1, I-2, I-3, I-4, I-5 and I-6. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is used for the control of oil seed rape and canola pathogens, in particular selected from Sclerotinia sclerotiorum, Leptosphearia maculans and Alternaria alternate, wherein component 1 is in each case preferably a compound selected from I-1, I-2, I-3, I-4, I-5 and I-6. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is also suitable for the control of rice pathogens, in particular selected from Rhizoctonia solani and Pyricularia oryzae, wherein component 1 is in each case preferably a compound selected from I-1, I-2, I-3, I-4, I-5 and I-6. When used in rice, especially preferred weight ratios of two of the active ingredients in the ternary mixture are 20:1 to 1:20, in particular 2:1 to 1:2, wherein component 1 is in each case preferably a compound selected from I-1, 1-2, I-3, I-4, I-5 and I-6. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, I-2, I-3, I-4, I-5 and I-6.

According to still another specific embodiment, the mixture of compound I, prothioconazole and penflufen is used for the control of pathogens in speciality crops, such as for example in turf, potato, tomato, cucurbits, grapes, apples, ornamentals and bananas. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and

Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 2:1 and component 2 to component 3 1:1 to 2:1, wherein component 1 is in each case preferably a compound selected from I-1, 1-2, I-3, I-4, I-5 and I-6.

According to still another embodiment, the present invention relates to the ternary mixture of compound I, prothioconazole and pyraclostrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of1:1:1 to 1:1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment, the present invention relates to the use of the ternary mixture of compound I, prothioconazole and pyraclostrobin for the control of cereal pathogens, wherein the components are used in the above mentioned weight ratios, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau), wherein component 1 is in each case preferably a compound selected from I-1, I-2, I-3, I-4, I-5 and I-6. According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for controlling barley pathogens, selected from Pyrenophera teres, Rhychosporium secalis, Puccinia hordei and Blumeria graminis, wherein component 1 is in each case preferably a compound selected from I-1, I-2, I-3, I-4, I-5 and I-6. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for controlling soy pathogens, selected from phakopsora pachyrizi, P. meibomiae and Microsphaera diffusa. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3: 1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2: 1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component

1 is in each case preferably a compound selected from I-1, I-2, I-3, I-4, I-5 and I-6.

According to still another specific embodiment, the mixture of compound I, prothioconazole and pyraclostrobin is used for the control of peanut pathogens, in particular selected from Mycosphaerella arachidis (= Cercospora) and Puccinia arachidis, wherein component 1 is in each case preferably a compound selected from I-1, I-2, I-3, I-4, I-5 and I-6. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for the control of rice pathogens, in particular selected from Rhizoctonia solani and Pyricularia oryzae, wherein component 1 is in each case preferably a compound selected from I-1, I-2, I-3, I-4, I-5 and I-6. When used in rice, especially preferred weight ratios of two of the active ingredients in the ternary mixture are 20:1 to 1:20, in particular 2: 1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and pyraclostrobin is used for the control of pathogens in speciality crops, such as for example in turf, potato, tomato, cucurbits, grapes, apples, ornamentals and bananas, wherein component 1 is in each case preferably a compound selected from I-1, I-2, I-3, I-4, I-5 and I-6. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another embodiment, the present invention relates to the ternary mixture of compound I, prothioconazole and dimoxystrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of 1:1:1 to 1:1:2. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and dimoxystrobin for the control of cereal pathogens, wherein the components are used in the above mentioned weight ratios, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau), wherein component 1 is in each case preferably a compound selected from I-1, I-2, I-3, I-4, I-5 and I-6. According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is suitable for controlling barley pathogens, selected from Pyrenophera teres, Rhychosporium secalis, Puccinia hordei and Blumeria graminis, wherein component 1 is in each case preferably a compound selected from I-1, I-2, I-3, I-4, I-5 and I-6. According to still another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for controlling soy pathogens, selected from phakopsora pachyrizi, P. meibomiae and Microsphaera diffusa, wherein component 1 is in each case preferably a compound selected from I-1, I-2, I-3, I-4, I-5 and I-6. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1: 1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for the control of peanut pathogens, in particular selected from Mycosphaerella arachidis (= Cercospora) and Puccinia arachidis, wherein component 1 is in each case preferably a compound selected from I-1, I-2, I-3, I-4, I-5 and I-6. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for the control of oil seed rape and canola pathogens, in particular selected from Sclerotinia sclerotiorum, Leptosphearia maculans and Alternaria alternate, wherein component 1 is in each case preferably a compound selected from I-1, I-2, I-3, I-4, I-5 and I-6. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin

is used for the control of rice pathogens, in particular selected from Rhizoctonia solani and Pyricularia oryzae, wherein component 1 is in each case preferably a compound selected from I-1, I-2, I-3, I-4, I-5 and I-6. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and dimoxystrobin is used for the control of pathogens in speciality crops, such as for example in turf, potato, tomato, cucurbits, grapes, apples, ornamentals and bananas, wherein component 1 is in each case preferably a compound selected from I-1, I-2, I-3, I-4, I-5 and I-6. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 to 1:20, in particular 2:1 to 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another embodiment, the present invention relates to the ternary mixture of compound I, prothioconazole and picoxystrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and picoxystrobin for the control of cereal pathogens, wherein the components are used in the above mentioned weight ratios, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau), wherein component 1 is in each case preferably a compound selected from I-1, I-2, I-3, I-4, I-5 and I-6. According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for controlling barley pathogens, selected from Pyrenophera teres, Rhychosporium secalis, Puccinia hordei and Blumeria graminis, wherein component 1 is in each case preferably a compound selected from I-1, I-2, I-3, I-4, I-5 and I-6. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for controlling soy pathogens, selected from phakopsora pachyrizi, P. meibomiae and Microsphaera diffusa, wherein component 1 is in each case preferably a compound selected from I-1, I-2, I-3, I-4, I-5 and I-6. In soy, said mixture may also be effectively used for the control of the so-called FDC (Foliar Disease Complex), e.g. against Septoria

glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1: 1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for the control of peanut pathogens, in particular selected from Mycosphaerella arachidis (= Cercospora) and Puccinia arachidis, wherein component 1 is in each case preferably a compound selected from I-1, I-2, I-3, I-4, I-5 and I-6. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for the control of oil seed rape and canola pathogens, in particular selected from Sclerotinia sclerotiorum, Leptosphearia maculans and Alternaria alternate, wherein component 1 is in each case preferably a compound selected from I-1, I-2, I-3, I-4, I-5 and I-6. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for the control of rice pathogens, in particular selected from Rhizoctonia solani and Pyricularia oryzae, wherein component 1 is in each case preferably a compound selected from I-1, I-2, I-3, I-4, I-5 and I-6. When used in rice, especially preferred weight ratios of two of the active ingredients in the ternary mixture are 20:1 to 1:20, in particular 2: 1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and picoxystrobin is used for the control of pathogens in speciality crops, such as for example in turf, potato, tomato, cucurbits, grapes, apples, ornamentals and bananas, wherein component 1 is in each case preferably a compound selected from I-1, I-2, I-3, I-4, I-5 and I-6. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha

and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another embodiment, the present invention relates to the ternary mixture of compound I, prothioconazole and fluoxastrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and fluoxastrobin for the control of cereal pathogens, wherein the components are used in the above mentioned weight ratios, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis (Mehltau), wherein component 1 is in each case preferably a compound selected from I-1, I-2, I-3, I-4, I-5 and I-6. According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for controlling barley pathogens, selected from Pyrenophera teres, Rhychosporium secalis, Puccinia hordei and Blumeria graminis, wherein component 1 is in each case preferably a compound selected from I-1, I-2, I-3, I-4, I-5 and I-6. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for controlling soy pathogens, selected from phakopsora pachyrizi, P. meibomiae and Microsphaera diffusa, wherein component 1 is in each case preferably a compound selected from I-1, I-2, I-3, I-4, I-5 and I-6. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1: 1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected

from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for the control of peanut pathogens, in particular selected from Mycosphaerella arachidis (= Cercospora) and Puccinia arachidis, wherein component 1 is in each case preferably a compound selected from I-1, I-2, I-3, I-4, I-5 and I-6. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for the control of oil seed rape and canola pathogens, in particular selected from Sclerotinia sclerotiorum, Leptosphearia maculans and Alternaria alternate, wherein component 1 is in each case preferably a compound selected from I-1, I-2, I-3, I-4, I-5 and I-6. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and fluoxastrobin is used for the control of rice pathogens, in particular selected from Rhizoctonia solani and Pyricularia oryzae. When used in rice, especially preferred weight ratios of two of the active ingredients in the ternary mixture are 20:1 to 1:20, in particular 2:1 to 1:2. In particular, the weight ratios for the three components are component 1 to component 2 1:1 to 2: 1; component 1 to component 3 1:1 to 1:2 and component 2 to component 3 1:1 to 1:2.

According to still another specific embodiment, the mixture of compound I, prothioconazole and fluoxastrobin is used for the control of pathogens in speciality crops, such as for example in turf, potato, tomato, cucurbits, grapes, apples, ornamentals and bananas, wherein component 1 is in each case preferably a compound selected from I-1, I-2, I-3, I-4, I-5 and I-6. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another embodiment, the present invention relates to the ternary mixture of compound I, prothioconazole and orysastrobin, wherein two of the components are present in a weight ratio of 20:1 to 1:20, more specifically 5:1 to 1:5, in particular 2:1 to 1:2, wherein component 1 is in each case preferably a compound selected from I-1, I-2, I-3, I-4, I-5 and I-6. It may be preferred if the components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. Surprisingly, this mixture shows synergistical effects and the components are in particular used in synergistically effective amounts

According to one specific embodiment the present invention relates to the use of the ternary mixture of compound I, prothioconazole and orysastrobin for the control of cereal pathogens, wherein the components are used in the above mentioned weight ratios, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. According to another specific embodiment, said ternary mixture is used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis

(Mehltau). According to another specific embodiment, the wheat pathogens are selected from Fusarium culmorum, Fusarium graminearum and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. According to still another specific embodiment, the mixture of compound I, prothioconazole and orysastrobin is used for controlling barley pathogens, selected from Pyrenophera teres, Rhychosporium secalis, Puccinia hordei and Blumeria graminis. According to another specific embodiment, the barley pathogens are selected from Ramularia collo-cygni and Pseudocercosporella herpotrichoides. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and orysastrobin is used for controlling soy pathogens, selected from phakopsora pachyrizi, P. meibomiae and Microsphaera diffusa, wherein component 1 is in each case preferably a compound selected from I-1, I-2, I-3, I-4, I-5 and I-6. In soy, said mixture may also be effectively used for the control of the so-called FDC (Foliar Disease Complex), e.g. against Septoria glycines, Cercospora kikuchii, C. sojina, Corynespora cassiicola and/or Alternaria spp.. When used in soy, especially preferred weight ratios of two of the active ingredients in the ternary mixture are 20:1 to 1:20, in particular 3:1 to 1:3, wherein component 1 is in each case preferably a compound selected from I-1, I-2, I-3, I-4, I-5 and I-6. It may be especially preferred if the three components are present in a weight ratio of component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and orysastrobin is used for controlling corn pathogens, in particular selected from Cercospora zeae-maydis, Puccinia sorghi and Helminthosporium maydis, wherein component 1 is in each case preferably a compound selected from I-1, I-2, I-3, I-4, I-5 and I-6. When used in corn, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and orysastrobin is used for controlling sugar beet pathogens, in particular selected from Cercospora beticola, Erysiphe betae, Ramularia betae and Uromyces betae, wherein component 1 is in each case preferably a compound selected from I-1, I-2, I-3, I-4, I-5 and I-6. When used in sugar beet, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. According to still another specific embodiment, the mixture of compound I, prothioconazole and orysastrobin is used for the control of peanut pathogens, in particular selected from Mycosphaerella arachidis (= Cercospora) and Puccinia arachidis. When used in peanuts, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6. According to still another specific embodiment, the mixture of compound I, prothioconazole and orysastrobin is used for the control of oil seed rape and canola pathogens, in particular selected from Sclerotinia sclerotiorum, Leptosphearia maculans and Alternaria alternate. When used in oil seed rape or canola, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and orysastrobin is used for the control of rice pathogens, in particular selected from Rhizoctonia solani and Pyricularia oryzae, wherein component 1 is in each case preferably a compound selected from I-1, I-2, I-3, I-4, I-5 and I-6. When used in rice, especially preferred weight ratios of two of the active ingredients in the ternary mixture are 20:1 to 1:20, in particular 2:1 to 1:2, wherein component 1 is in each case preferably a compound selected from I-1, I-2, I-3, I-4, I-5 and I-6. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

According to still another specific embodiment, the mixture of compound I, prothioconazole and orysastrobin is used for the control of pathogens in speciality crops, such as for example in turf, potato, tomato, cucurbits, grapes, apples, ornamentals and bananas, wherein component 1 is in each case preferably a compound selected from I-1, I-2, I-3, I-4, I-5 and I-6. Turf pathogens that may be controlled using said ternary mixture according to the present invention are in particular selected from Sclerotinia homeocarpon and Rhizoctonia solani. When used in turf, especially preferred weight ratios of two of the active ingredients of the ternary mixture are 20:1 bis 1:20, in particular 2:1 bis 1:2, wherein component 1 is in each case preferably a compound selected from I-1, I-2, I-3, I-4, I-5 and I-6. Potato and tomato pathogens that may be controlled according to the present invention are in particular selected from Alternaria solani, A. alternata and Rhizoctonia solani. A cucurbit pathogen that may be controlled using said ternary mixture according to the present invention is in particular Sphaerotheca fuliginea. A grape pathogen that may be controlled using said ternary mixture according to the present invention is in particular Uncinula necator and Botrytis cinerea. An apple pathogen that may be controlled using said ternary mixture according to the present invention is in particular Podosphaera leucotricha and Venturia inaequalis. Ornamental pathogens that may be controlled using said ternary mixture according to the present invention are in particular selected from Sphaerotheca fuliginea, Diplocarpon spp., Alternaria spp. and Sclerotinia spp. Banana pathogens that may be controlled using said ternary mixture according to the present invention are in particular selected from Mycosphaerella fijiensis and Mycosphaerella musicola. In particular, the weight ratios for the three components are component 1 to component 2 1:1 to 2:1; component 1 to component 3 1:1 to 1:2 and component 2 to component 3 1:1 to 1:2, wherein component 1 is in each case preferably a compound selected from I-1, I-2, I-3, I-4, I-5 and I-6.

Synthesis examples:

The compound of the formula I are synthesized as described in the documents cited above. With appropriate modification of the starting materials, the procedures given in the synthesis examples below were used to obtain further compounds of the formula I or the precursors thereof. Melting points were obtained on a Mel-Temp II apparatus and are uncorrected. HPLC/MS: retention time in min. (HPLC-MS)/m/z (High Performance Liquid Chromatography Mass Spectrometry), HPLC coloumn: RP-18 coloumn (Chromolith Speed ROD from Merck KgaA, Germany), Mobile Phase: acetonitrile + 0.1% trifluoro actetic acid (TFA)/water + 0.1% TFA in a gradient of from 5:95 to 95:5 in 5 minutes; at 40°C. MS: Quadrupol-electrosprayionization, 80 V (positive mode)

Synthesis example 1: Synthesis of 5-benzylsulfanyl-1-[[rel-(2S,3R)-(3-(2-chlorophenyl)-2-(2,4-difluorophenyl)oxiran-2-yl]methyl]-1,2,4-triazole

To a solution of 2,50 g 2-[[ rel-(2S,3R)-(3-(2-chlorophenyl)-2-(2,4-difluorophenyl)oxiran-2-yl]methyl]-4H-1,2,4-triazole-3-thione in 50 mL DMF 1,37 g potassium carbonate were added. After 5 minutes 1,69 g benzylbromide were added dropwise and the reaction mixture was stirred at room temperature until the conversion of the educts was completed. After that, the mixture was poured onto ice water and extracted with MTBE. The organic layer was then washed 3 times with water and the combined organic layers were then extracted with MTBE. The combined organic layers were dried over sodium sulfate, the solvent was evaporated and the residue was pourified by means of column chromatography. 2,28 g of the desired product were obtained (70%). HPLC-MS: 4.20min, mass 469, (trans-diastereomer).
Further compounds:

A: 4-F-phenyl, B: 2-Cl-phenyl, $CR^1R^2R^3$=benzyl, melting point: 76-78 °C (trans-diastereomer)
A: 4-F-phenyl, B: 2-Cl-phenyl, $CR^1R^2R^3$=allyl, melting point: 83°C (trans-diastereomer)
A: 2,4-diF-phenyl, B: 2-Cl-phenyl, $CR^1R^2R^3$=allyl, melting point: 77°C, HPLC-MS: 3.98min, Masse 419 (trans-diastereomer)

Synthesis example 2: Synthesis of 1-[[rel(2R, 3S)-3-(2-chlorophenyl)-2-(2,4-difluorophenyl)oxiran-2-yl]methyl]-5-n-propylsulfanyl-1,2,4-triazole

To a solution of 2,50 g 2-[[ rel(2R, 3S)-3-(2-chlorophenyl)-2-(2,4-difluorophenyl)oxiran-2-yl]methyl]-4H-1,2,4-triazole-3-thione in 25 mL DMF 1,37 g potassium carbonate were added. After 5 minutes 1,68 g n-propyliodide were added dropwise and the reaction mixture was stirred at room temperature until the conversion of the educts was completed. After that, the mixture was poured onto ice water and extracted with MTBE. The organic layer was then washed 3 times with water and the combined organic layers were then extracted with MTBE. The combined organic layers were dried over sodium sulfate, the solvent was evaporated and the residue was pourified by means of column chromatography. 1,73 g of the desired product were obtained (59%). HPLC-MS: 4.11 min, mass 421, "trans"-diastereomer

Further compounds:

A: 4-F-phenyl, B: 2-Cl-phenyl, $CR^1R^2R^3$=$CH_2CH_2CH(CH_3)_2$, HPLC-MS: 4.44min, mass 432 (trans-diastereomer)
A: 4-F-phenyl, B: 2-Cl-phenyl, $CR^1R^2R^3$=$CH_2CH_2CH_2CH_2CH_3$, HPLC-MS: 4.57min, mass 432 (trans-diastereomer)
A: 2,4-diF-phenyl, B: 2-Cl-phenyl, $CR^1R^2R^3$=$CH_2CH(CH_3)CH_2CH_3$, HPLC-MS: 4.46min, mass 449 (trans-diastereomer)
A: 4-F-phenyl, B: 2-Cl-phenyl, $CR^1R^2R^3$=$CH_2CH_2CH_3$, melting point: 86 °C (trans-diastereomer)
A: 4-F-phenyl, B: 2-Cl-phenyl, $CR^1R^2R^3$=$CH_2CH(CH_3)CH_2CH_3$, HPLC-MS: 4.43min, mass 432 (trans-diastereomer)
A: 2,4-diF-phenyl, B: 2-Cl-phenyl, $CR^1R^2R^3$=$CH_2CH_2CH(CH_3)_2$, HPLC-MS: 4.46min, mass 449 (trans-diastereomer)
A: 2,4-diF-phenyl, B: 2-Cl-phenyl, $CR^1R^2R^3$=$CH_2CH_2CH_2CH_2CH_3$, HPLC-MS: 4.50min, mass 449 (trans-diastereomer)
A: 4-F-phenyl, B: 2-Cl-phenyl, $CR^1R^2R^3$=$CH_2C(CH_3)_3$, HPLC-MS: 4.40min, mass 432 (trans-diastereomer)
A: 2,4-diF-phenyl, B: 2-Cl-phenyl, $CR^1R^2R^3$=$CH(CH_3)_2$, melting point 108-109°C (trans-diastereomer)
A: 4-F-phenyl, B: 2-Cl-phenyl, $CR^1R^2R^3$=$CH(CH_3)_2$, HPLC-MS: 4.13min, mass 404 (trans-diastereomer)

Synthesis example 3: Synthesis of 1-[[rel(2S, 3R)-3-(2-chlorophenyl)-2-(2,4-difluorophenyl)oxiran-2-yl]methyl]-5-n-butylsulfanyl-1,2,4-triazole

To a solution of 2,50 g 2-[[ rel(2S, 3R)-3-(2-chlorophenyl)-2-(2,4-difluorophenyl)oxiran-2-yl]methyl]-4H-1,2,4-triazole-3-thione in 25 mL DMF 1,37 g potassium carbonate were added. After 5 minutes 1,82 g n-butyliodid was added dropwise and the reaction mixture was stirred at room temperature until the conversion of the educts was completed. After that, the mixture was poured onto ice water and extracted with MTBE. The organic layer was then washed 3 times with water and the combined organic layers were then extracted with MTBE. The combined organic layers were dried over sodium sulfate, the solvent was evaporated and the residue was pourified by means of column chromatography. 2,22 g of the desired product were obtained (74%). HPLC-MS: 4.31 min, mass 435, "trans"-diastereomer
Further compounds:

A: 4-F-phenyl, B: 2-Cl-phenyl, $CR^1R^2R^3$=$CH(CH_3)CH_2CH_3$, HPLC-MS: 4.23min, mass 418 (trans-diastereomer)
A: 4-F-phenyl, B: 2-Cl-phenyl, $CR^1R^2R^3$=$CH_2CH_2CH_2CH_3$, melting point 59°C (trans-diastereomer)
A: 4-F-phenyl, B: 2-Cl-phenyl, $CR^1R^2R^3$=$CH_2CH(CH_3)_2$, HPLC-MS: 4.26min, mass 418 (trans-diastereomer)
A: 2,4-diF-phenyl, B: 2-Cl-phenyl, $CR^1R^2R^3$=$CH(CH_3)CH_2CH_3$, HPLC-MS: 4.26min, mass 435 (trans-diastereomer)
A: 2,4-diF-phenyl, B: 2-Cl-phenyl, $CR^1R^2R^3$=$CH_2CH(CH_3)_2$, HPLC-MS: 4.28min, mass 435 (trans-diastereomer)
A: 4-F-phenyl, B: 2-Cl-phenyl, $CR^1R^2R^3$=$C(CH_3)_3$, HPLC-MS: 4.18min, mass 418 (trans-diastereomer)

Biological tests:

The determined values (measured parameters) for the percentage of infection on the leaves were compared to the growth of the active compound-free control variant and the fungus- and active compound-free blank value to determine the relative growth in % of the pathogens in the individual active compounds and were thus converted into efficacy % of the untreated control. An efficacy of 0 means the same degree of infection as in the untreated control; an efficacy of 100 means 0% infection. The expected efficacies for active compound combinations were determined using the Colby formula (Colby, S. R. "Calculating synergistic and antagonistic responses of herbicide combinations", Weeds, 15, pp. 20 - 22, 1967) and compared to the observed efficacies.

The efficacy (E) is calculated as follows using Abbot's formula:

$$E = (1 - \alpha/\beta) \cdot 100$$

α corresponds to the fungicidal infection of the treated plants in % and
β corresponds to the fungicidal infection of the untreated (control) plants in %

At an efficacy of 0 the degree of infection of the treated plants corresponds to that of the untreated control plants; at an efficacy of 100 the treated plants are not infected. The expected efficacies for active compound combinations were determined using the Colby formula (Colby, S. R. "Calculating synergistic and antagonistic responses of herbicide combinations", Weeds, 15, pp. 20 - 22, 1967) and compared to the observed efficacies.
Colby's formula:

$$E = x + y - x \cdot y/100$$

E expected efficacy, expressed in % of the untreated control, when using the mixture of the active compounds A and B at the concentrations a and b
x efficacy, expressed in % of the untreated control, when using the active compound A at the concentration a
y efficacy, expressed in % of the untreated control, when using the active compound B at the concentration b

## Claims

**1.** A mixture comprising,

1) a component 1, selected from triazolylmethyloxiranes of formula I

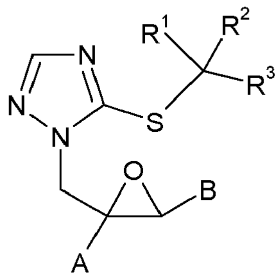

I

in which the variables have the following meanings:

A, B independently of one another phenyl, which is unsubstituted or contains one, two, three or four independently selected substituents L, where L is as defined below:
L is halogen, cyano, nitro, cyanato (OCN), $C_1$-$C_4$-alkyl, $C_1$-$C_4$-haloalkyl, phenyl-$C_1$-$C_4$-alkyloxy, $C_2$-$C_4$-alkenyl, $C_2$-$C_4$-haloalkenyl, $C_2$-$C_4$-alkynyl, $C_2$-$C_4$-haloalkynyl, $C_1$-$C_4$-alkoxy, $C_1$-$C_4$-haloalkoxy, $C_1$-$C_4$-alkylcarbonyloxy, $C_1$-$C_4$-alkylsulfonyloxy, $C_2$-$C_4$-alkenyloxy, $C_2$-$C_4$-haloalkenyloxy, $C_3$-$C_6$-cycloalkyl, $C_3$-$C_6$-halocycloalkyl, $C_3$-$C_6$-cycloalkenyl, $C_3$-$C_6$-halocycloalkenyl, $S(=O)_nA^1$, $C(=O)A^2$, $C(=S)A^2$, $NA^3A^4$, phenyl or phenyloxy, where n, $A^1$, $A^2$, $A^3$, $A^4$ are as defined below:
n is 0, 1 or 2;
$A^1$ is hydrogen, hydroxyl, $C_1$-$C_4$-alkyl, $C_1$-$C_4$-haloalkyl, amino, $C_1$-$C_4$-alkylamino or di-$C_1$-$C_4$-alkylamino,
$A^2$ is one of the groups mentioned for $A^1$ or $C_2$-$C_4$-alkenyl, $C_2$-$C_4$-haloalkenyl, $C_1$-$C_4$-alkoxy, $C_1$-$C_4$-haloalkoxy, $C_3$-$C_6$-cycloalkyl or $C_3$-$C_6$-halocycloalkyl;
$A^3$, $A^4$ independently of one another are hydrogen, $C_1$-$C_4$-alkyl, $C_1$-$C_4$-haloalkyl, $C_2$-$C_4$-alkenyl, $C_2$-$C_4$-haloalkenyl, $C_3$-$C_6$-cycloalkyl or $C_3$-$C_6$-halocycloalkyl;
where the aliphatic and/or alicyclic and/or aromatic groups of the radical definitions of L for their part may carry one, two, three or four identical or different groups $R^L$:
$R^L$ s halogen, cyano, nitro, $C_1$-$C_4$-alkyl, $C_1$-$C_4$-haloalkyl, $C_1$-$C_4$-alkoxy, $C_1$-$C_4$-haloalkoxy, $C_3$-$C_6$-cy-

cloalkyl, $C_3$-$C_6$-halocycloalkyl, $C_1$-$C_4$-alkylcarbonyl, $C_1$-$C_4$-alkylcarbonyloxy, $C_1$-$C_4$-alkoxycarbonyl, amino, $C_1$-$C_4$-alkylamino, di-$C_1$-$C_4$-alkylamino;

$R^1$, $R^2$ independently of one another are hydrogen or $C_1$-$C_4$-alkyl;

$R^3$ is phenyl which is unsubstituted or contains one, two, three, four or five independently selected substituents $L^{R3}$; or vinyl which is unsubstituted or contains one, two or three independently selected substituents $L^{R3}$; where $L^{R3}$ is as defined below;

$L^{R3}$ is halogen, cyano, nitro, cyanato (OCN), $C_1$-$C_4$-alkyl, $C_1$-$C_4$-haloalkyl, $C_2$-$C_4$-alkenyl, $C_2$-$C_4$-haloalkenyl, $C_1$-$C_4$-alkoxy, $C_1$-$C_4$-haloalkoxy, $C_3$-$C_6$-cycloalkyl, $C_3$-$C_6$-halocycloalkyl;

or the group $C(R^1R^2R^3)$ has the meaning of $R^4$, wherein

$R^4$ is $C_{3-5}$-alkyl;

wherein the compound I may be fully or partially present in its tautomeric form; and/or agriculturally acceptable salts thereof, and

2) a component 2, selected from the group consisting of the compounds II of the groups A) to O) below:

A) Respiration inhibitors

- Inhibitors of complex III at $Q_o$ site (e.g. strobilurins): azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethylphenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom;
- inhibitors of complex II (e. g. carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide and N-(2-(1,3,3-trimethyl-butyl)-phenyl)-1,3-dimethyl-5-fluoro-1H-pyrazole-4-carboxamide;
- other respiration inhibitors (e.g. complex I, uncouplers): diflumetorim; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;

B) Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizol; pyrimidines, pyridines and piperazines: fenarimol, nuarimol, pyrifenox, triforine;
- Delta14-reductase inhibitors: aldimorph, dodemorph, dodemorphacetate, fenpropimorph, tridemorph, fenpropidin, piperalin, spiroxamine;
- Inhibitors of 3-keto reductase: fenhexamid;

C) Nucleic acid synthesis inhibitors

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate;

D) Inhibitors of cell division and cytoskeleton

- tubulin inhibitors, such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone, pyriofenone;

E) Inhibitors of amino acid and protein synthesis

- methionine synthesis inhibitors (anilino-pyrimidines): cyprodinil, mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid

H) Inhibitors with Multi Site Action

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds (e.g. phthalimides, sulfamides, chloronitriles): anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon;

I) Cell wall synthesis inhibitors

- inhibitors of glucan synthesis: validamycin, polyoxin B; melanin synthesis inhibitors: pyroquilon, tricyclazole, carpropamid, dicyclomet, fenoxanil;

J) Plant defence inducers

- acibenzolar-S-methyl, probenazole, isotianil, tiadinil, prohexadione-calcium; phosphonates: fosetyl, fosetyl-aluminum, phosphorous acid and its salts;

K) Unknown mode of action

- bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxin-copper, proquinazid, tebufloquin, tecloftalam, triazoxide, 2-butoxy-6-iodo-3-propylchromen-4-one, N-(cyclopropylmethoxyimino-(6-difluoromethoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanylpropoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydronaphthalen-1-yl-amide, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone, methoxyacetic acid 6-tert-butyl-8-fluoro-2,3-dimethyl-quinolin-4-yl ester, *N*-Methyl-2-{1-[(5-methyl-3-trifluoromethyl-1H-pyrazol-1-yl)-acetyl]-piperidin-4-yl}-N-[(1 R)-1,2,3,4-tetrahydronaphthalen-1-yl]-4-thiazolecarboxamide, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide;

L) Antifungal biocontrol agents, plant bioactivators: *Ampelomyces quisqualis* (e.g. AQ 10® from Intrachem Bio GmbH & Co. KG, Germany), *Aspergillus flavus* (e.g. AFLAGUARD® from Syngenta, CH), *Aureobasidium pullulans* (e.g. BOTECTOR® from bio-ferm GmbH, Germany), *Bacillus pumilus* (e.g. NRRL Accession No. B-30087 in SONATA® and BALLAD® Plus from AgraQuest Inc., USA), *Bacillus subtilis* (e.g. isolate NRRL-Nr. B-21661 in RHAPSODY®, SERENADE® MAX and SERENADE® ASO from AgraQuest Inc., USA), *Bacillus subtilis* var. *amyloliquefaciens* FZB24 (e.g. TAEGRO® from Novozyme Biologicals, Inc., USA), *Candida oleophila* I-82 (e.g. ASPIRE® from Ecogen Inc., USA), *Candida saitoana* (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), *Clonostachys rosea f. catenulata,* also named *Gliocladium catenulatum* (e.g. isolate J1446: PRESTOP® from Verdera, Finland), *Coniothyrium minitans* (e.g. CONTANS® from Prophyta, Germany), *Cryphonectria parasitica* (e.g. *Endothia parasitica* from CNICM, France), *Cryptococcus albidus* (e.g. YIELD PLUS® from Anchor Bio-Technologies, South Africa), *Fusarium oxysporum* (e.g. BIOFOX® from S.I.A.P.A., Italy, FUSACLEAN® from Natural Plant Protection, France), *Metschnikowia fructicola* (e.g. SHEMER® from Agrogreen, Israel), *Microdochium dimerum* (e.g. ANTIBOT® from Agrauxine, France), *Phlebiopsis gigantea* (e.g. ROTSOP® from Verdera, Finland), *Pseudozyma flocculosa* (e.g. SPORODEX® from Plant Products Co. Ltd., Canada), *Pythium oligandrum* DV74 (e.g. POLYVERSUM® from Remeslo SSRO, Biopreparaty, Czech Rep.), *Reynoutria sachlinensis* (e.g. REGALIA® from Marrone BioInnovations, USA), *Talaromyces flavus* V117b (e.g. PROTUS® from Prophyta, Germany), *Trichoderma asperellum* SKT-1 (e.g. ECO-HOPE® from Kumiai Chemical Industry Co., Ltd., Japan), *T. atroviride* LC52 (e.g. SENTINEL® from Agrimm Technologies Ltd, NZ), *T. harzianum* T-22 (e.g. PLANTSHIELD® der Firma BioWorks Inc., USA), *T. harzianum* TH 35 (e.g. ROOT PRO® from Mycontrol Ltd., Israel), *T. harzianum* T-39 (e.g. TRICHODEX® and TRICHODERMA 2000® from Mycontrol Ltd., Israel and Makhteshim Ltd., Israel), *T. harzianum* and *T. viride* (e.g. TRICHOPEL from Agrimm Technologies Ltd, NZ), *T. harzianum* ICC012 and *T. viride* ICC080 (e.g. REMEDIER® WP from Isagro Ricerca, Italy), *T. polysporum* and T. *harzianum* (e.g. BINAB® from BINAB Bio-Innovation AB, Sweden), *T. stromaticum* (e.g. TRICOVAB® from C.E.P.L.A.C., Brazil), *T. virens* GL-21 (e.g. SOILGARD® from Certis LLC, USA), *T. viride* (e.g. TRIECO® from Ecosense Labs. (India) Pvt. Ltd., Indien, BIO-CURE® F from T. Stanes & Co. Ltd., Indien), *T. viride* TV1 (e.g. T. viride TV1 from Agribiotec srl, Italy), *Ulocladium oudemansii* HRU3 (e.g. BOTRY-ZEN® from Botry-Zen Ltd, NZ);

M) Growth regulators

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N) Herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;

- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumicloracpentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

O) Insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zetacypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists:

halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, sulfur, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon;
in a weight ratio of from 1:100 to 100:1.

2. The mixture of claim 1, wherein $R^1$ and $R^2$ are hydrogen and $R^3$ is vinyl or unsubstituted phenyl.

3. The mixture of claim 1, wherein $CR^1R^2R^3$ is $R^4$, wherein $R^4$ is $C_3$- or $C_5$-alkyl.

4. The mixture of claim 1, wherein $CR^1R^2R^3$ is $R^4$, wherein $R^4$ is $CH_2CH_2CH_2CH_2$, $CH_2CH(CH_3)_2$, $CH(CH_3)C_2H_5$ or $C(CH_3)_3$.

5. The mixture of any one of claims 1 to 4, wherein A is 2,4-difluorophenyl or 4-fluorophenyl and B is 2-chlorophenyl.

6. The mixture of any one of claims 1 to 5, further comprising a component 3 selected from the compounds of groups A to O as described in claim 1, with the proviso that component 2 and component 3 are not identical.

7. The mixture of any one of claims 1 to 6, wherein component 2 is selected from pyraclostrobin, fluxapyroxad, fenpropimorph, prothioconazole and chlorothalonil.

8. The mixture of claim 6, wherein component 2 is a) fluxapyroxad or b) prothioconazole and component 3 is, if component 2 is fluxapyroxad, selected from a) pyraclostrobin and fenpropimorph; and, if component 2 is prothioconazole, selected from b) fluxapyroxad, bixafen, pyraclostrobin, dimoxystrobin, picoxystrobin, fluoxastrobin, fluopyram and penflufen.

9. The mixture according to any one of claims 1 to 8 comprising component 1 to component 2 in a weight ratio of from 20:1 to 1:20.

10. The mixture according to claim 6 or 8, comprising component 2 to component 3 in a weight ratio of from 20:1 to 1:20.

11. The mixture according to any one of claims 1 to 10, wherein the components are present in synergistically effective amounts.

12. The use of a mixture according to any one of claims 1 to 11 for controlling phytopathogenic fungi.

13. An agrochemical composition comprising a solvent or a solid carrier and a mixture according to any one of claims 1 to 11.

14. Seed comprising a mixture according to any one of claims 1 to 11.

15. A method for controlling phytopathogenic fungi wherein the fungi or the materials, plants, the soil or seed to be

protected from fungal attack are treated with an effective amount of a fungicidal mixture according to any of claims 1 to 11.

Europäisches Patentamt
European Patent Office
Office européen des brevets

# EUROPEAN SEARCH REPORT

Application Number
EP 11 19 3391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2011/069916 A1 (BASF SE [DE]; DIETZ JOCHEN [DE]; GROTE THOMAS [DE]; HADEN EGON [DE]; M) 16 June 2011 (2011-06-16)<br>* page 32; tables 1a-137a *<br>* page 36; table A *<br>* especially B;<br>page 67; table B *<br>* page 67, lines 21-22 *<br>* page 63, lines 25,42 *<br>* page 64, lines 1-10 *<br>* Tests;<br>pages 81-82 *<br>----- | 1,3,5-7, 9,10, 12-15 | INV.<br>A01N43/56<br>A01N43/653<br>A01N47/24<br>A01N43/84<br>A01N37/34 |
| X,P | WO 2011/069894 A1 (BASF SE [DE]; DIETZ JOCHEN [DE]; GROTE THOMAS [DE]; HADEN EGON [DE]; M) 16 June 2011 (2011-06-16)<br>* page 19 - page 23; compounds 1.1-a1 to 1.7a-4 *<br>* page 24 - page 37; tables 1a-137a *<br>* pages 37-40; table A *<br>* page 54, line 1 - page 59, line 4 *<br>* page 60, line 7 *<br>* page 63; table B *<br>* Tests;<br>page 76 - page 79 *<br>----- | 1,4-7,9, 10,12-15 | TECHNICAL FIELDS SEARCHED (IPC)<br>A01N |
| X,P | WO 2011/069912 A1 (BASF SE [DE]; DIETZ JOCHEN [DE]; GROTE THOMAS [DE]; HADEN EGON [DE]; M) 16 June 2011 (2011-06-16)<br>* pages 24-37; tables 1a-137a *<br>* page 37; table A *<br>* page 55, line 34 - page 60, line 36 *<br>* page 65; table B *<br>----- | 1,2,5-7, 9,10, 12-15 | |
| X | US 2010/273651 A1 (DIETZ JOCHEN [DE] ET AL) 28 October 2010 (2010-10-28)<br>* Formula I *<br>* pages 104-113; table D *<br>-----<br>-/-- | 1-15 | |

The present search report has been drawn up for all claims

1

| Place of search | Date of completion of the search | Examiner |
|---|---|---|
| Munich | 2 March 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 19 3391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/311581 A1 (DIETZ JOCHEN [DE] ET AL) 9 December 2010 (2010-12-09)<br>* Formula I *<br>* page 30, paragraph 0311 - page 38, paragraph 0391 *<br>----- | 1-15 | |
| X | WO 2009/077443 A2 (BASF SE [DE]; DIETZ JOCHEN [DE]; GROTE THOMAS [DE]; MUELLER BERND [DE]) 25 June 2009 (2009-06-25)<br>* Formula (I) *<br>* page 217, line 34 - page 224, line 28 *<br>----- | 1-15 | |
| X | WO 96/38440 A1 (BAYER AG [DE]; JAUTELAT MANFRED [DE]; TIEMANN RALF [DE]; DUTZMANN STEF) 5 December 1996 (1996-12-05)<br>* Formula (I) *<br>* page 31, line 4 - page 33, line 24 *<br>----- | 1-15 | |

TECHNICAL FIELDS SEARCHED (IPC)

The present search report has been drawn up for all claims

1

| Place of search | Date of completion of the search | Examiner |
|---|---|---|
| Munich | 2 March 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 11 19 3391

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2012

| Patent document cited in search report | Publication date | Patent family member(s) | Publication date |
|---|---|---|---|
| WO 2011069916 A1 | 16-06-2011 | NONE | |
| WO 2011069894 A1 | 16-06-2011 | NONE | |
| WO 2011069912 A1 | 16-06-2011 | UY 33092 A | 30-06-2011 |
| | | WO 2011069912 A1 | 16-06-2011 |
| US 2010273651 A1 | 28-10-2010 | AR 069836 A1 | 24-02-2010 |
| | | CN 101952279 A | 19-01-2011 |
| | | EP 2235005 A2 | 06-10-2010 |
| | | JP 2011506543 A | 03-03-2011 |
| | | PE 11792009 A1 | 03-09-2009 |
| | | TW 200930300 A | 16-07-2009 |
| | | US 2010273651 A1 | 28-10-2010 |
| | | UY 31562 A1 | 17-07-2009 |
| | | WO 2009077500 A2 | 25-06-2009 |
| US 2010311581 A1 | 09-12-2010 | AR 069833 A1 | 24-02-2010 |
| | | CN 101902914 A | 01-12-2010 |
| | | EP 2224812 A2 | 08-09-2010 |
| | | JP 2011507815 A | 10-03-2011 |
| | | PE 12162009 A1 | 13-09-2009 |
| | | TW 200932117 A | 01-08-2009 |
| | | US 2010311581 A1 | 09-12-2010 |
| | | UY 31560 A1 | 17-07-2009 |
| | | WO 2009077471 A2 | 25-06-2009 |
| WO 2009077443 A2 | 25-06-2009 | AR 069834 A1 | 24-02-2010 |
| | | AU 2008337565 A1 | 25-06-2009 |
| | | CA 2707615 A1 | 25-06-2009 |
| | | CN 101945580 A | 12-01-2011 |
| | | CR 11548 A | 13-08-2010 |
| | | EA 201000950 A1 | 28-02-2011 |
| | | EC SP10010344 A | 31-08-2010 |
| | | EP 2234488 A2 | 06-10-2010 |
| | | JP 2011506539 A | 03-03-2011 |
| | | KR 20100093127 A | 24-08-2010 |
| | | PE 13382009 A1 | 04-10-2009 |
| | | TW 200930299 A | 16-07-2009 |
| | | US 2010317515 A1 | 16-12-2010 |
| | | UY 31561 A1 | 17-07-2009 |
| | | WO 2009077443 A2 | 25-06-2009 |
| WO 9638440 A1 | 05-12-1996 | AU 5819496 A | 18-12-1996 |
| | | DE 19520097 A1 | 05-12-1996 |
| | | EP 0828734 A1 | 18-03-1998 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 11 19 3391

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2012

| Patent document cited in search report | Publication date | Patent family member(s) | Publication date |
|---|---|---|---|
| | | ID 17990 A | 19-02-1998 |
| | | JP H11506437 A | 08-06-1999 |
| | | WO 9638440 A1 | 05-12-1996 |
| | | ZA 9604472 A | 11-12-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 09178224 A
- EP 2010068848 W
- EP 09178291 A
- EP 2010068853 W
- EP 09178288 A
- EP 2010068790 W
- EP 141317 A
- EP 152031 A
- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 2006087343 A
- WO 2006129714 A
- WO 2009081851 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A


### Non-patent literature cited in the description


- *Can. J. Plant Sci.,* 1968, vol. 48 (6), 587-94
- *Pflanzenschutz-Nachrichten Bayer 57/2004,* 2004, vol. 2, 145-162
- The Pesticide Manual. British Crop Protection Council, 2006
- *Pest Managem. Sci.,* 2005, vol. 61, 246
- *PEST MANAGEM. SCI.,* 2005, vol. 61, 258
- *PEST MANAGEM. SCI.,* 2005, vol. 61, 277
- *PEST MANAGEM. SCI.,* 2005, vol. 61, 269
- *PEST MANAGEM. SCI.,* 2005, vol. 61, 286
- *PEST MANAGEM. SCI.,* 2008, vol. 64, 326
- *PEST MANAGEM. SCI.,* 2008, vol. 64, 332

- *Weed Sci.,* 2009, vol. 57, 108
- *Austral. J. Agricult. Res.,* 2007, vol. 58, 708
- *Science,* 2007, vol. 316, 1185
- **BROWNING.** Agglomeration. *Chemical Engineering,* 04 December 1967, 147-48
- Perry's Chemical Engineer's Handbook. McGraw-Hill, 1963, 8-57
- **KLINGMAN.** Weed Control as a Science. J. Wiley & Sons, 1961
- **HANCE et al.** Weed Control Handbook. Blackwell Scientific, 1989
- **MOLLET, H. ; GRUBEMANN, A.** Formulation technology. Wiley VCH Verlag, 2001
- **COLBY, S. R.** Calculating synergistic and antagonistic responses of herbicide combinations. *Weeds,* 1967, vol. 15, 20-22